(19) Europäisches Patentamt
European Patent Office
Office européen des brevets

(11) **EP 4 116 641 A1**

(12) **EUROPEAN PATENT APPLICATION**
published in accordance with Art. 153(4) EPC

(43) Date of publication:
**11.01.2023 Bulletin 2023/02**

(21) Application number: **21782099.2**

(22) Date of filing: **26.03.2021**

(51) International Patent Classification (IPC):
**F25B 21/00** (2006.01)

(52) Cooperative Patent Classification (CPC):
**F25B 21/00;** Y02B 30/00

(86) International application number:
**PCT/JP2021/012885**

(87) International publication number:
**WO 2021/200666 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2020 JP 2020060281**

(71) Applicant: **Daikin Industries, Ltd.
Osaka-shi, Osaka 530-8323 (JP)**

(72) Inventors:
• **KAWABATA, Nobuyo
Osaka-shi, Osaka 530-8323 (JP)**
• **YOSHIMOTO, Akio
Osaka-shi, Osaka 530-8323 (JP)**
• **MORIWAKI, Michio
Osaka-shi, Osaka 530-8323 (JP)**

(74) Representative: **Hoffmann Eitle
Patent- und Rechtsanwälte PartmbB
Arabellastraße 30
81925 München (DE)**

(54) **SOLID-STATE REFRIGERATION DEVICE**

(57) A heating medium circuit (C) includes: a first channel (40) in which solid refrigerators (M) are connected in series and through which a heating medium conveyed by a conveying mechanism (20) is supplied to a first heat exchange section (31, 33, 34); a second channel (50) in which the solid refrigerators (M) are connected in series and through which the heating medium conveyed by the conveying mechanism (20) is supplied to a second heat exchange section (32, 33, 34); and at least one bypass mechanism (B) connected to at least one of the first channel (40) or the second channel (50) and configured to switch between an action of making the heating medium flow through the magnetic refrigerator (M) and an action of making the heating medium bypass the magnetic refrigerator (M).

FIG.1

**Description**

TECHNICAL FIELD

The present disclosure relates to a solid-state refrigeration apparatus.

BACKGROUND ART

Patent Document 1 discloses a magnetic refrigeration apparatus having a plurality of magnetic refrigerators connected in series in a main flow path through which a heating medium is conveyed. A bypass channel that bypasses one of the magnetic refrigerators is connected to the main flow path. A valve is provided in the bypass channel. In the magnetic refrigeration apparatus, a conveying mechanism allows the heating medium to flow back and forth in the main flow path. When the valve closes the bypass channel, the heating medium sequentially flows through the plurality of magnetic refrigerators. When the valve opens the bypass channel, the heating medium flows through one of the magnetic refrigerators and bypasses the other magnetic refrigerator.

CITATION LIST

PATENT DOCUMENT

Patent Document 1: Japanese Unexamined Patent Publication No. 2012-255642

SUMMARY OF THE INVENTION

TECHNICAL PROBLEM

In the magnetic refrigeration apparatus of Patent Document 1, the heating medium accumulates in the bypass channel. If the heating medium accumulated in the bypass channel and the conveyed heating medium are mixed when the heating medium flows back and forth in the main flow path, the heating medium loses heat.
It is an object of the present disclosure to reduce heat loss of a heating medium due to mixing of the heating medium to be conveyed and the heating medium accumulated in a bypass channel in a solid-state refrigeration apparatus, in particular, a magnetic refrigeration apparatus.

SOLUTION TO THE PROBLEM

A first aspect is directed to a solid-state refrigeration apparatus, including: a plurality of solid refrigerators (M) each including a solid refrigerant substance (11) configured to have a caloric effect on an external energy and an induction section (12) configured to cause the solid refrigerant substance (11) to produce the caloric effect; a heating medium circuit (C) to which the plurality of solid refrigerators (M) are connected; and a conveying mechanism (20) configured to convey a heating medium in the heating medium circuit (C). The heating medium circuit (C) includes: a first channel (40) in which the solid refrigerators (M) are connected in series and through which the heating medium conveyed by the conveying mechanism (20) is supplied to a first heat exchange section (31, 33, 34); a second channel (50) in which the solid refrigerators (M) are connected in series and through which the heating medium conveyed by the conveying mechanism (20) is supplied to a second heat exchange section (32, 33, 34); and
at least one bypass mechanism (B) connected to at least one of the first channel (40) or the second channel (50) and configured to switch between an action of making the heating medium flow through the solid refrigerator (M) and an action of making the heating medium bypass the solid refrigerator (M).
In the first aspect, the bypass mechanism (B) switches between the channel where the heating medium flows through the solid refrigerator (M) and the channel where the heating medium bypasses the solid refrigerator (M). When the bypass mechanism (B) is provided, the heating medium accumulates in a bypass channel. In the first aspect, the first channel (40) through which the heating medium is supplied to the first heat exchange section (31, 33, 34) and the second channel (50) through which the heating medium is supplied to the second heat exchange section (32, 33, 34) are provided. Thus, for example, when the heating medium accumulates in the bypass channel of the first channel (40), the heating medium supplied to the second heat exchange section (32, 33, 34) is not mixed with the heating medium accumulated in the bypass channel of the first channel (40). Likewise, for example, when the heating medium is accumulated in the bypass channel of the second channel (50), the heating medium supplied to the first heat exchange section (31, 33, 34) is not mixed with the heating medium accumulated in the bypass channel of the second channel (50). This can reduce heat loss of the heating medium caused by mixing of the heating medium to be conveyed and the heating medium accumulated in the bypass channel.
A second aspect is an embodiment of the first aspect. In the second aspect, the bypass mechanism (B) is connected to both of the first channel (40) and the second channel (50) and correspond to each of all the solid refrigerators (M).
In the second aspect, the bypass mechanism (B) is provided for each of the solid refrigerators (M). Thus, each bypass mechanism (B) allows the heating medium to flow through the solid refrigerators (M) or bypass the solid refrigerators (M). This allows fine adjustment of the capacity of the solid-state refrigeration apparatus (1).
A third aspect is an embodiment of the first or second aspect. In the third aspect, the plurality of solid refrigerators is a plurality of magnetic refrigerators (M) each including a magnetic working substance (11) as the solid refrigerant substance and a magnetic field modulator (12) as the induction section configured to apply a magnetic field variation to the magnetic working substance (11).

In other words, the third aspect is directed to a magnetic refrigeration apparatus, including: a plurality of magnetic refrigerators (M) each including a magnetic working substance (11) and a magnetic field modulator (12) configured to apply a magnetic field variation to the magnetic working substance (11); a heating medium circuit (C) connecting the plurality of magnetic refrigerators (M); and a conveying mechanism (20) configured to convey a heating medium in the heating medium circuit (C). The heating medium circuit (C) includes:

a first channel (40) in which the magnetic refrigerators (M) are connected in series and through which the heating medium conveyed by the conveying mechanism (20) is supplied to a first heat exchange section (31, 33, 34); a second channel (50) in which the magnetic refrigerators (M) are connected in series and through which the heating medium conveyed by the conveying mechanism (20) is supplied to a second heat exchange section (32, 33, 34); and at least one bypass mechanism (B) connected to at least one of the first channel (40) or the second channel (50) and configured to switch between an action of making the heating medium flow through the magnetic refrigerator (M) and an action of making the heating medium bypass the magnetic refrigerator (M).

In the third aspect, the bypass mechanism (B) switches between the channel where the heating medium flows through the magnetic refrigerator (M) and the channel where the heating medium bypasses the magnetic refrigerator (M). When the bypass mechanism (B) is provided, the heating medium accumulates in a bypass channel. In the first aspect, the first channel (40) through which the heating medium is supplied to the first heat exchange section (31, 33, 34) and the second channel (50) through which the heating medium is supplied to the second heat exchange section (32, 33, 34) are provided. Thus, for example, when the heating medium accumulates in the bypass channel of the first channel (40), the heating medium supplied to the second heat exchange section (32, 33, 34) is not mixed with the heating medium accumulated in the bypass channel of the first channel (40). Likewise, for example, when the heating medium is accumulated in the bypass channel of the second channel (50), the heating medium supplied to the first heat exchange section (31, 33, 34) is not mixed with the heating medium accumulated in the bypass channel of the second channel (50). This can reduce heat loss of the heating medium caused by mixing of the heating medium to be conveyed and the heating medium accumulated in the bypass channel.

A fourth aspect of the present disclosure is an embodiment of the third aspect. In the fourth aspect, each of the magnetic refrigerators (M) is a cascaded magnetic refrigerator including different types of magnetic working substances (11) arranged from a low-temperature end to a high-temperature end of the magnetic refrigerator (M) in an ascending order of Curie temperature.

In the fourth aspect, each cascaded magnetic refrigerator (M) can heat the heating medium while the heating medium flows from the low-temperature end to the high-temperature end of the magnetic refrigerator (M). In this case, the magnetic working substances (11) of the magnetic refrigerator (M) can improve the magnetocaloric effect, increasing the capacity of heating the heating medium. Alternatively, each cascaded magnetic refrigerator (M) can cool the heating medium while the heating medium flows from the high-temperature end to the low-temperature end of the magnetic refrigerator (M). In this case, the magnetic working substances (11) of the magnetic refrigerator (M) can improve the magnetocaloric effect, increasing the capacity of cooling the heating medium.

A fifth aspect is an embodiment of the fourth aspect. In the fifth aspect, the magnetic refrigerators (M) are connected in series in the first channel (40) and the second channel (50), the magnetic refrigerators (M) being arranged in an ascending order of average values of the Curie temperatures of the magnetic refrigerators (M).

In the fifth aspect, the magnetic refrigerators (M) can heat the heating medium while the heating medium flows through the magnetic refrigerators (M) in an ascending order of the average value of the Curie temperatures of the magnetic refrigerators (M). In this case, the magnetic refrigerators (M) can improve the magnetocaloric effect, increasing the capacity of heating the heating medium. Alternatively, the magnetic refrigerators (M) can cool the heating medium while the heating medium flows through the magnetic refrigerators (M) in a descending order of the average value of the Curie temperatures of the magnetic refrigerators (M). In this case, the magnetic refrigerators (M) can improve the magnetocaloric effect, increasing the capacity of cooling the heating medium.

A sixth aspect is an embodiment of the third aspect. In the sixth aspect, each of the magnetic refrigerators (M) is a single-layer magnetic refrigerator having a single magnetic working substance (11), and the magnetic refrigerators (M) are connected in series in the first channel (40) and the second channel (50), the magnetic refrigerators (M) being arranged in an ascending order of Curie temperatures of the magnetic working substances (11) of the magnetic refrigerators (M).

In the sixth aspect, the single-layer magnetic refrigerators (M) can heat the heating medium while the heating medium flows through the single-layer magnetic refrigerators (M) in an ascending order of Curie temperature of the magnetic refrigerators (M). In this case, the magnetic refrigerators (M) can improve the magnetocaloric effect, increasing the capacity of heating the heating medium. Alternatively, the single-layer magnetic refrigerators (M) can cool the heating medium while the heating medium flows through the single-layer magnetic refrigerators (M) in a descending order of the average value of the Curie temperatures of the magnetic refrigerators (M). In this case, the magnetic refrigerators (M) can improve the magnetocaloric effect, increasing the capacity of cooling the heating medium.

A seventh aspect is an embodiment of the third aspect. In the seventh aspect, operating temperature ranges of an adjacent pair of the magnetic refrigerators (M) partially overlap each other.

The term "operating temperature range" used herein refers to a temperature range in which the magnetocaloric effect can be obtained even slightly in the whole magnetic working substances (11) of the magnetic refrigerator (M). Thus, this operating temperature range does not vary depending on the types of the magnetic refrigerator, such as single-layered or cascaded.

When the heating medium bypasses one of the magnetic refrigerators (M), the temperature of the heating medium flowing through another magnetic refrigerator (M) adjacent to the former magnetic refrigerator (M) may greatly vary. In addition, when the heating medium that has bypassed the former magnetic refrigerator (M) flows through the latter magnetic refrigerator (M), the temperature of the heating medium flowing through another magnetic refrigerator (M) adjacent to the latter magnetic refrigerator (M) may greatly vary. In the seventh aspect, the operating temperature ranges of the two adjacent magnetic refrigerators (M) partially overlap each other. Thus, the temperature of the heating medium can be kept from deviating from the operating temperature ranges of the magnetic refrigerators (M) when the temperature of the heating medium changes with the switching between the actions of the bypass mechanism.

An eighth aspect is an embodiment of the seventh aspect. In the eighth aspect, each of the magnetic refrigerators (M) is a cascaded magnetic refrigerator including different types of magnetic working substances (11) arranged from a low-temperature end to a high-temperature end of the magnetic refrigerator in an ascending order of Curie temperature, the magnetic working substances (11) at opposing ends of an adjacent pair of the magnetic refrigerators (M) are configured to have operating temperature ranges having an overlapping area where the operating temperature ranges partially or completely overlap with each other, and a maximum value of a magnetocaloric effect in the overlapping area of the operating temperature ranges is equal to or more than 1/2 of an average value of maximum values of a magnetocaloric effect of the magnetic working substances (11) at the adjacent ends of the adjacent pair of the magnetic refrigerators (M).

In the eighth aspect, the operating temperature ranges of the magnetic working substances (11) at the adjacent ends of the adjacent pair of the cascaded magnetic refrigerators (M) overlap in a relatively large area. Thus, the temperature of the heating medium can be kept from deviating from the operating temperature ranges of the magnetic refrigerators (M) when the temperature of the heating medium changes with the switching between the actions of the bypass mechanism.

A ninth aspect is an embodiment of the seventh aspect. In the ninth aspect, each of the magnetic refrigerators (M) is a single-layer magnetic refrigerator having a single-type magnetic working substance (11), the magnetic working substances (11) of an adjacent pair of the magnetic refrigerators (M) are configured to have operating temperature ranges having an overlapping area where the operating temperature ranges partially overlap with each other, and a maximum value of an magnetocaloric effect in the overlapping area of the operating temperature ranges is equal to or more than 1/2 of an average value of maximum values of a magnetocaloric effect of the magnetic working substances (11) of the adjacent pair of the magnetic refrigerators (M).

In the ninth aspect, the operating temperature ranges of the magnetic working substances (11) of the adjacent pair of the single-layer magnetic refrigerators (M) overlap in a relatively large area. Thus, the temperature of the heating medium can be kept from deviating from the operating temperature ranges of the magnetic refrigerators (M) when the temperature of the heating medium changes with the switching between the actions of the bypass mechanism.

A tenth aspect is an embodiment of the fourth or fifth aspect. In the tenth aspect, the different types of magnetic working substances (11) include an endmost magnetic working substance (11c, 11d) located at one of ends of the different types of magnetic working substances (11) and an intermediate magnetic working substance (11b, 11e) located between the ends, and the endmost magnetic working substance (11c, 11d) has a wider operation temperature range than the intermediate magnetic working substance (11b, 11e).

In the tenth aspect, the endmost magnetic working substance (11c, 11d) has a wider operation temperature range than the intermediate magnetic working substance (11b, 11e) in each magnetic refrigerator (M). Thus, the temperature of the heating medium can be kept from deviating from the operating temperature range of the endmost magnetic working substance (11c, 11d) of the magnetic refrigerator (M) when the temperature of the heating medium changes with the switching between the actions of the bypass mechanism.

An eleventh aspect is an embodiment of the fourth or fifth aspect. In the eleventh aspect, the different types of magnetic working substances (11) include an endmost magnetic working substance (11c, 11d) located at one of ends of the different types of magnetic working substances (11) and an intermediate magnetic working substance (11b, 11e) located between the ends, and a maximum value of a magnetocaloric effect of the endmost magnetic working substance (11c, 11d) is greater than a maximum value of a magnetocaloric effect of the intermediate magnetic working substance (11b, 11e).

In the eleventh aspect, the maximum value of a magnetocaloric effect of the endmost magnetic working substance (11c, 11d) located at one of the ends of the magnetic working substances (11) is greater than the maximum value of a magnetocaloric effect of the intermediate magnetic working substance (11b, 11e). Thus, the heating medium can be sufficiently heated or cooled by the endmost magnetic working substance (11c, 11d) so that the temperature of the heating medium does not deviate from the operating temperature ranges of the magnetic refrigerators (M) when the temperature of the heating medium changes with the switching between the actions of the bypass mechanism.

A twelfth aspect is an embodiment of the eleventh aspect. In the twelfth aspect, the magnetic field modulator (12) makes an amount of change in magnetic flux density of the endmost magnetic working substance (11c, 11d) larger than an amount of change in magnetic flux density of the intermediate magnetic working substance (11b, 11e).

In the twelfth aspect, the amount of change in magnetic flux density of the endmost magnetic working substance (11c, 11d) is made larger than the amount of change in magnetic flux density of the intermediate magnetic working substance (11b, 11e). This can increase the magnetocaloric effect of the endmost magnetic working substance (11c, 11d).

A thirteenth aspect is an embodiment of the eleventh or twelfth aspect. In the thirteenth aspect, the endmost magnetic working substance (11c, 11d) causes a larger adiabatic temperature change or entropy change than the intermediate magnetic working substance (11b, 11e).

In the thirteenth aspect, the adiabatic temperature change caused by the endmost magnetic working substance (11c, 11d) is made larger than the adiabatic temperature change caused by the intermediate magnetic working substance (11b, 11e). This can increase the magnetocaloric effect of the endmost magnetic working substance (11c, 11d). Alternatively, the entropy change caused by the endmost magnetic working substance (11c, 11d) is made larger than the adiabatic temperature change of the intermediate magnetic working substance (11b, 11e). This can increase the magnetocaloric effect of the endmost magnetic working substance (11c, 11d).

A fourteenth aspect is an embodiment of any one of the first to thirteenth aspects. In the fourteenth aspect, the endmost magnetic working substance (11c, 11d) has a higher weight than the intermediate magnetic working substance (11b, 11e).

In the fourteenth aspect, the endmost magnetic working substance (11c, 11d) has a height weight than the intermediate magnetic working substance (11b, 11e). This can increase the magnetocaloric effect of the endmost magnetic working substance (11c, 11d).

A fifteenth aspect is an embodiment of the fourteenth aspect. In the fifteenth aspect, the endmost magnetic working substance (11c, 11d) has a higher filling factor or volume than the intermediate magnetic working substance (11b, 11e).

In the fifteenth aspect, the endmost magnetic working substance (11c, 11d) has a higher filling factor than the intermediate magnetic working substance (11b, 11e). This can increase the weight of the endmost magnetic working substance (11c, 11d), increasing the magnetocaloric effect of the endmost magnetic working substance (11c, 11d). Alternatively, the endmost magnetic working substance (11c, 11d) has a higher volume than the intermediate magnetic working substance (11b, 11e). This can increase the weight of the endmost magnetic working substance (11c, 11d), increasing the magnetocaloric effect of the endmost magnetic working substance (11c, 11d).

A sixteenth aspect is an embodiment of any one of the first to fifteenth aspects. In the sixteenth aspect, at least one of the first channel (40) or the second channel (50) has a thermal storage section (81, 82, 84, 85) through which the heating medium having bypassed the solid refrigerators, in particular, the magnetic refrigerators (M), flows.

In the sixteenth aspect, the heating medium that has bypassed the magnetic refrigerators (M) flows through the thermal storage section (81, 82, 84, 85). The thermal storage section (81, 82, 84, 85) stores warm thermal energy and/or cold thermal energy of the heating medium. Thus, in spite of the temperature change of the heating medium accompanying the switching by the bypass mechanism, the thermal storage section (81, 82, 84, 85) can keep the temperature of the heating medium flowing through the next magnetic refrigerator (M) from suddenly changing. When the temperature change of the heating medium flowing through the magnetic refrigerator (M) is reduced, the temperature of the heating medium can be kept from deviating from the operating temperature range of the magnetic refrigerator (M).

In a seventeenth aspect, some of the magnetic refrigerators (M) are third magnetic refrigerators (ML, MH) and the other are fourth magnetic refrigerators (MM), and the magnetic working substances (11) of the third magnetic refrigerators (ML, MH) have wider operating temperature ranges than the magnetic working substances (11) of the fourth magnetic refrigerators (MM).

In the seventeenth aspect, the operating temperature ranges of the magnetic working substances (11) of the third magnetic refrigerator (ML, MH) are widened, reducing the number of magnetic working substances (11) of the third magnetic refrigerator (ML, MH). Specifically, the third magnetic refrigerator (ML, MH) can be a single-layer magnetic refrigerator, or the number of magnetic working substances (11) in a cascaded third magnetic refrigerator (ML, MH) can be reduced. This can simplify the structure of the third magnetic refrigerator (ML, MH) with a reduced cost.

An eighteenth aspect is an embodiment of the seventeenth aspect. In the eighteenth aspect, the third magnetic refrigerators (ML, MH) have a larger amount of the magnetic working substances (11) than the fourth magnetic refrigerators (MM).

When the operating temperature range of the magnetic working substances (11) of the third magnetic refrigerator (ML, MH) is widened, the magnetocaloric effect of the third magnetic refrigerator (ML, MH) tends to decrease. In the eighteenth aspect, increasing the amount of the magnetic working substances (11) in the third magnetic refrigerator (ML, MH) can improve the heat dissipation capacity and heat absorption capacity of the third magnetic refrigerator (ML, MH).

A nineteenth aspect is an embodiment of the seventeenth or eighteenth aspect. In the nineteenth aspect, the bypass mechanism (B) is provided to correspond to the third magnetic refrigerators (ML, MH).

If the number of magnetic working substances (11) in the third magnetic refrigerator (ML, MH) is reduced, the efficiency of the third magnetic refrigerator (ML, MH) may decrease. In the nineteenth aspect, the bypass mechanism (B) corresponding to the third magnetic refrigerator (ML, MH) is provided. Thus, the third magnetic refrigerator (ML, MH) can be supplementarily used when necessary. When the third magnetic refrigerator (ML, MH) is not operated, the heating medium bypasses the third magnetic refrigerator (ML, MH), reducing pressure loss.

A twentieth aspect is an embodiment of any one of the seventeenth to nineteenth aspects. In the twentieth aspect, when the solid-state refrigeration apparatus is in operation, a temperature of the heating medium falls within the whole operating temperature range of the third magnetic refrigerators (ML, MH) less frequently than within the whole operating temperature range of the fourth magnetic refrigerators (MM).

In the twentieth aspect, the temperature of the heating medium falls within the whole operating temperature range of the third magnetic refrigerators (ML, MH) less frequently when the solid-state refrigeration apparatus is in operation. Thus, even if the number of the magnetic working substances (11) in the third magnetic refrigerators (ML, MH) is reduced, the decrease in operating efficiency has little influence on the whole operation of the solid-state refrigeration apparatus.

A twenty-first aspect is an embodiment of any one of the seventeenth to twentieth aspects. In the twenty-first aspect, the whole operating temperature range of the fourth magnetic refrigerators (MM) is an intermediate temperature range, and the whole operating temperature range of the third magnetic refrigerators (ML, MH) is one or both of a low temperature range and a high temperature range.

The "low temperature range," the "medium temperature range," and the "high temperature range" are defined as described below. The whole operating temperature range of the plurality of magnetic refrigerators (M) is divided into three ranges having the same temperature width. In this case, the lowest temperature range is defined as the "low temperature range," the highest temperature range as the "high temperature range," and the range between the low and high temperature ranges as the "medium temperature range."

In the twenty-first aspect, the whole operating temperature range of the third magnetic refrigerator (ML, MH) is the low temperature range or the high temperature range. Thus, the temperature of the heating medium falls within the whole operating temperature range of the third magnetic refrigerators (ML, MH) less frequently than within the whole operating temperature range of the fourth magnetic refrigerators (MM).

A twenty-second aspect is an embodiment of any one of the seventeenth to twenty-first aspects. In the twenty-second aspect, the third magnetic refrigerators (ML, MH) are provided near the ends of the plurality of magnetic refrigerators (M).

In the twenty-second aspect, the third magnetic refrigerators (ML, MH) are provided near the ends of the plurality of magnetic refrigerators (M). Thus, the temperature of the heating medium falls within the whole operating temperature range of the third magnetic refrigerators (ML, MH) less frequently.

A twenty-third aspect is an embodiment of the twenty-second aspect. In the twenty-third aspect, the third magnetic refrigerators (ML, MH) are provided at the ends of the plurality of magnetic refrigerators (M).

In the twenty-third aspect, the third magnetic refrigerators (ML, MH) are provided at the ends of the plurality of magnetic refrigerators (M). Thus, the temperature of the heating medium falls within the whole operating temperature range of each of the third magnetic refrigerators (ML, MH) less frequently.

A twenty-fourth aspect is an embodiment of any one of the seventeenth to twenty-third aspects. In the twenty-fourth aspect, the third magnetic refrigerators (ML, MH) are provided closer to an outdoor heat exchanger (34) constituting at least one of the first heat exchange section (31, 33, 34) or the second heat exchange section (32, 33, 34).

The temperature of the heating medium flowing through the outdoor heat exchanger (34) greatly varies depending on the outdoor temperature. In the twenty-fourth aspect, the third magnetic refrigerators (ML, MH) are provided closer to the outdoor heat exchanger (34), and thus, the temperature of the heating medium falls within the whole operating temperature range of the third magnetic refrigerators (ML, MH) less frequently.

A twenty-fifth aspect is an embodiment of the twenty-fourth aspect. In the twenty-fifth aspect, the third magnetic refrigerators (ML, MH) are provided adjacent to the outdoor heat exchanger (34).

The temperature of the heating medium flowing through the outdoor heat exchanger (34) greatly varies depending on the outdoor temperature. In the twenty-fifth aspect, the third magnetic refrigerators (ML, MH) are provided adjacent to the outdoor heat exchanger (34), and thus, the temperature of the heating medium falls within the whole operating temperature range of the third magnetic refrigerators (ML, MH) less frequently.

BRIEF DESCRIPTION OF THE DRAWINGS

FIG. 1 is a piping system diagram of a magnetic refrigeration apparatus according to a first embodiment.

FIG. 2 is a block diagram illustrating relationship between a controller and other components of the magnetic refrigeration apparatus of the first embodiment.

FIG. 3 shows graphs of characteristics of magnetic working substances of a first magnetic refrigerator and a second magnetic refrigerator according to the first embodiment.

FIG. 4 shows a graph of characteristics of adjacent magnetic working substances according to the first embodiment.

FIG. 5 is a diagram corresponding to FIG. 1 illustrating the flow of a heating medium in a normal heating action according to the first embodiment.

FIG. 6 is a diagram corresponding to FIG. 1 illustrating the flow of a heating medium in a normal cooling action according to the first embodiment.

FIG. 7 is a diagram corresponding to FIG. 1 illustrating the flow of a heating medium in a first bypass heating action according to the first embodiment.

FIG. 8 is a diagram corresponding to FIG. 1 illustrating the flow of a heating medium in a second bypass heating action according to the first embodiment.

FIG. 9 is a diagram corresponding to FIG. 1 illustrating the flow of a heating medium in a first bypass cooling action according to the first embodiment.

FIG. 10 is a diagram corresponding to FIG. 1 illustrating the flow of a second bypass cooling action according to the first embodiment.

FIG. 11 show graphs of characteristics of magnetic working substances of a first magnetic refrigerator and a second magnetic refrigerator according to a second embodiment.

FIG. 12 is a piping system diagram of a magnetic refrigeration apparatus according to a third embodiment.

FIG. 13 is a piping system diagram of a magnetic refrigeration apparatus according to a first variation of the third embodiment.

FIG. 14 is a piping system diagram of a magnetic refrigeration apparatus according to a second variation of the third embodiment.

FIG. 15 is a piping system diagram of a magnetic refrigeration apparatus according to a fourth embodiment.

FIG. 16 is a diagram corresponding to FIG. 15, illustrating the flow of a heating medium in a first action according to the fourth embodiment.

FIG. 17 is a diagram corresponding to FIG. 15, illustrating the flow of a heating medium in a second action according to the fourth embodiment.

FIG. 18 is a diagram corresponding to FIG. 15, illustrating the flow of a heating medium in a third action according to the fourth embodiment.

FIG. 19 is a diagram corresponding to FIG. 15, illustrating the flow of a heating medium in a fourth action according to the fourth embodiment.

FIG. 20 is a piping system diagram of a magnetic refrigeration apparatus according to variation A.

FIG. 21 is a piping system diagram of a magnetic refrigeration apparatus according to variation B.

FIG. 22 is a piping system diagram of a magnetic refrigeration apparatus according to variation C.

FIG. 23 is a piping system diagram of a magnetic refrigeration apparatus according to variation D.

FIG. 24 is a piping system diagram of a magnetic refrigeration apparatus according to variation E.

FIG. 25 shows a graph corresponding to FIG. 3, related to a magnetic refrigeration apparatus according to variation F.

FIG. 26 is a piping system diagram of a magnetic refrigeration apparatus according to a fifth embodiment.

FIG. 27 is a diagram corresponding to FIG. 26, illustrating the flow of a heating medium in a first action according to the fifth embodiment.

FIG. 28 is a diagram corresponding to FIG. 26, illustrating the flow of a heating medium in a second action according to the fifth embodiment.

FIG. 29 is a diagram corresponding to FIG. 26, illustrating the flow of a heating medium in a third action according to the fifth embodiment.

FIG. 30 is a diagram corresponding to FIG. 26, illustrating the flow of a heating medium in a fourth action according to the fifth embodiment.

FIG. 31 is a schematic view illustrating relationship between operating temperature ranges in different operations of the magnetic refrigeration apparatus according to the fifth embodiment and the characteristics of a plurality of magnetic refrigerators.

FIG. 32 is a piping system diagram of a magnetic refrigeration apparatus according to a sixth embodiment.

FIG. 33 is a diagram corresponding to FIG. 32, illustrating the flow of a heating medium in a first action according to the sixth embodiment.

FIG. 34 is a diagram corresponding to FIG. 32, illustrating the flow of a heating medium in a second action according to the sixth embodiment.

FIG. 35 is a diagram corresponding to FIG. 32 illustrating the flow of a heating medium in a third action according to the sixth embodiment.

FIG. 36 is a diagram corresponding to FIG. 32 illustrating the flow of a heating medium in a fourth action according to the sixth embodiment.

FIG. 37 is a schematic view illustrating operating temperature ranges of a magnetic refrigeration apparatus according to variation G.

FIG. 38 is a piping system diagram of a magnetic refrigeration apparatus according to variation H.

FIG. 39 is a schematic view illustrating operating temperature ranges of the magnetic refrigeration apparatus according to variation H.

FIG. 40 is a piping system diagram of a magnetic refrigeration apparatus according to variation I.

FIG. 41 is a schematic diagram illustrating operating temperature ranges of the magnetic refrigeration apparatus according to variation I.

DESCRIPTION OF EMBODIMENTS

Embodiments of the present disclosure will be described below with reference to the drawings. The following embodiments are merely exemplary ones in nature, and are not intended to limit the scope, applications, or use of the invention.

«First Embodiment»

A magnetic refrigeration apparatus (1) according to this embodiment controls the temperature of a heating medium using a magnetocaloric effect. The magnetic refrigeration apparatus (1) is applied to an air conditioner, for example. The magnetic refrigeration apparatus (1) is a solid-state refrigeration apparatus configured to control the temperature of a heating medium using a caloric effect.

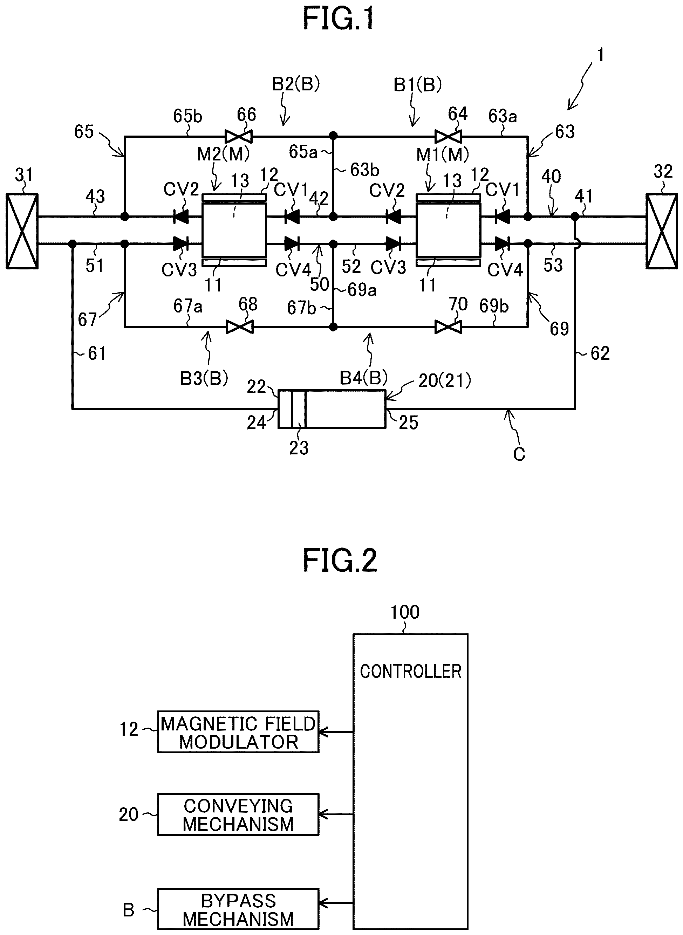

As illustrated in FIG. 1, the magnetic refrigeration apparatus (1) includes a heating medium circuit (C) filled with the heating medium. The heating medium filling the heating medium circuit (C) is conveyed through the heating medium circuit (C). Examples of the heating medium include a refrigerant, water, and brine.

The magnetic refrigeration apparatus (1) includes, as main components, a plurality of magnetic refrigerators (M) as solid refrigerators, a conveying mechanism (20), a first heat exchanger (31), and a second heat exchanger (32). The magnetic refrigerators (M), the conveying mechanism (20), the first heat exchanger (31), and the second heat exchanger (32) are connected to the heating medium circuit (C).

<Magnetic Refrigerator>

The magnetic refrigerators (M) include a first magnetic refrigerator (M1) and a second magnetic refrigerator (M2). In the following description, the first magnetic refrigerator (M1) and the second magnetic refrigerator (M2) may be collectively referred to as magnetic refrigerators (M).

Each magnetic refrigerator (M) includes a bed (10), a magnetic working substance (11) as a solid refrigerant substance, and a magnetic field modulator (12). The bed (10) is a hollow case or column. The interior of the bed (10) is filled with the magnetic working substance (11). An internal channel (13) through which the heating medium flows back and forth is formed in the bed (10).

The magnetic working substance (11) generates heat if a magnetic field is applied to the magnetic working substance (11) or the intensity of the applied magnetic field increases. The magnetic working substance (11) absorbs heat if the magnetic field is removed from the magnetic working substance (11) or if the intensity of the applied magnetic field decreases. Examples of the material of the magnetic working substance (11) include $Gd_5(Ge_{0.5}Si_{0.5})_4$, $La(Fe_{1-x}Si_x)_{13}$, $La(Fe_{1-x}Co_x-Si_y)_{13}$, $La(Fe_{1-x}Si_x)_{13}H_y$, and $Mn(As_{0.9}Sb_{0.1})$.

The magnetic refrigerators (M) of this embodiment are cascaded magnetic refrigerators. Each magnetic refrigerator (M) has different types of magnetic working substances (11) having different Curie temperatures (details will be described later).

The magnetic field modulator (12) is an induction section configured to cause the magnetic working substance (11) serving as a solid refrigerant substance to produce a caloric effect. The magnetic field modulator (12) applies a magnetic field variation to the magnetic working substance (11). The magnetic field modulator (12) controls the intensity of the magnetic field applied to the magnetic working substance (11). The magnetic field modulator (12) is comprised of an electromagnet capable of modulating a magnetic field, for example. The magnetic field modulator (12) performs a first modulation action and a second modulation action. In the first modulation action, a magnetic field is applied to the magnetic working substance (11), or the intensity of the applied magnetic field is increased. In the second modulation action, the magnetic field applied to the magnetic working substance (11) is removed, or the intensity of the applied magnetic field is reduced.

<Conveying Mechanism>

The conveying mechanism (20) reciprocally conveys the heating medium in the heating medium circuit (C). The conveying mechanism (20) includes a reciprocating pump (21). The reciprocating pump (21) is configured as a piston pump. The reciprocating pump (21) includes a pump case (22), a piston (23), and a driving mechanism (not shown). The piston (23) is disposed inside the pump case (22). The piston (23) partitions the inside of the pump case (22) into two chambers. The reciprocating pump (21) has a first opening (24) and a second opening (25). One of the chambers of the pump case (22) communicates with the first opening (24), and the other chamber communicates with the second opening (25).

The driving mechanism includes a rod coupled to the piston (23), a crank coupled to the rod, and an electric motor configured to drive the crank. In response to the rotation of the crank by the electric motor, the rod moves forward and backward. This allows the piston (23) to reciprocate inside the pump case (22).

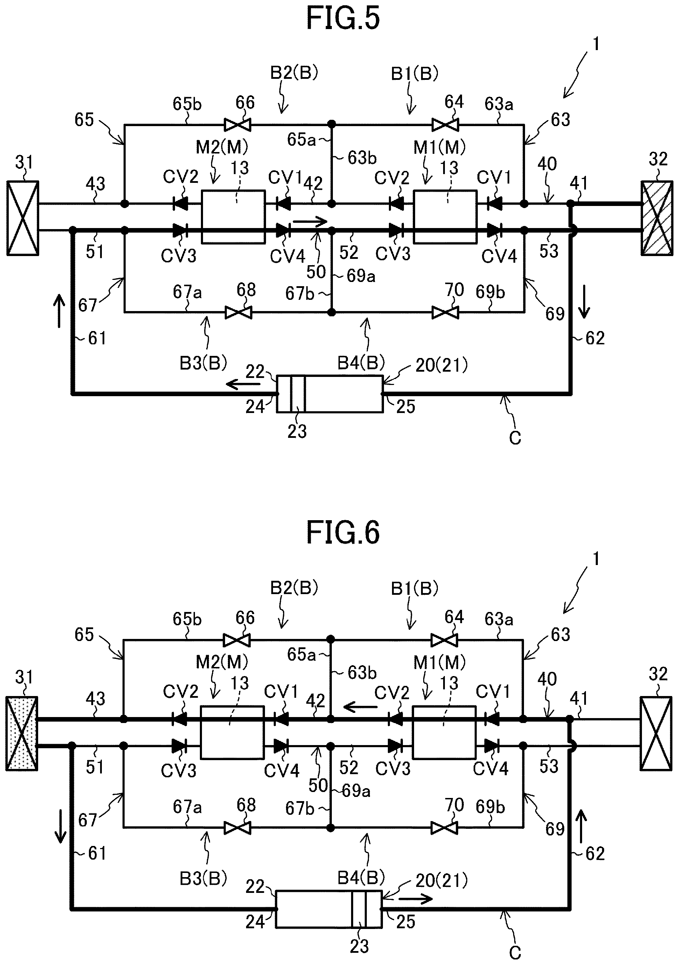

The conveying mechanism (20) alternately and repeatedly performs a first conveying action and a second conveying action. In the first conveying action shown in FIG. 5, the piston (23) moves toward the first opening (24). Then, the heating medium in the pump case (22) is discharged from the first opening (24). At the same time, the heating medium is sucked into the pump case (22) through the second opening (25). In the second conveying action shown in FIG. 6, the piston (23) moves toward the second opening (25). Then, the heating medium in the pump case (22) is discharged from the second opening (25). At the same time, the heating medium is sucked into the pump case (22) through the first opening (24).

<First Heat Exchanger and Second Heat Exchanger>

The first heat exchanger (31) and the second heat exchanger (32) exchange heat between the heating medium flowing through the heating medium circuit (C) and a target fluid. In this embodiment, the first and second heat exchangers (31) and (32) are air heat exchangers. The first and second heat exchangers (31) and (32) exchange heat between the heating medium in the heating medium circuit (C) and the air.

The first heat exchanger (31) constitutes a low-temperature heat exchanger. In other words, the first heat exchanger (31) is a heat absorber that takes heat from the air to the heating medium. The second heat exchanger (32) constitutes a high-temperature heat exchanger. In other words, the second heat exchanger (32) is a radiator that dissipates the air from the heating medium to the heat. The first heat exchanger (31) corresponds to a first heat exchange section of the present disclosure. The second heat exchanger (32) corresponds to a second heat exchange section of the present disclosure.

<Heating Medium Circuit>

The heating medium circuit (C) includes, as main components, a first channel (40), a second channel (50), a first conveying channel (61), and a second conveying channel (62). The heating medium circuit (C) includes a plurality of bypass mechanisms (B).

<First Channel>

The first channel (40) is a passage for supplying the heating medium to the first heat exchanger (31). An inlet end of the first channel (40) is connected to an outlet end of the second heat exchanger (32). An outlet end of the first channel (40) is connected to an inlet end of the first heat exchanger (31). The first channel (40) includes a first upstream path (41), a first intermediate path (42), and a first downstream path (43). The first channel (40) includes internal channels (13) of the magnetic refrigerators (M1). The first channel (40) connects the first upstream path (41), the internal channel (13) of the first magnetic refrigerator (M1), the first intermediate path (42), the internal channel (13) of the second magnetic refrigerator (M2), and the first downstream path (43) in this order.

The first channel (40) has a first check valve (CV1) provided on the upstream side of each of the magnetic refrigerators (M). The first channel (40) also has a second check valve (CV2) provided on the downstream side of each of the magnetic refrigerators (M). The first check valves (CV1) and the second check valves (CV2) allow the heating medium to flow from the second heat exchanger (32) to the first heat exchanger (31), and prohibit the heating medium from flowing in the opposite direction.

<Second Channel>

The second channel (50) is a passage for supplying the heating medium to the second heat exchanger (32). An inlet end of the second channel (50) is connected to an outlet end of the first heat exchanger (31). An outlet end of the second channel (50) is connected to an inlet end of the second heat exchanger (32). The second channel (50) includes a second upstream flow path (51), a second intermediate flow path (52), and a second downstream flow path (53). The second channel (50) includes internal channels (13) of the magnetic refrigerators (M). The second channel (50) connects the second upstream path (51), the internal channel (13) of the second magnetic refrigerator (M2), the second intermediate path (52), the internal channel (13) of the first magnetic refrigerator (M1), and the second downstream path (53) in this order.

The second channel (50) has a third check valve (CV3) provided on the upstream side of each of the magnetic refrigerators (M). The second channel (50) also has a fourth check valve (CV4) provided on the downstream side of each of the magnetic refrigerators (M). The third check valves (CV3) and the fourth check valves (CV4) allow the heating medium to flow from the first heat exchanger (31) to the second heat exchanger (32), and prohibit the heating medium from flowing in the opposite direction.

The first channel (40) and the second channel (50) allow the heating medium to flow only in the directions opposite to each other.

<First Conveying Channel>

An inlet end of the first conveying channel (61) is connected to the first opening (24) of the reciprocating pump (21). An outlet end of the first conveying channel (61) is connected to the second upstream channel (51) between the first heat exchanger (31) and an inlet end of a third bypass channel (67).

<Second Conveying Channel>

An inlet end of the second conveying channel (62) is connected to the second opening (25) of the reciprocating pump (21). An outlet end of the second conveying channel (62) is connected to the first upstream path (41) between the second heat exchanger (32) and an inlet end of a first bypass channel (63).

<Bypass Mechanism>

The bypass mechanisms (B) include a first bypass mechanism (B1), a second bypass mechanism (B2), a third bypass mechanism (B3), and a fourth bypass mechanism (B4). Each bypass mechanism (B) in the heating medium circuit (C) switches between an action of making the heating medium flow through the magnetic refrigerator (M) and an action of making the heating medium bypass the magnetic refrigerator (M).

<First Bypass Mechanism>

The first bypass mechanism (B1) is connected to the first channel (40). The first bypass mechanism (B1) is associated with the internal channel (13) of the first magnetic refrigerator (M1). The first bypass mechanism (B1) switches between the channel where the heating medium in the first channel (40) flows through the internal channel (13) of the first magnetic refrigerator (M1) and the channel where the heating medium in the first channel (40) bypasses the internal channel (13) of the first magnetic refrigerator (M1).

Specifically, the first bypass mechanism (B1) includes a first bypass channel (63) and a first control valve (64). An inlet end of the first bypass channel (63) is connected to the first upstream path (41) between a junction of the first upstream path (41) with the second conveying channel (62) and the first check valve (CV1) near the first magnetic refrigerator (M1). An outlet end of the first bypass channel (63) is connected to the first intermediate path (42) between the second check valve (CV2) near the first magnetic refrigerator (M1) and the first check valve (CV1) near the second magnetic refrigerator (M2).

The first bypass channel (63) includes a first upstream portion (63a) and a first downstream portion (63b). The first downstream portion (63b) of the first bypass channel (63) also serves as a second upstream portion (65a) of the second bypass channel (65). The first control valve (64) is an on-off valve that opens and closes the first bypass channel (63). The first control valve (64) is provided in the first upstream portion (63a).

<Second Bypass Mechanism>

The second bypass mechanism (B2) is connected to the first channel (40). The second bypass mechanism (B2) is associated with the internal channel (13) of the second magnetic refrigerator (M2). The second bypass mechanism (B2) switches between the channel where the heating medium in the first channel (40) flows through the internal channel (13) of the second magnetic refrigerator (M2) and the channel where the heating medium in the first channel (40) bypasses the internal channel (13) of the second magnetic refrigerator (M2).

Specifically, the second bypass mechanism (B2) includes a second bypass channel (65) and a second control valve (66). An outlet end of the second bypass channel (65) is connected to the first intermediate path (42) between the second check valve (CV2) near the first magnetic refrigerator (M1) and the first check valve (CV1) near the second magnetic refrigerator (M2). An outlet end of the second bypass channel (65) is connected to the first downstream path (43) between the second check valve (CV2) near the second magnetic refrigerator (M2) and the first heat exchanger (31).

The second bypass channel (65) includes a second upstream portion (65a) and a second downstream portion (65b). The second control valve (66) is an on-off valve that opens and closes the second bypass channel (65). The second control valve (66) is provided in the second downstream portion (65b).

<Third Bypass Mechanism>

The third bypass mechanism (B3) is connected to the second channel (50). The third bypass mechanism (B3) is associated with the internal channel (13) of the second magnetic refrigerator (M2). The third bypass mechanism (B3) switches between the channel where the heating medium in the second channel (50) flows through the internal channel (13) of the second magnetic refrigerator (M2) and the channel where the heating medium in the second channel (50) bypasses the internal channel (13) of the second magnetic refrigerator (M2).

Specifically, the third bypass mechanism (B3) includes a third bypass channel (67) and a third control valve (68). An inlet end of the third bypass channel (67) is connected to the second upstream channel (51) between a junction of the second upstream channel (51) with the first conveying channel (61) and the third check valve (CV3) near the second magnetic refrigerator (M2). An outlet end of the third bypass channel (67) is connected to the second intermediate path (52) between the fourth check valve (CV4) near the second magnetic refrigerator (M2) and the third check valve (CV3) near the first magnetic refrigerator (M1).

The third bypass channel (67) includes a third upstream portion (67a) and a third downstream portion (67b). The third downstream portion (67b) of the third bypass channel (67) also serves as a fourth upstream portion (69a) of a fourth bypass channel (69). The third control valve (68) is an on-off valve that opens and closes the third bypass channel (67). The third control valve (68) is provided in the third upstream portion (67a).

<Fourth Bypass Mechanism>

The fourth bypass mechanism (B4) is connected to the second channel (50). The fourth bypass mechanism (B4) is associated with the internal channel (13) of the first magnetic refrigerator (M1). The fourth bypass mechanism (B4) switches between the channel where the heating medium in the second channel (50) flows through the internal channel (13) of the first magnetic refrigerator (M1) and the channel where the heating medium in the second channel (50) bypasses the internal channel (13) of the first magnetic refrigerator (M1).

Specifically, the fourth bypass mechanism (B4) includes a fourth bypass channel (69) and a fourth control valve (70). An inlet end of the fourth bypass channel (69) is connected to the second intermediate path (52) between the fourth check valve (CV4) near the second magnetic refrigerator (M2) and the third check valve (CV3) near the first magnetic refrigerator (M1). An outlet end of the fourth bypass channel (69) is connected to the second downstream path (53) between the fourth check valve (CV4) near the first magnetic refrigerator (M1) and the second heat exchanger (32).

The fourth bypass channel (69) includes a fourth upstream portion (69a) and a fourth downstream portion (69b). The fourth control valve (70) is an on-off valve that opens and closes the fourth bypass channel (69). The fourth control valve (70) is provided in the fourth downstream portion (69b).

The first control valve (64), the second control valve (66), the third control valve (68), and the fourth control valve (70) may be flow regulating valves capable of controlling the flow rate.

<Controller>

As illustrated in FIG. 2, the magnetic refrigeration apparatus (1) includes a controller (100). The controller (100) controls the magnetic field modulator (12), the conveying mechanism (20), and the bypass mechanisms (B). More specifically, the controller (100) controls each of the control valves (64, 66, 68, 70) of the bypass mechanisms (B) in accordance with an operation command. The controller (100) includes a microcomputer and a memory device (specifically, a semiconductor memory) storing software for operating the microcomputer.

<Details of Magnetic Working Substance>

The first and second magnetic refrigerators (M1) and (M2) are cascaded magnetic refrigerators. Each of the first and second magnetic refrigerators (M1) and (M2) has different types (three types in this example) of magnetic working substances (11) having different Curie temperatures. The Curie temperature is the temperature at which the magnetic working substance (11) has the highest magnetocaloric effect. The cascaded magnetic refrigerator (M) may have two or four or more magnetic working substances (11).

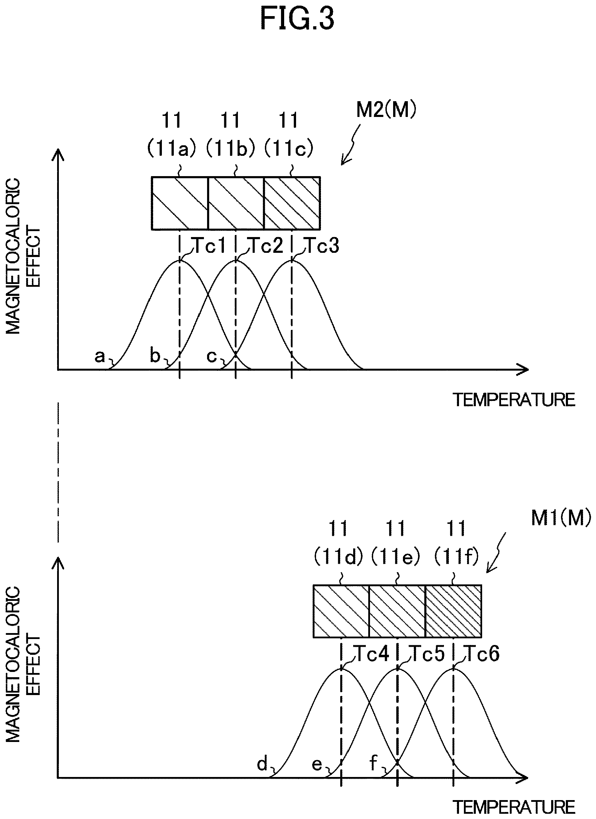

As illustrated in FIG. 3, the second magnetic refrigerator (M2) includes a first magnetic working substance (11a), a second magnetic working substance (11b), and a third magnetic working substance (11c) arranged in this order from a low-temperature end to a high-temperature end of the magnetic refrigerator (M2). The first magnetic refrigerator (M1) includes a fourth magnetic working substance (11d), a fifth magnetic working substance (11e), and a sixth magnetic working substance (11f) arranged in this order from a low-temperature end to a high-temperature end of the first magnetic refrigerator (M1). In the graphs of FIG. 3, curves a, b, and c indicate operating temperature ranges of the first magnetic working substance (11a), the second magnetic working substance (11b), and the third magnetic working substance (11c), respectively, and curves d, e, and f indicate operating temperature ranges of the fourth magnetic working substance (11d), the fifth magnetic working substance (11e), and the sixth magnetic working substance (11f), respectively.

Assume that the first, second and third magnetic working substances (11a), (11b), and (11c) have the Curie temperatures Tc1, Tc2, and Tc3, respectively, and the fourth, fifth, and sixth magnetic working substances (11d), (11e), and (11f) have the Curie-temperatures Tc4, Tc5, and Tc6, respectively, the relationship of Tc1<Tc2<Tc3<Tc4<Tc5<Tc6 is met.

In the first channel (40) and the second channel (50), the magnetic refrigerators (M) (two magnetic refrigerators in this example) are connected in series with the magnetic refrigerators (M) being arranged in an ascending order of average values of the Curie temperatures. Specifically, the average value T1 of the Curie temperature of the first magnetic refrigerator (M1) is greater than the average value T2 of the Curie temperature of the second magnetic refrigerator (M2). In this example, T1 is expressed by the relational expression T1 = (Tc4 + Tc5 + Tc6)/3. T2 is expressed by the relational expression T2 = (Tc1 + Tc2 + Tc3)/3.

In the heating medium circuit (C), the operating temperature ranges of the adjacent magnetic refrigerators (M) partially overlap each other. Specifically, the operating temperature range of the third magnetic working substance (11c) of the second magnetic refrigerator (M2) partially overlaps the operating temperature range of the fourth magnetic working substance (11d) of the first magnetic refrigerator (M1). The third magnetic working substance (11c) is a magnetic working substance at the end of the second magnetic refrigerator (M2). The fourth magnetic working substance (11d) is a magnetic working substance at the end of the first magnetic refrigerator (M1). More specifically, the first magnetic refrigerator (M1) and the second magnetic refrigerator (M2) are configured to meet the following relationship.

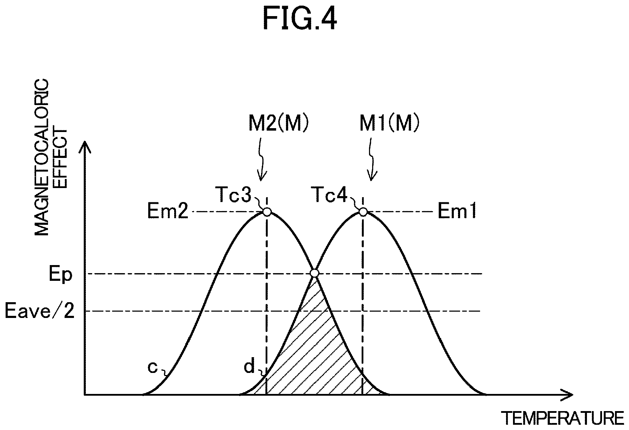

In the first and second magnetic refrigerators (M1) and (M2), attention is paid to the magnetic working substances at the adjacent ends, i.e., the third magnetic working substance (11c) and the fourth magnetic working substance (11d). Em2 denotes the magnetocaloric effect corresponding to the Curie temperature Tc3 of the third magnetic working substance (11c), and Em1 denotes the magnetocaloric effect corresponding to the Curie temperature Tc4 of the fourth magnetic working substance (11d). Em2 is the maximum value of the magnetocaloric effect of the third magnetic working substance (11c). Em1 is the maximum value of the magnetocaloric effect of the fourth magnetic working substance (11d). Eave is the average value of Em1 and Em2. Ep denotes the maximum value of the magnetocaloric effect in an overlapping area A of the operating temperature ranges of the third magnetic working substance (11c) and the fourth magnetic working substance (11d). In FIG. 4, the overlapping area A is hatched.

In this example, the magnetocaloric effect Ep is equal to or more than 1/2 of the average value Eave of Em1 and Em2. In other words, the first magnetic refrigerator (M1) and the second magnetic refrigerator (M2) are configured to meet the following formula (1).

$$Ep \geq ((Em1 + Em2)/2) \times (1/2) \cdot \cdot \cdot \cdot (1)$$

In this example, the operating temperature ranges of the magnetic working substances (11c, 11d) at the adjacent ends partially overlap each other. Note that the operating temperature ranges of the magnetic working substances (11c, 11d) at the adjacent ends may completely overlap each other. Also in this case, the adjacent magnetic refrigerators (M) meet the above formula (1).

-Operation-

The operation of the magnetic refrigeration apparatus (1) will be described with reference to FIGS. 5 to 10. In FIG. 5 and subsequent figures, the magnetic field modulator (12) is not shown. The magnetic refrigeration apparatus (1) alternately repeats a heating action and a cooling action. The heating action includes a normal heating action, a first bypass heating action, and a second bypass heating action. The cooling action includes a normal cooling action, a first bypass heating action, and a second bypass heating action. When normally operated, the magnetic refrigeration apparatus (1) alternately repeats the normal heating action and the normal cooling action. The first bypass heating action, the second bypass heating action, the first bypass cooling action, and the second bypass cooling action are appropriately performed depending on the thermal load, operating conditions, and required capacity of the magnetic refrigeration apparatus (1). In the following description, the first bypass heating action, the second bypass heating action, the first bypass cooling action, and the second bypass cooling action may be collectively referred to as a bypass action.

<Normal Heating Action>

In the normal heating action shown in FIG. 5, each of the magnetic field modulators (12) of the first and second magnetic refrigerators (M1) and (M2) performs the first modulation action. The conveying mechanism (20) performs the first conveying action. The controller (100) closes the first control valve (64), the second control valve (66), the third control valve (68), and the fourth control valve (70).

In the normal heating action, the heating medium flowing through the second channel (50) is heated by the first magnetic refrigerator (M1) and the second magnetic refrigerator (M2). The heated heating medium is supplied to the second heat exchanger (32) serving as a radiator. The heating medium dissipates heat to the air in the second heat exchanger (32). In the drawings, the heat exchanger serving as a radiator is hatched.

More specifically, the heating medium at a relatively low temperature discharged from the first opening (24) of the reciprocating pump (21) flows through the first conveying channel (61), the second upstream path (51), and the internal channel (13) of the second magnetic refrigerator (M2) in this order. In the second magnetic refrigerator (M2), the heating medium is heated by the first magnetic working substance (11a), the second magnetic working substance (11b), and the third magnetic working substance (11c) in this order. In the second magnetic refrigerator (M2), the magnetic working substances (11a, 11b, 11c) are arranged in an ascending order of the Curie-temperature from the low-temperature end to the high-temperature end. Thus, each of the magnetic working substances (11a, 11b, 11c) of the second magnetic refrigerator (M2) can produce a relatively large magnetocaloric effect.

The heating medium heated in the second magnetic refrigerator (M2) flows through the second intermediate path (52) and the internal channel (13) of the first magnetic refrigerator (M1) in this order. The heating medium in the first magnetic refrigerator (M1) is heated by the fourth magnetic working substance (11d), the fifth magnetic working substance (11e), and the sixth magnetic working substance (11f) in this order. In the first magnetic refrigerator (M1), the magnetic working substances (11d, 11e, 11f) are arranged in an ascending order of the Curie temperature from the low-temperature end to the high-temperature end. Thus, each of the magnetic working substances (11d, 11e, 11f) of the first magnetic refrigerator (M1) can produce a relatively large magnetocaloric effect.

The heating medium heated in the first magnetic refrigerator (M1) flows through the second downstream path (53) and the second heat exchanger (32) in this order. The heating medium dissipates heat to the air in the second heat exchanger (32) to heat the air. The heating medium that has dissipated heat in the second heat exchanger (32) flows through the second conveying channel (62) and is sucked into the second opening (25) of the reciprocating pump (21).

<Normal Cooling Action>

In the normal cooling action shown in FIG. 6, each of the magnetic field modulators (12) of the first and second magnetic refrigerators (M1) and (M2) performs the second modulation action. The conveying mechanism (20) performs the second conveying action. The controller (100) closes the first control valve (64), the second control valve (66), the third control valve (68), and the fourth control valve (70).

In the normal cooling action, the heating medium flowing through the first channel (40) is cooled by the first magnetic refrigerator (M1) and the second magnetic refrigerator (M2). The cooled heating medium is supplied to the first heat exchanger (31) serving as a heat absorber. The heating medium absorbs heat from the air in the first heat exchanger (31). In the drawings, the heat exchanger serving as a heat absorber is dotted.

More specifically, the heating medium at a relatively high temperature discharged from the second opening (25) of the reciprocating pump (21) flows through the second conveying channel (62), the first upstream path (41), and the first magnetic refrigerator (M1) in this order. The heating medium in the first magnetic refrigerator (M1) is cooled by the sixth magnetic working substance (11f), the fifth magnetic working substance (11e), and the fourth magnetic working substance (11d) in this order. In the first magnetic refrigerator (M1), the magnetic working substances (11d, 11e, 11f) are arranged in a descending order of the Curie temperature from the high-temperature end to the low-temperature end. Thus, each of the magnetic working substances (11d, 11e, 11f) of the first magnetic refrigerator (M1) can produce a relatively large magnetocaloric effect.

The heating medium cooled in the first magnetic refrigerator (M1) flows through the first intermediate path (42) and the internal channel (13) of the second magnetic refrigerator (M2) in this order. The heating medium in the second magnetic refrigerator (M2) is cooled by the third magnetic working substance (11c), the second magnetic working substance (11b), and the first magnetic working substance (11a) in this order. In the second magnetic refrigerator (M2), the magnetic working substances (11a, 11b, 11c) are arranged in a descending order of the Curie temperature from the high-temperature end to the low-temperature end. Thus, each of the magnetic working substances (11a, 11b, 11c) of the second magnetic refrigerator (M2) can produce a relatively large magnetocaloric effect.

The heating medium cooled in the second magnetic refrigerator (M2) flows through the first downstream path (43) and the first heat exchanger (31) in this order. The heating medium absorbs heat from the air in the first heat exchanger (31) to cool the air. The heating medium that has absorbed heat in the first heat exchanger (31) flows through the first conveying channel (61) and is sucked into the first opening (24) of the reciprocating pump (21).

<First Bypass Heating Action>

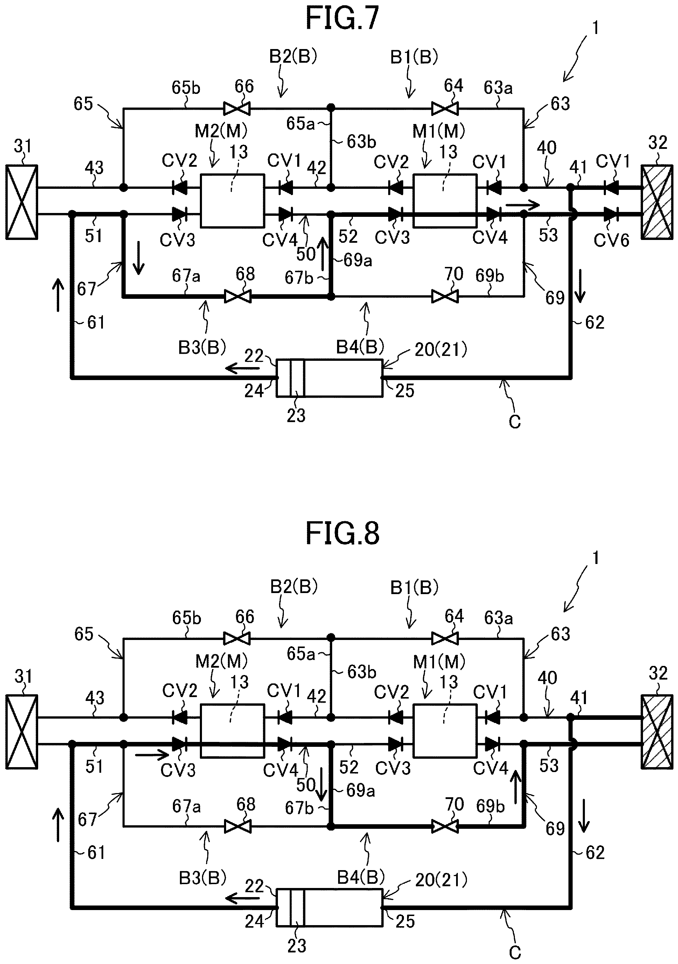

In the first bypass heating action shown in FIG. 7, the magnetic field modulator (12) of the first magnetic refrigerator (M1) performs the first modulation action. The second magnetic refrigerator (M2) does not substantially operate. The conveying mechanism (20) performs the first conveying action. The controller (100) closes the first control valve (64), the second control valve (66), and the fourth control valve (70), and opens the third control valve (68).

In the first bypass heating action, the heating medium flowing through the second channel (50) bypasses the second magnetic refrigerator (M2). Specifically, the heating medium in the second upstream path (51) flows through the third bypass channel (67), the second intermediate path (52), and the first magnetic refrigerator (M1) in this order. The heating medium heated in the first magnetic refrigerator (M1) flows through the second downstream path (53) and dissipates heat to the air in the second heat exchanger (32).

In the first bypass heating action, the third control valve (68) is open, and the heating medium in the second upstream path (51) hardly flows through the second magnetic refrigerator (M2). This is because the internal channel (13) of the second magnetic refrigerator (M2) is filled with the magnetic working substance (11), and has an extremely high flow resistance.

<Second Bypass Heating Action>

In the second bypass heating action shown in FIG. 8, the magnetic field modulator (12) of the second magnetic refrigerator (M2) performs the first modulation action. The first magnetic refrigerator (M1) does not substantially operate. The conveying mechanism (20) performs the first conveying action. The controller (100) closes the first control valve (64), the second control valve (66), and the third control valve (68), and opens the fourth control valve (70).

In the second bypass heating action, the heating medium flowing through the second channel (50) bypasses the first magnetic refrigerator (M1). Specifically, the heating medium in the second upstream path (51) is heated in the second magnetic refrigerator (M2), flows through the second intermediate path (52), the fourth bypass channel (69), and the second downstream path (53), and dissipates heat to the air in the second heat exchanger (32).

In the second bypass heating action, the fourth control valve (70) is open, and the heating medium in the second intermediate path (52) hardly flows through the first magnetic refrigerator (M1). This is because the internal channel (13) of the first magnetic refrigerator (M1) is filled with the magnetic working substance (11), and has an extremely high flow resistance.

<First Bypass Cooling Action>

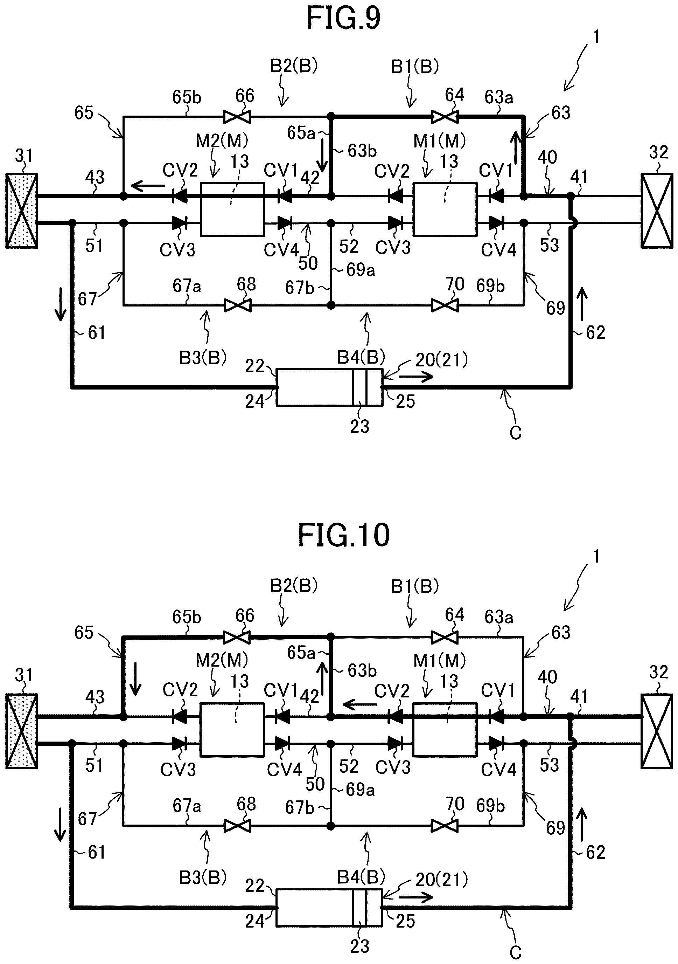

In the first bypass cooling action shown in FIG. 9, the magnetic field modulator (12) of the second magnetic refrigerator (M2) performs the second modulation action. The first magnetic refrigerator (M1) is substantially stopped. The conveying mechanism (20) performs the second conveying action. The controller (100) closes the second control valve (66), the third control valve (68), and the fourth control valve (70), and opens the first control valve (64).

In the first bypass cooling action, the heating medium flowing through the first channel (40) bypasses the first magnetic refrigerator (M1). Specifically, the heating medium in the first upstream path (41) flows through the first bypass channel (63), the first intermediate path (42), and the second magnetic refrigerator (M2) in this order. The heating medium cooled in the second magnetic refrigerator (M2) flows through the first downstream path (43) and absorbs heat from the air in the first heat exchanger (31).

In the first bypass cooling action, the first control valve (64) is open, and the heating medium in the first upstream path (41) hardly flows through the first magnetic refrigerator (M1). This is because the internal channel (13) of the first magnetic refrigerator (M1) is filled with the magnetic working substance (11), and has an extremely high flow resistance.

<Second Bypass Cooling Action>

In the second bypass cooling action shown in FIG. 10, the magnetic field modulator (12) of the first magnetic refrigerator (M1) performs the second modulation action. The second magnetic refrigerator (M2) is substantially stopped. The conveying mechanism (20) performs the second conveying action. The controller (100) closes the first control valve (64), the third control valve (68), and the fourth control valve (70), and opens the second control valve (66).

In the second bypass cooling action, the heating medium flowing through the first channel (40) bypasses the second magnetic refrigerator (M2). Specifically, the heating medium in the first upstream path (41) is cooled in the first magnetic refrigerator (M1), flows through the first intermediate path (42), the second bypass channel (65), and the first downstream path (43), and absorbs heat from the air in the first heat exchanger (31).

In the second bypass cooling action, the second control valve (66) is open, and the heating medium in the first intermediate path (42) hardly flows through the second magnetic refrigerator (M2). This is because the internal channel (13) of the second magnetic refrigerator (M2) is filled with the magnetic working substance (11), and has an extremely high flow resistance.

-Advantages of First Embodiment-

The first embodiment provides the following advantages and effects.

<Bypass Mechanism>

The magnetic refrigeration apparatus (1) includes the bypass mechanism (B) that switches between the channel where the heating medium flows through the magnetic refrigerator (M) and the channel where the heating medium bypasses the magnetic refrigerator (M). Thus, the heating medium is not heated in a certain magnetic refrigerator (M) in the heating action, making the entire heating capacity of the magnetic refrigeration apparatus (1) adjustable. The heating medium is not cooled in a certain magnetic refrigerator (M) in the cooling action, making the entire cooling capacity of the magnetic refrigeration apparatus (1) adjustable.

In the magnetic refrigeration apparatus (1), the bypass mechanism (B) is provided for each of the magnetic refrigerators (M) in both of the first channel (40) and the second channel (50). Specifically, the first channel (40) is provided with the first bypass mechanism (B1) corresponding to the first magnetic refrigerator (M1). The first channel (40) is provided with the second bypass mechanism (B2) corresponding to the second magnetic refrigerator (M2). The second channel (50) is provided with the third bypass mechanism (B3) corresponding to the second magnetic refrigerator (M2). The second channel (50) is provided with the fourth bypass mechanism (B4) corresponding to the first magnetic refrigerator (M1). Thus, in the heating action, switching is appropriately made between the normal heating action, the first bypass heating action, and the second bypass heating action described above. This allows fine control of the entire heating capacity of the magnetic refrigeration apparatus (1). In the cooling action, switching is appropriately made between the normal cooling action, the first bypass cooling action, and the second bypass cooling action described above. This allows fine control of the entire cooling capacity of the magnetic refrigeration apparatus (1).

<First Channel and Second Channel>

When the bypass mechanisms (B) are provided, the heating medium may accumulate in the bypass channels (63, 65, 67, 69). Specifically, for example, in the second bypass heating action shown in FIG. 8, a relatively high-temperature heating medium accumulates in the fourth bypass channel (69). If the normal cooling action shown in FIG. 6 is performed in this state, for example, the heating medium flows through the first channel (40) without passing through the second channel (50). Thus, in the normal cooling action, the heating medium supplied to the first heat exchanger (31) is not mixed with the heating medium accumulated in the fourth bypass channel (69). This can reduce the heat loss resulting from the mixing of the heating media.

Likewise, in the second bypass cooling action shown in FIG. 10, for example, a relatively low-temperature heating medium accumulates in the second bypass channel (65). If the normal heating action shown in FIG. 5 is performed in this state, for example, the heating medium flows through the second channel (50) without passing through the first channel (40). Thus, in the normal heating action, the heating medium supplied to the second heat exchanger (32) is not mixed with the heating medium accumulated in the second bypass channel (65). This can reduce the heat loss resulting from the mixing of the heating media.

<Curie Temperature>

In the first channel (40) and the second channel (50), the magnetic refrigerators (M) (two magnetic refrigerators in this example) are connected in series with the magnetic refrigerators (M) being arranged in an ascending order of the average values of the Curie temperatures. Specifically, as illustrated in FIG. 3, the average value T2 of the Curie temperatures of all the magnetic working substances (11) of the second magnetic refrigerator (M2) is greater than the average value T1 of the Curie temperatures of all the magnetic working substances (11) of the first magnetic refrigerator (M1). In the normal heating action, the heating medium in the second channel (50) flows through the second magnetic refrigerator (M2) and the first magnetic refrigerator (M1) in this order, bringing the temperature of the heating medium flowing through the magnetic refrigerators (M) closer to the average value of the Curie temperatures of the magnetic refrigerators (M). This can increase the magnetocaloric effect of the magnetic refrigerators (M), increasing the heating capacity.

In the cooling action, the heating medium in the first channel (40) flows through the first magnetic refrigerator (M1) and the second magnetic refrigerator (M2) in this order, bringing the temperature of the heating medium flowing through the magnetic refrigerators (M) closer to the average value of the Curie temperature of the magnetic refrigerators (M). This can increase the magnetocaloric effect of the magnetic refrigerators (M), increasing the cooling capacity.

Each of the magnetic refrigerators (M) is a cascaded magnetic refrigerator including different types of magnetic working substances (11) arranged from the low-temperature end to the high-temperature end of the magnetic refrigerator (M) in an ascending order of the Curie temperature. Thus, in the heating action, the heating medium in the second channel (50) sequentially flows from the low-temperature end to the high-temperature end of each magnetic refrigerator (M), bringing the temperature of the heating medium flowing through the magnetic working substances (11) closer to the Curie temperatures of the magnetic working substances (11). This can increase the magnetocaloric effect of the magnetic working substances (11), increasing the heating capacity.

In the cooling action, the heating medium in the first channel (40) sequentially flows from the high-temperature end to the low-temperature end of each of the magnetic working substances (11), bringing the temperature of the heating medium flowing through the magnetic working substances (11) closer to the Curie temperatures of the magnetic working substances (11). This can increase the magnetocaloric effect of the magnetic working substances (11), increasing the cooling capacity.

<Operating Temperature Range>

As illustrated in FIG. 4, the operating temperature ranges of the first magnetic refrigerator (M1) and the second magnetic refrigerator (M2) adjacent to each other partially overlap each other. Specifically, the maximum value Ep of the magnetocaloric effect in the overlapping area A of the operating temperature ranges of the magnetic working substances (11c, 11d) at the adjacent ends of the magnetic refrigerators (M) is equal to or more than 1/2 of the average value Eave of the maximum values of the magnetocaloric effect of the magnetic working substances (11c, 11d) at the adjacent ends of the magnetic refrigerators (M). Thus, the temperature of the heating medium can be kept from deviating from the operating temperature ranges of the magnetic refrigerators (M) in spite of the temperature change of the heating medium caused by the switching from the normal action (in which the heating medium flows through the magnetic refrigerators (M)) to the bypass action.

Specifically, for example, assume that the first bypass heating action shown in FIG. 7 is performed after the normal heating action shown in FIG. 5 and the subsequent predetermined cooling action. In this case, the heating medium in the second channel (50) bypasses the second magnetic refrigerator (M2) and flows through the first magnetic refrigerator (M1). Thus, the temperature of the heating medium flowing through the first magnetic refrigerator (M1) during the first bypass heating action is lower than the temperature of the heating medium flowing through the first magnetic refrigerator (M1) during the normal heating action. On the other hand, the operating temperature range of the fourth magnetic working substance (11d) of the first magnetic refrigerator (M1) overlaps with the operating temperature range of the third magnetic working substance (11c) of the second magnetic refrigerator (M2). Thus, the temperature of the heating medium flowing through the first magnetic refrigerator (M1) can be kept from deviating from the operating temperature range during the first bypass heating action. In particular, in this embodiment, the operating temperature ranges of the first magnetic refrigerator (M1) and the second magnetic refrigerator (M2) overlap each other to meet the relationship of $Ep \geq ((Em1+Em2)/2) \times (1/2)$. This can sufficiently keep the temperature of the heating medium flowing through the first magnetic refrigerator (M1) from deviating from the operating temperature range during the first bypass heating action.

Likewise, for example, assume that the first bypass cooling action shown in FIG. 9 is performed after the normal cooling action shown in FIG. 6 and the subsequent predetermined heating action. In this case, the heating medium in the first channel (40) bypasses the first magnetic refrigerator (M1) and flows through the second magnetic refrigerator (M2). Thus, the temperature of the heating medium flowing through the second magnetic refrigerator (M2) during the first bypass cooling action is higher than the temperature of the heating medium flowing through the first magnetic refrigerator (M1) during the normal cooling action. On the other hand, the operating temperature range of the third magnetic working substance (11c) of the second magnetic refrigerator (M2) overlaps with the operating temperature range of the fourth magnetic working substance (11d) of the first magnetic refrigerator (M1). Thus, the temperature of the heating medium flowing through the second magnetic refrigerator (M2) can be kept from deviating from the operating temperature range during the first bypass cooling action. In particular, in this embodiment, the operating temperature ranges of the first magnetic refrigerator (M1) and the second magnetic refrigerator (M2) overlap each other to meet the relationship of $Ep \geq ((Em1 + Em2)/2) \times (1/2)$. This can sufficiently keep the temperature of the heating medium flowing through the second magnetic refrigerator (M2) from deviating from the operating temperature range during the first bypass cooling action.

Further, this configuration can keep the temperature of the heating medium from deviating from the operating temperature range of the magnetic refrigerator (M) in spite of the temperature change of the heating medium flowing through a certain magnetic refrigerator (M) caused by the switching from the bypass action to the normal action.

«Second Embodiment»

A magnetic refrigeration apparatus (1) of the second embodiment is different from the magnetic refrigeration apparatus of the first embodiment in the configuration of the magnetic refrigerators (M).

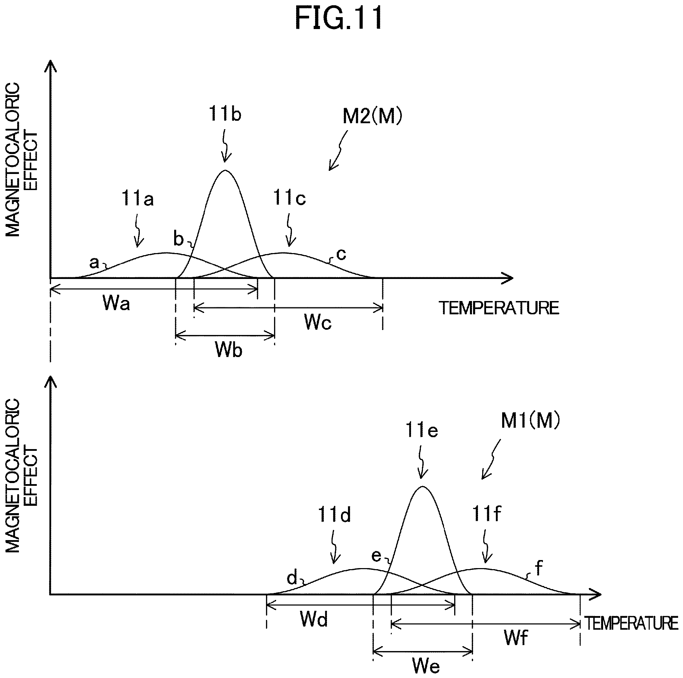

As illustrated in FIG. 11, the first magnetic refrigerator (M1) and the second magnetic refrigerator (M2) are cascaded magnetic refrigerators. In the second embodiment, the magnetic working substances (11) of the first magnetic refrigerator (M1) and the second magnetic refrigerator (M2) have different characteristics. Among the different types (three types in this example) of magnetic working substances (11) in each magnetic refrigerator (M), the magnetic working substances (11a, 11c, 11d, 11f) have wider operating temperature ranges than the magnetic working substances (11b, 11e).

Specifically, in the second magnetic refrigerator (M2), the operating temperature range Wa of the first magnetic working substance (11a) is wider than the operating temperature range Wb of the second magnetic working substance (11b). The operating temperature range Wc of the third magnetic working substance (11c) is wider than the operating temperature range Wb of the second magnetic working substance (11b).

The third magnetic working substance (11c) of the second magnetic refrigerator (M2) is an endmost magnetic working substance located at one of ends of the second magnetic refrigerator (M2) facing the adjacent magnetic refrigerator (first magnetic refrigerator (M1)). The second magnetic working substance (11b) of the second magnetic refrigerator (M2) is an intermediate magnetic working substance located in an intermediate portion between the ends of the second magnetic refrigerator (M2).

In the first magnetic refrigerator (M1), the operating temperature range Wd of the fourth magnetic working substance (11d) is wider than the operating temperature range We of the fifth magnetic working substance (11e). The operating temperature range Wf of the sixth magnetic working substance (11f) is wider than the operating temperature range We of the fifth magnetic working substance (11e).

The fourth magnetic working substance (11d) of the first magnetic refrigerator (M1) is an endmost magnetic working substance located at one of ends of the first magnetic refrigerator (M1) facing the adjacent magnetic refrigerator (second magnetic refrigerator (M2)). The fifth magnetic working substance (11e) of the first magnetic refrigerator (M1) is an intermediate magnetic working substance located in an intermediate portion between the ends of the first magnetic refrigerator (M1).

When the endmost magnetic working substances (11c, 11d) have wider operating temperature ranges than the intermediate magnetic working substances (11b, 11e), the temperature of the heating medium can be kept from deviating from the operating temperature range of the magnetic refrigerator (M) during the bypass action.

Specifically, for example, assume that the first bypass heating action shown in FIG. 7 is performed after the normal heating action shown in FIG. 5 and the subsequent predetermined cooling action. In this case, as described above, the temperature of the heating medium flowing through the first magnetic refrigerator (M1) is lower than the temperature of the heating medium flowing through the first magnetic refrigerator (M1) during the normal heating action. On the other hand, the fourth magnetic working substance (11d) of the first magnetic refrigerator (M1) has a relatively wide operating temperature range. Thus, the temperature of the heating medium flowing through the first magnetic refrigerator (M1) can be kept from deviating from the operating temperature range during the first bypass heating action.

Likewise, for example, assume that the first bypass cooling action shown in FIG. 9 is performed after the normal cooling action shown in FIG. 6 and the subsequent predetermined heating action. In this case, as described above, the temperature of the heating medium flowing through the second magnetic refrigerator (M2) during the first bypass cooling action is higher than the temperature of the heating medium flowing through the first magnetic refrigerator (M1) during the normal cooling action. On the other hand, the third magnetic working substance (11c) of the second magnetic refrigerator (M2) has a relatively wide operating temperature range. Thus, the temperature of the heating medium flowing through the second magnetic refrigerator (M2) can be kept from deviating from the operating temperature range during the first bypass cooling action.

Further, this configuration can keep the temperature of the heating medium from deviating from the operating temperature range of the magnetic refrigerator (M) in spite of the temperature change of the heating medium flowing through a certain magnetic refrigerator (M) caused by the switching from the bypass action to the normal action.

In this example, the operating temperature range Wa of the first magnetic working substance (11a) may be equal to or narrower than the operating temperature range Wb of the second magnetic working substance (11b). The operating temperature range Wf of the sixth magnetic working substance (11f) may be equal to or narrower than the operating temperature range We of the fifth magnetic working substance (11e).

In this example, the magnetic refrigerator (M) may have a plurality of intermediate magnetic working substances. In this case, the operating temperature range of the endmost magnetic working substance may be wider than the operating temperature range of at least one of the plurality of intermediate magnetic working substances. Preferably, the operating temperature range of the endmost magnetic working substance is wider than the operating temperature ranges of all the intermediate magnetic working substances.

«Variation of Second Embodiment»

In a variation of the second embodiment, the magnetic refrigerators (M) are configured differently from the magnetic refrigerators (M) of the second embodiment. The magnetic refrigerators (M) according to the variation of the second embodiment are cascaded magnetic refrigerators. In each magnetic refrigerator (M), the maximum value of the magnetocaloric effect of the endmost magnetic working substance (11c, 11d) is greater than the maximum value of the magnetocaloric effect of the intermediate magnetic working substance (11b, 11e). Specifically, the maximum value of the magnetocaloric effect of the third magnetic working substance (11c) is greater than the maximum value of the magnetocaloric effect of the second magnetic working substance (11b). The maximum value of the magnetocaloric effect of the fourth magnetic working substance (11d) is greater than the maximum value of the magnetocaloric effect of the fifth magnetic working substance (11e).

When the maximum value of the magnetocaloric effect of the endmost magnetic working substance (11c, 11d) is made larger than the maximum value of the magnetocaloric effect of the intermediate magnetic working substance (11b, 11e), the temperature of the heating medium can be kept from deviating from the operating temperature range of the magnetic refrigerator (M) during the bypass action.

Specifically, for example, assume that the first bypass heating action shown in FIG. 7 is performed after the normal heating action shown in FIG. 5 and the subsequent predetermined cooling action. In this case, as described above, the temperature of the heating medium flowing through the first magnetic refrigerator (M1) is lower than the temperature of the heating medium flowing through the first magnetic refrigerator (M1) during the normal heating action. On the other hand, the fourth magnetic working substance (11d) of the first magnetic refrigerator (M1) has a relatively large magnetocaloric effect, and thus, can sufficiently heat the heating medium. As a result, the temperature of the heating medium flowing through the first magnetic refrigerator (M1) can be kept from deviating from the operating temperature range of the first magnetic refrigerator (M1).

For example, assume that the first bypass cooling action shown in FIG. 9 is performed after the normal cooling action shown in FIG. 6 and the subsequent predetermined heating action. In this case, as described above, the temperature of the heating medium flowing through the second magnetic refrigerator (M2) is higher than the temperature of the heating medium flowing through the second magnetic refrigerator (M2) during the normal cooling action. On the other hand, the third magnetic working substance (11c) of the second magnetic refrigerator (M2) has a relatively large magnetocaloric effect, and thus, can sufficiently cool the heating medium. As a result, the temperature of the heating medium flowing through the second magnetic refrigerator (M2) can be kept from deviating from the operating temperature range of the second magnetic refrigerator (M2).

Further, this configuration can keep the temperature of the heating medium from deviating from the operating temperature range of the magnetic refrigerator (M) in spite of the temperature change of the heating medium flowing through a certain magnetic refrigerator (M) caused by the switching from the bypass action to the normal action.

Specific examples of how the maximum value of the magnetocaloric effect of the endmost magnetic working substance (11c, 11d) is made larger than the maximum value of the magnetocaloric effect of the intermediate magnetic working substance (11b, 11e) in each magnetic refrigerator (M) are described below.

(1) Amount of Change in Magnetic Flux Density

The amount of change in magnetic flux density of the endmost magnetic working substance (11c, 11d) is made larger than the amount of change in magnetic flux density of the intermediate magnetic working substance (11b, 11e). This can make the maximum value of the magnetocaloric effect of the endmost magnetic working substance (11c, 11d) greater than the maximum value of the magnetocaloric effect of the intermediate magnetic working substance (11b, 11e).

(2) Adiabatic Temperature Change ΔTad of Magnetic Working Substance

An adiabatic temperature change ΔTad of the endmost magnetic working substance (11c, 11d) is made larger than an adiabatic temperature change ΔTad of the intermediate magnetic working substance (11b, 11e). This can make the maximum value of the magnetocaloric effect of the endmost magnetic working substance (11c, 11d) greater than the maximum value of the magnetocaloric effect of the intermediate magnetic working substance (11b, 11e).

(3) Entropy Change ΔSm of Magnetic Working Substance

An entropy change ΔSm of the endmost magnetic working substance (11c, 11d) is made larger than an entropy change ΔSm of the intermediate magnetic working substance (11b, 11e). This can make the maximum value of the magnetocaloric effect of the endmost magnetic working substance (11c, 11d) greater than the maximum value of the magnetocaloric effect of the intermediate magnetic working substance (11b, 11e).

4) Weight of Magnetic Working Substance

The endmost magnetic working substance (11c, 11d) is provided with a higher weight than the intermediate magnetic working substance (11b, 11e). This can make the maximum value of the magnetocaloric effect of the endmost magnetic working substance (11c, 11d) greater than the maximum value of the magnetocaloric effect of the intermediate magnetic working substance (11b, 11e).

Examples of how the weight of the endmost magnetic working substance (11c, 11d) is made higher than the weight of the intermediate magnetic working substance (11b, 11e) are described below.

(4-1) Filling Factor of Magnetic Working Substance

The filling factor of the endmost magnetic working substance (11c, 11d) in the bed (10) is made higher than the filling factor of the intermediate magnetic working substance (11b, 11e) in the bed (10). This can make the weight of the endmost magnetic working substance (11c, 11d) higher than the weight of the intermediate magnetic working substance (11b, 11e).

(4-2) Volume of Magnetic Working Substance

The volume of the endmost magnetic working substance (11c, 11d) in the bed (10) is made higher than the volume of the intermediate magnetic working substance (11b, 11e) in the bed (10). This can make the weight of the endmost magnetic working substance (11c, 11d) higher than the weight of the intermediate magnetic working substance (11b, 11e). The volume mentioned herein is strictly a "bulk volume" including voids formed in the magnetic working substance (11).

«Third Embodiment»

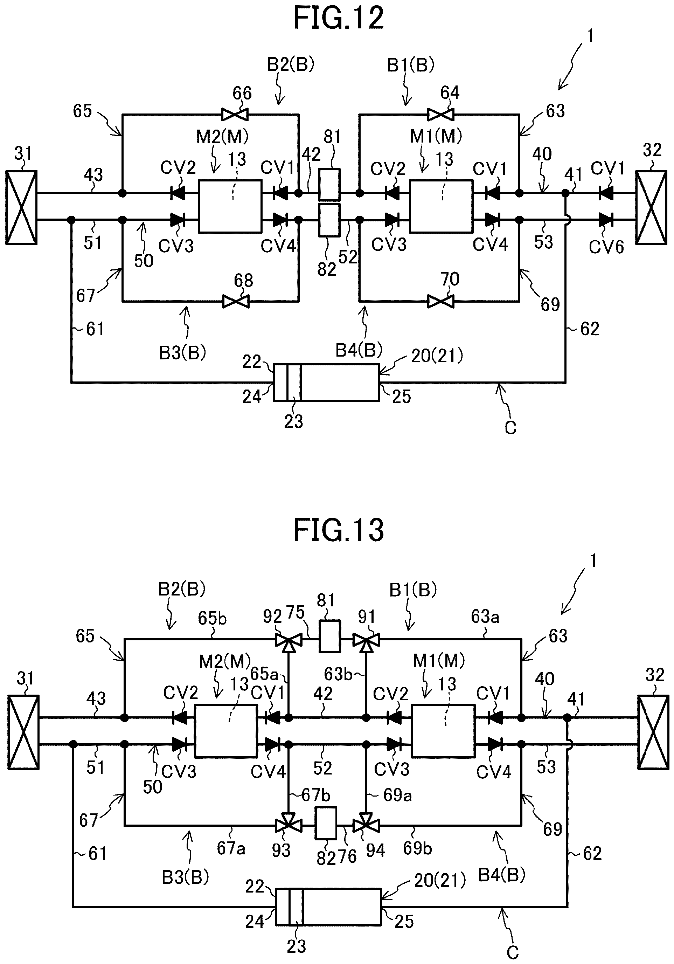

A magnetic refrigeration apparatus (1) shown in FIG. 12 includes two thermal storage sections (81, 82). The two thermal storage sections (81, 82) include a first thermal storage section (81) connected to the first channel (40) and a second thermal storage section (82) connected to the second channel (50). Each thermal storage section (81, 82) is comprised of a reservoir (thermal storage container) for storing the heating medium.

The first thermal storage section (81) is provided in the first intermediate path (42) of the first channel (40). The first thermal storage section (81) is provided in the first intermediate path (42) between the outlet end of the first bypass channel (63) and the inlet end of the second bypass channel (65). The first thermal storage section (81) stores heat of the heating medium having flowed through the first bypass channel (63). The second thermal storage section (82) is provided in the second intermediate path (52) of the second channel (50). The second thermal storage section (82) is provided in the second intermediate path (52) between the outlet end of the third bypass channel (67) and the inlet end of the fourth bypass channel (69).

The thermal storage sections (81, 82) provided in this manner can keep the temperature of the heating medium flowing through the magnetic refrigerator (M) from deviating from the operating temperature range of the magnetic refrigerator (M) during the bypass action.

When the normal heating action is switched to the first bypass heating action, a relatively low-temperature heating medium flows through the second intermediate path (52) via the third bypass channel (67). The heating medium in the second intermediate path (52) flows into the second thermal storage section (82).

The second thermal storage section (82) contains the heating medium heated in the second magnetic refrigerator (M2) in the last normal heating action. This raises the temperature of the heating medium that has flowed into the second thermal storage section (82) via the third bypass channel (67). Thus, the temperature of the heating medium flowing through the first magnetic refrigerator (M1) is higher than the temperature of the heating medium flowing through the second bypass channel (65). This can keep the temperature of the heating medium flowing through the first magnetic refrigerator (M1) from deviating from the operating temperature range of the first magnetic refrigerator (M1).

When the normal cooling action is switched to the first bypass cooling action, a relatively high-temperature heating medium flows through the first intermediate path (42) via the first bypass channel (63). The heating medium in the first intermediate path (42) flows into the first thermal storage section (81).

The first thermal storage section (81) contains the heating medium cooled in the first magnetic refrigerator (M1) in the last normal cooling action. This lowers the temperature of the heating medium that has flowed into the first thermal storage section (81) via the first bypass channel (63). Thus, the temperature of the heating medium flowing through the second magnetic refrigerator (M2) is lower than the temperature of the heating medium flowing through the first bypass channel (63). This can keep the temperature of the heating medium flowing through the second magnetic refrigerator (M2) from deviating from the operating temperature range of the second magnetic refrigerator (M2).

Further, this configuration can keep the temperature of the heating medium from deviating from the operating temperature range of the magnetic refrigerator (M) in spite of the temperature change of the heating medium flowing through a certain magnetic refrigerator (M) caused by the switching from the bypass action to the normal action.

«First Variation of Third Embodiment»

A magnetic refrigeration apparatus (1) according to a first variation of the third embodiment shown in FIG. 13 has the thermal storage sections (81, 82) and the peripheral components configured differently from those of the magnetic refrigeration apparatus (1) of the third embodiment.

The heating medium circuit (C) includes a first three-way valve (91), a second three-way valve (92), a third three-way valve (93), and a fourth three-way valve (94) connected thereto. Each of the three-way valves (91, 92, 93, 94) has three ports. Each of the three ports is configured to be openable and closable.

The first upstream portion (63a), the first downstream portion (63b), and a first thermal storage channel (75) are connected to the first three-way valve (91). The second upstream portion (65a), the second downstream portion (65b), and the first thermal storage channel (75) are connected to the second three-way valve (92). The third upstream portion (67a), the third downstream portion (67b), and a second thermal storage channel (76) are connected to the third three-way valve (93). The fourth upstream portion (69a), the fourth downstream portion (69b), and the second thermal storage channel (76) are connected to the fourth three-way valve (94).

In the normal heating action, the third three-way valve (93) closes the port to the third upstream portion (67a) and the port to the third downstream portion (67b).

The fourth three-way valve (94) closes the port to the fourth upstream portion (69a). The heating medium in the second channel (50) flows through the second magnetic refrigerator (M2) and the first magnetic refrigerator (M1) in this order. This heating medium does not flow through the second thermal storage section (82). Thus, at the start of the normal heating action, for example, this configuration can keep the thermal capacity of the second thermal storage section (82) from affecting smooth increase in the heat dissipation capacity of the second heat exchanger (32).

In the first bypass heating action, the third three-way valve (93) opens the port to the third upstream portion (67a) and the port to the second thermal storage channel (76), and closes the port to the third downstream portion (67b). The fourth three-way valve (94) opens the port to the second thermal storage channel (76) and the port to the fourth upstream portion (69a), and closes the port to the fourth downstream portion (69b). The relatively low-temperature heating medium in the second channel (50) flows through the third upstream portion (67a), the second thermal storage section (82) of the second thermal storage channel (76), and the fourth upstream portion (69a) in this order, and then flows through the first magnetic refrigerator (M1). The temperature of the heating medium flowing through the first magnetic refrigerator (M1) can be kept from suddenly dropping due to the effect of the thermal capacity of the second thermal storage section (82). This can keep the temperature of the heating medium flowing through the first magnetic refrigerator (M1) from deviating from the operating temperature range of the first magnetic refrigerator (M1).

In the normal cooling action, the first three-way valve (91) closes the port to the first upstream portion (63a) and the port to the first downstream portion (63b). The second three-way valve (92) closes the port to the second upstream portion (65a). The heating medium in the first channel (40) flows through the first magnetic refrigerator (M1) and the second magnetic refrigerator (M2) in this order. This heating medium does not flow through the first thermal storage section (81). Thus, at the start of the normal cooling action, for example, this configuration can keep the thermal capacity of the first thermal storage section (81) from affecting smooth increase in the cooling capacity of the first heat exchanger (31).

In the first bypass cooling action, the first three-way valve (91) opens the port to the first upstream portion (63a) and the port to the first thermal storage channel (75), and closes the port to the first downstream portion (63b). The second three-way valve (92) opens the port to the first thermal storage channel (75) and the port to the second upstream portion (65a), and closes the port to the second downstream portion (65b). The relatively high-temperature heating medium in the first channel (40) flows through the first upstream portion (63a), the first thermal storage section (81) of the first thermal storage channel (75), and the second upstream portion (65a) in this order, and then flows through the second magnetic refrigerator (M2). The temperature of the heating medium flowing through the second magnetic refrigerator (M2) can be kept from suddenly increasing due to the effect of the thermal capacity of the first thermal storage section (81). This can keep the temperature of the heating medium flowing through the second magnetic refrigerator (M2) from deviating from the operating temperature range of the first magnetic refrigerator (M1).

Further, this configuration can keep the temperature of the heating medium from deviating from the operating temperature range of the magnetic refrigerator (M) in spite of the temperature change of the heating medium flowing through a certain magnetic refrigerator (M) caused by the switching from the bypass action to the normal action.

«Second Variation of Third Embodiment»

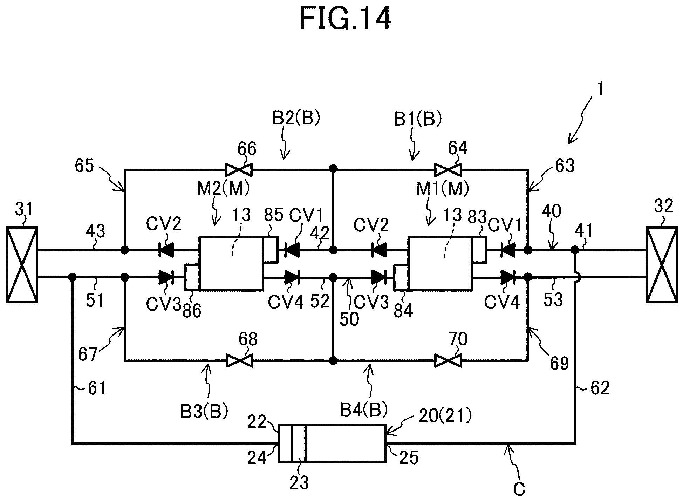

A magnetic refrigeration apparatus (1) according to a second variation of the third embodiment shown in FIG. 14 has the thermal storage sections and the peripheral components configured differently from those of the magnetic refrigeration apparatus (1) of the third embodiment.

The first magnetic refrigerator (M1) is provided with a first thermal storage unit (83) and a second thermal storage unit (84). The first thermal storage unit (83) and the second thermal storage unit (84) are configured as reservoirs. The first thermal storage unit (83) is provided at an inlet of the first magnetic refrigerator (M1) connected to the first channel (40). The second thermal storage unit (84) is provided at an inlet of the first magnetic refrigerator (M1) connected to the second channel (50).

The second magnetic refrigerator (M2) is provided with a third thermal storage unit (85) and a fourth thermal storage unit (86). The third thermal storage unit (85) and the fourth thermal storage unit (86) are configured as reservoirs. The third thermal storage unit (85) is provided at an inlet of the second magnetic refrigerator (M2) connected to the first channel (40). The fourth thermal storage unit (86) is provided at an inlet of the second magnetic refrigerator (M2) connected to the second channel (50).

The second thermal storage unit (84) and the third thermal storage unit (85) correspond to the thermal storage sections. Note that the first thermal storage unit (83) and the fourth thermal storage unit (86) may be omitted.

When the normal heating action is switched to the first bypass heating action, a relatively low-temperature heating medium flows through the second intermediate path (52) via the third bypass channel (67). The heating medium in the second intermediate path (52) passes through the second thermal storage unit (84), and then flows through the first magnetic refrigerator (M1). Thus, the temperature of the heating medium flowing through the first magnetic refrigerator (M1) can be kept from deviating from the operating temperature range of the first magnetic refrigerator (M1).

When the normal cooling action is switched to the first bypass cooling action, a relatively high-temperature heating medium flows through the first intermediate path (42) via the first bypass channel (63). The heating medium in the first intermediate path (42) passes through the third thermal storage unit (85), and then flows through the second magnetic refrigerator (M2). Thus, the temperature of the heating medium flowing through the second magnetic refrigerator (M2) can be kept from deviating from the operating temperature range of the second magnetic refrigerator (M2).

Further, this configuration can keep the temperature of the heating medium from deviating from the operating temperature range of the magnetic refrigerator (M) in spite of the temperature change of the heating medium flowing through a certain magnetic refrigerator (M) caused by the switching from the bypass action to the normal action (in which the heating medium flows through the magnetic refrigerator (M)).

The thermal storage section according to the third embodiment and the variations described above may be a thermal storage material. The thermal storage material is made of a metal material having a large thermal capacity or a phase change material. A channel through which the heating medium flows is formed in the thermal storage material. Heat is exchanged between the heating medium flowing through the channel and the thermal storage material.

The thermal storage section may be a thermal storage unit including the thermal storage material provided in a reservoir storing the heating medium.

«Fourth Embodiment»

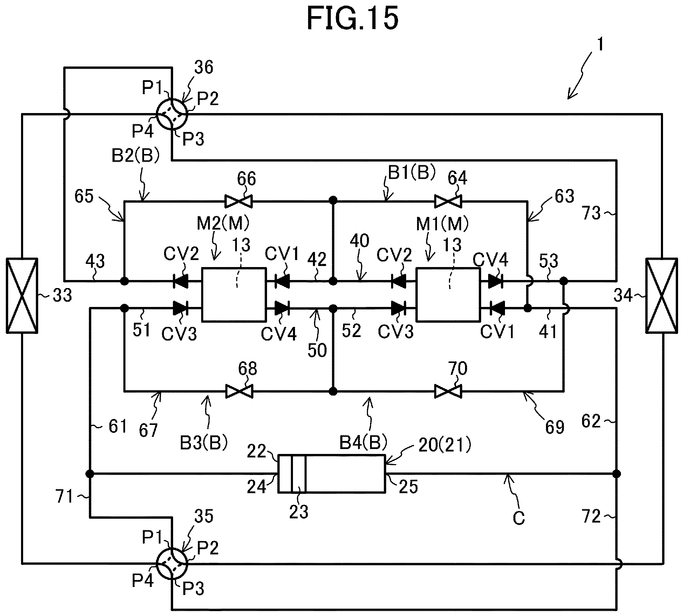

A magnetic refrigeration apparatus (1) of a fourth embodiment switches between a cooling operation and a heating operation. As illustrated in FIG. 15, the heating medium circuit (C) of the magnetic refrigeration apparatus (1) includes an indoor heat exchanger (33), an outdoor heat exchanger (34), a first four-way switching valve (35), and a second four-way switching valve (36). The indoor heat exchanger (33) is placed inside. The outdoor heat exchanger (34) is placed outside.

Each of the first and second four-way switching valves (35) and (36) has four ports (PI, P2, P3, P4). The first port (P1) of the first four-way switching valve (35) is connected to the first conveying channel (61) through a first relay path (71). The second port (P2) of the first four-way switching valve (35) is connected to one end of the outdoor heat exchanger (34). The third port (P3) of the first four-way switching valve (35) is connected to the second conveying channel (62) through a second relay path (72). The fourth port (P4) of the first four-way switching valve (35) is connected to one end of the indoor heat exchanger (33). The outlet end of the second conveying channel (62) is connected to the first upstream path (41).

The first port (P1) of the second four-way

switching valve (36) is connected to the first downstream path (43) of the first channel (40). The second port (P2) of the second four-way switching valve (36) is connected to the other end of the outdoor heat exchanger (34). The third port (P3) of the second four-way switching valve (36) is connected to the second downstream path (53) of the second channel (50) through a third relay path (73). The fourth port (P4) of the second four-way switching valve (36) is connected to the other end of the indoor heat exchanger (33).

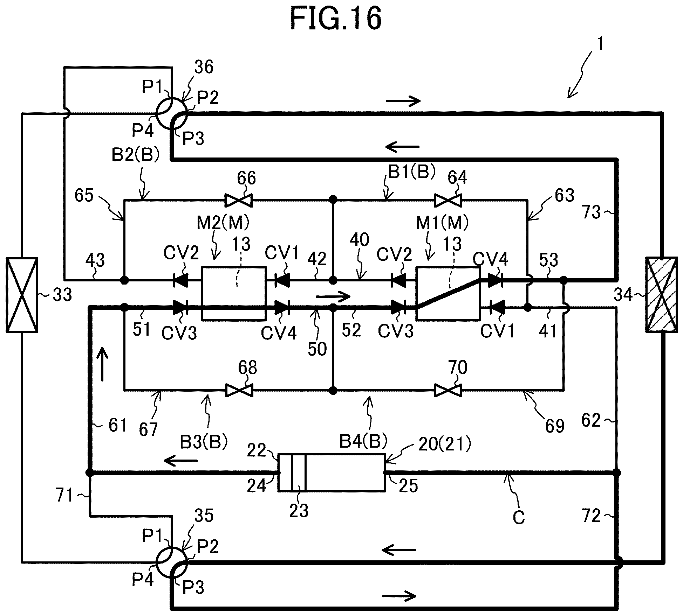

Each of the first four-way switching valve (35) and the second four-way switching valve (36) switches between a first state (a state indicated by solid curves in FIG. 15) and a second state (a state indicated by broken curves in FIG. 16). Each of the four-way switching valves (35, 36) in the first state makes the first port (P1) and the second port (P2) communicate with each other, and the third port (P3) and the fourth port (P4) communicate with each other. Each of the four-way switching valves (35, 36) in the second state makes the first port (P1) and the fourth port (P4) communicate with each other, and the second port (P2) and the third port (P3) communicate with each other.

-Operation-

The operation of the magnetic refrigeration apparatus (1) will be described below.

<Cooling Operation>

In the cooling operation, the first four-way switching valve (35) and the second four-way switching valve (36) are in the second state. In the cooling operation, the first and second actions are alternately repeated.

In the first action shown in FIG. 16, each of the magnetic field modulators (12) of the first and second magnetic refrigerators (M1) and (M2) performs the first modulation action. The conveying mechanism (20) performs the first conveying action. In the first action, normally, the controller (100) closes the first control valve (64), the second control valve (66), the third control valve (68), and the fourth control valve (70).

In the first action, the heating medium heated by each of the first magnetic refrigerator (M1) and the second magnetic refrigerator (M2) in the second channel (50) is supplied to the outdoor heat exchanger (34) corresponding to the second heat exchange section. The heating medium dissipates heat to the outdoor air in the outdoor heat exchanger (34).

When the third control valve (68) is open in the first action, a bypass action is performed in which the heating medium bypasses the second magnetic refrigerator (M2) and is heated in the first magnetic refrigerator (M1). When the fourth control valve (70) is open in the first action, a bypass action is performed in which the heating medium is heated in the second magnetic refrigerator (M2) and bypasses the first magnetic refrigerator (M1).

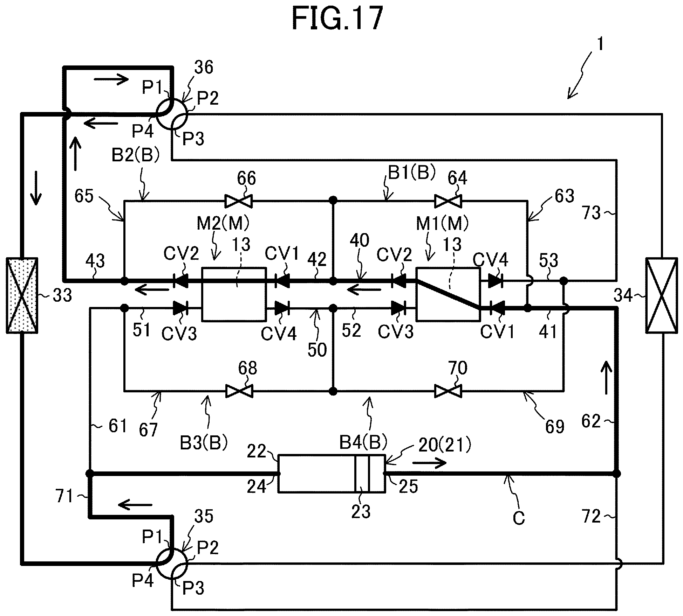

In the second action shown in FIG. 17, each of the magnetic field modulators (12) of the first and second magnetic refrigerators (M1) and (M2) performs the second modulation action. The conveying mechanism (20) performs the second conveying action. In the second action, normally, the controller (100) closes the first control valve (64), the second control valve (66), the third control valve (68), and the fourth control valve (70).

In the second action, the heating medium cooled by each of the first magnetic refrigerator (M1) and the second magnetic refrigerator (M2) in the first channel (40) is supplied to the indoor heat exchanger (33) corresponding to the first heat exchange section. The indoor air is cooled by the heating medium in the indoor heat exchanger (33).

When the first control valve (64) is open in the second action, a bypass action is performed in which the heating medium bypasses the first magnetic refrigerator (M1) and is cooled in the second magnetic refrigerator (M2). When the second control valve (66) is open in the second action, a bypass action is performed in which the heating medium is cooled in the first magnetic refrigerator (M1) and bypasses the second magnetic refrigerator (M2).

<Heating Operation>

In the heating operation, the first four-way switching valve (35) and the second four-way switching valve (36) are in the first state. In the heating operation, the third and fourth actions are alternately and repeatedly performed.

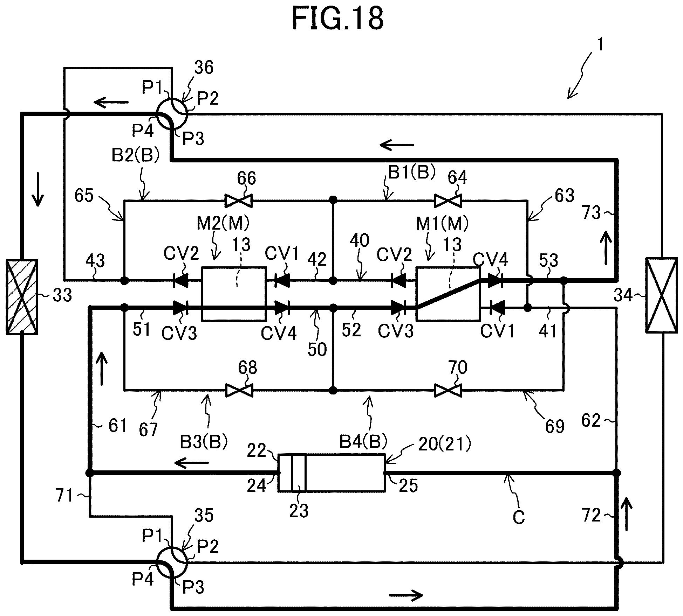

In the third action shown in FIG. 18, each of the magnetic field modulators (12) of the first and second magnetic refrigerators (M1) and (M2) performs the first modulation action. The conveying mechanism (20) performs the first conveying action. In the third action, normally, the controller (100) closes the first control valve (64), the second control valve (66), the third control valve (68), and the fourth control valve (70).

In the third action, the heating medium heated by each of the first magnetic refrigerator (M1) and the second magnetic refrigerator (M2) in the second channel (50) is supplied to the indoor heat exchanger (33) corresponding to the second heat exchange section. The indoor air is heated by the heating medium in the indoor heat exchanger (33).

When the third control valve (68) is open in the third action, a bypass action is performed in which the heating medium bypasses the second magnetic refrigerator (M2) and is heated in the first magnetic refrigerator (M1). When the fourth control valve (70) is open in the third action, a bypass action is performed in which the heating medium is heated in the second magnetic refrigerator (M2) and bypasses the first magnetic refrigerator (M1).

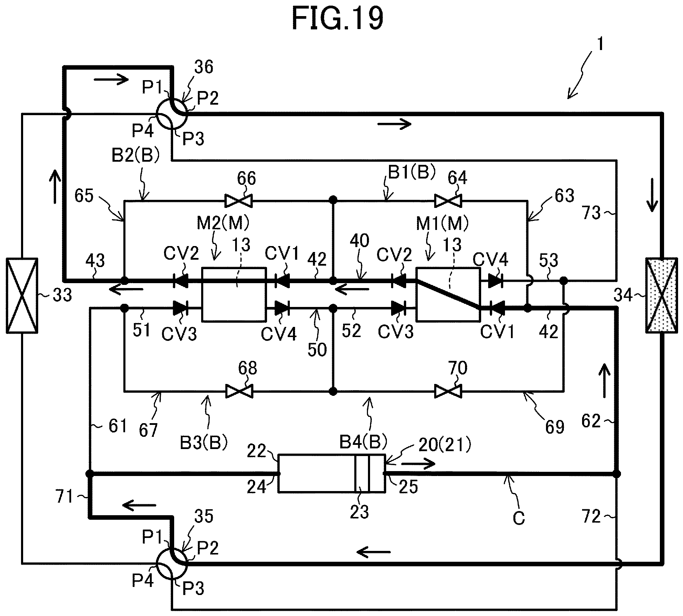

In the fourth action shown in FIG. 19, each of the magnetic field modulators (12) of the first and second magnetic refrigerators (M1) and (M2) performs the second modulation action. The conveying mechanism (20) performs the second conveying action. In the fourth action, normally, the controller (100) closes the first control valve (64), the second control valve (66), the third control valve (68), and the fourth control valve (70).

In the fourth action, the heating medium cooled by each of the first magnetic refrigerator (M1) and the second magnetic refrigerator (M2) in the first channel (40) is supplied to the outdoor heat exchanger (34) corresponding to the first heat exchange section. The heating medium absorbs heat from the outdoor air in the outdoor heat exchanger (34).

When the first control valve (64) is open in the fourth action, a bypass action is performed in which the heating medium bypasses the first magnetic refrigerator (M1) and is cooled in the second magnetic refrigerator (M2). When the second control valve (66) is open in the fourth action, a bypass action is performed in which the heating medium is cooled in the first magnetic refrigerator (M1) and bypasses the second magnetic refrigerator (M2).

«Other Variations»

The embodiments described above may be modified as described in the following variations within an applicable range.

<Variation A - Bypass Mechanism (1)>

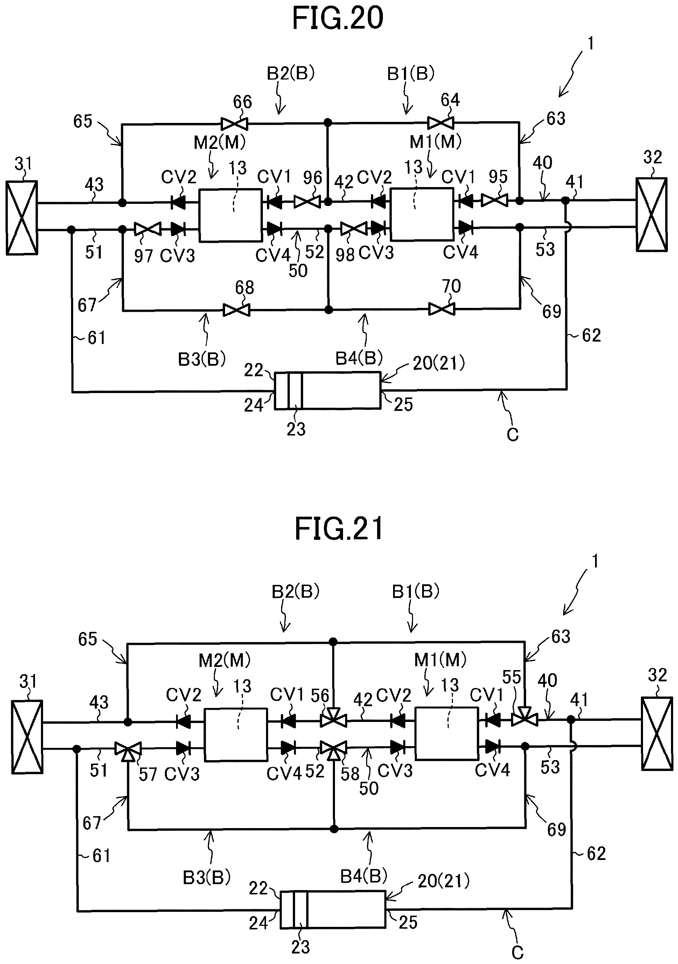

As illustrated in FIG. 20, bypass mechanisms (B) of variation A are obtained by adding control valves to the bypass mechanisms of the embodiments. The first bypass mechanism (B1) includes a fifth control valve (95). The fifth control valve (95) is provided in the first channel (40) near the inlet of the first magnetic refrigerator (M1). The second bypass mechanism (B2) includes a sixth control valve (96). The sixth control valve (96) is provided in the first channel (40) near the inlet of the second magnetic refrigerator (M2). The third bypass mechanism (B3) includes a seventh control valve (97). The seventh control valve (97) is provided in the second channel (50) near the inlet of the second magnetic refrigerator (M2). The fourth bypass mechanism (B4) includes an eighth control valve (98). The eighth control valve (98) is provided in the second channel (50) near the inlet of the first magnetic refrigerator (M1).

When the first bypass mechanism (B1) performs the bypass action, the first control valve (64) is opened, and the fifth control valve (95) is closed. This allows the heating medium in the first channel (40) to reliably bypass the first magnetic refrigerator (M1).

When the second bypass mechanism (B2) performs the bypass action, the second control valve (66) is opened, and the sixth control valve (96) is closed. This allows the heating medium in the first channel (40) to reliably bypass the second magnetic refrigerator (M2).

When the third bypass mechanism (B3) performs the bypass action, the third control valve (68) is opened, and the seventh control valve (97) is closed. This allows the heating medium in the second channel (50) to reliably bypass the second magnetic refrigerator (M2).

When the fourth bypass mechanism (B4) performs the bypass action, the fourth control valve (70) is opened, and the eighth control valve (98) is closed. This allows the heating medium in the second channel (50) to reliably bypass the first magnetic refrigerator (M1).

The fifth control valve (95), the sixth control valve (96), the seventh control valve (97), and the eighth control valve (98) may be on-off valves or flow regulating valves.

<Variation B - Bypass Mechanism (2)>

As illustrated in FIG. 21, the bypass mechanisms (B) of variation B include three-way valves instead of the control valves. The first bypass mechanism (B1) includes a fifth three-way valve (55). The fifth three-way valve (55) switches between a state in which the heating medium in the first upstream path (41) is supplied only to the first magnetic refrigerator (M1) and a state in which the heating medium is supplied only to the first bypass channel (63). The second bypass mechanism (B2) includes a sixth three-way valve (56). The sixth three-way valve (56) switches between a state in which the heating medium in the first intermediate path (42) is supplied only to the second magnetic refrigerator (M2) and a state in which the heating medium is supplied only to the second bypass channel (65). The third bypass mechanism (B3) includes a seventh three-way valve (57). The seventh three-way valve (57) switches between a state in which the heating medium in the second upstream path (51) is supplied only to the second magnetic refrigerator (M2) and a state in which the heating medium is supplied only to the third bypass channel (67). The fourth bypass mechanism (B4) includes an eighth three-way valve (58). The eighth three-way valve (58) is switched between a state in which the heating medium in the second intermediate path (52) is supplied only to the first magnetic refrigerator (M1) and a state in which the heating medium is supplied only to the fourth bypass channel (69).

These three-way valves (55, 56, 57, 58) may be configured to adjust the ratio of the flow rate of the heating medium supplied to the magnetic refrigerator (M) and the flow rate of the heating medium supplied to the bypass channel (63, 65, 67, 69).

<Variation C - Conveying Mechanism>

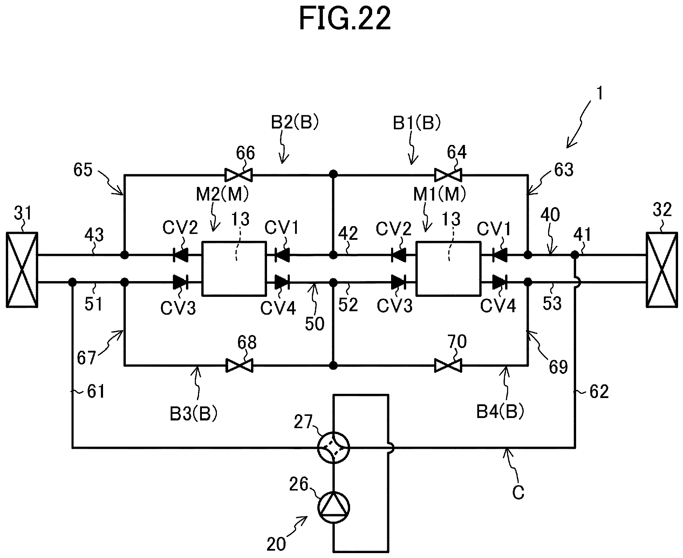

As illustrated in FIG. 22, the conveying mechanism (20) of variation C includes a once-through pump (26) and a four-way switching valve (27) serving as a selector. The four-way switching valve (27) switches between a first state (the state indicated by solid curves in FIG. 22) and a second state (the state indicated by broken curves in FIG. 22). The four-way switching valve (27) in the first state allows a discharge portion of the pump (26) to communicate with the first conveying channel (61) and allows a suction portion of the pump (26) to communicate with the second conveying channel (62). The four-way switching valve (27) in the second state allows the discharge portion of the pump (26) to communicate with the second conveying channel (62) and allows the suction portion of the pump (26) to communicate with the first conveying channel (61).

In the first conveying action, the pump (26) is in operation, and the four-way switching valve (27) is in the first state. In the second conveying action, the pump (26) is in operation, and the four-way switching valve (27) is in the second state. The conveying mechanism (20) alternately and repeatedly performs the first conveying action and the second conveying action.

<Variation D - Three or More Magnetic Refrigerators>

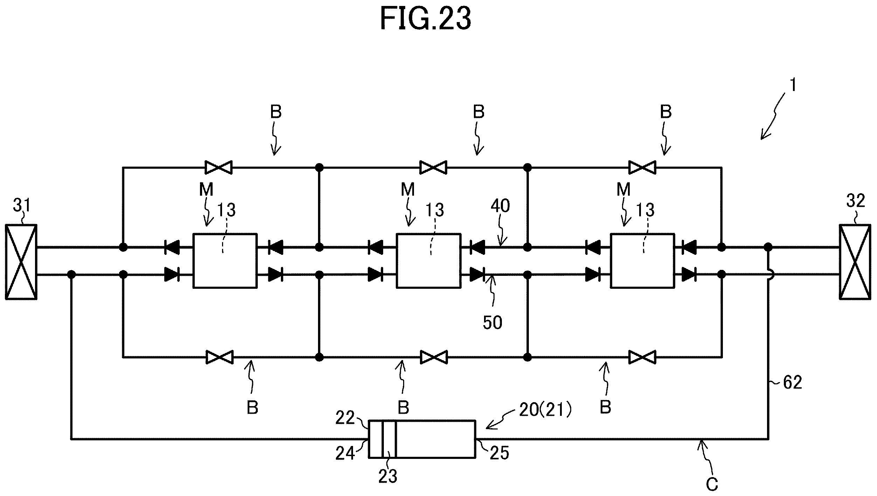

Three or more magnetic refrigerators (M) may be connected in series to the first channel (40) and the second channel (50). In the example shown in FIG. 23, three magnetic refrigerators (M) are provided in the first channel (40) and the second channel (50). The first channel (40) has three bypass mechanisms (B) corresponding to the three magnetic refrigerators (M). The second channel (50) has three bypass mechanisms (B) corresponding to the three magnetic refrigerators (M).

<Variation E - Parallel Circuit>

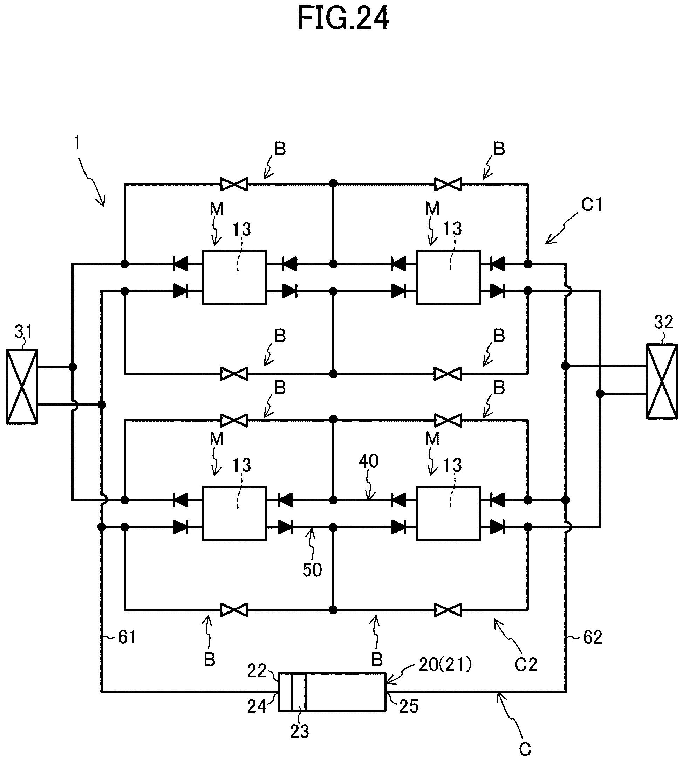

As illustrated in FIG. 24, the heating medium circuit (C) of variation E includes a plurality of circuits connected in parallel. The circuits include a first circuit (C1) and a second circuit (C2). Three or more circuits may be connected in parallel in the heating medium circuit (C). The first circuit (C1) includes a first channel (40), a second channel (50), a plurality of magnetic refrigerators (M), and a plurality of bypass mechanisms (B), similarly to the heating medium circuit of the above-described embodiments. Likewise, the second circuit (C2) includes a first channel (40), a second channel (50), a plurality of magnetic refrigerators (M), and a plurality of bypass mechanisms (B). A first heat exchanger (31), a second heat exchanger (32), a first conveying channel (61), and a second conveying channel (62) are connected to each of the first circuit (C1) and the second circuit (C2).

In the normal heating action, the heating medium in the first conveying channel (61) is divided to flow into the first circuit (C1) and the second circuit (C2). In each of the first circuit (C1) and the second circuit (C2), the heating medium flows through the second channel (50) and is heated by the plurality of magnetic refrigerators (M). The flows of the heating medium heated in the first circuit (C1) and the second circuit (C2) meet together and then supplied to the second heat exchanger (32).

In the normal cooling action, the heating medium in the second conveying channel (62) is divided to flow into the first circuit (C1) and the second circuit (C2). In each of the first circuit (C1) and the second circuit (C2), the heating medium flows through the first channel (40) and is cooled by the plurality of magnetic refrigerators (M). The flows of the heating medium cooled in the first circuit (C1) and the second circuit (C2) meet together and then supplied to the first heat exchanger (31).

In the heating action and the cooling action, the bypass action is appropriately performed as a result of the switching by the bypass mechanisms (B).

<Variation F - Single-Layer Magnetic Refrigerator>

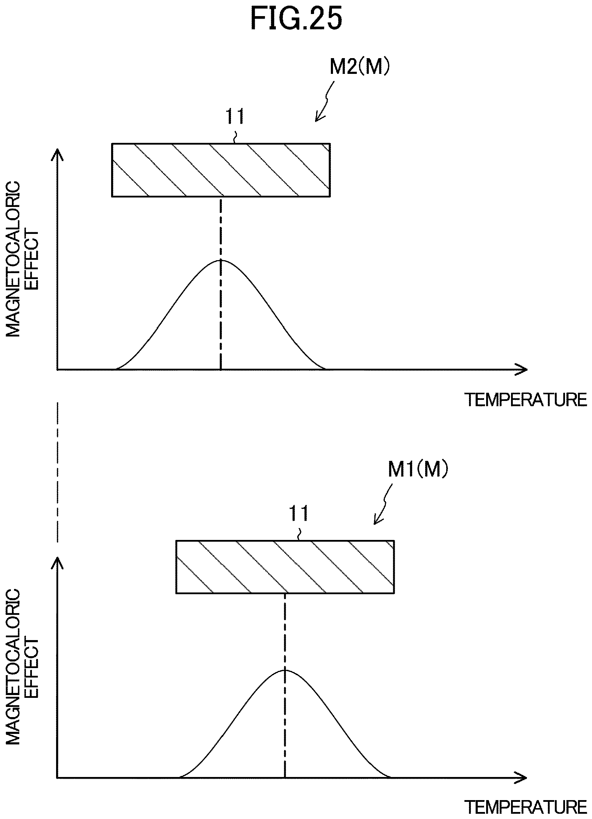

As illustrated in FIG. 25, the magnetic refrigerator (M) may be a single-layer magnetic refrigerator having one magnetic working substance (11).

Two or more magnetic refrigerators (M) are connected in series in the first channel (40) and the second channel (50) with the magnetic working substances (11) of the magnetic refrigerators (M) being arranged in an ascending order of the Curie temperature. This can increase the magnetocaloric effect of the magnetic refrigerators (M).

The magnetic working substances (11) of an adjacent pair of the magnetic refrigerators (M) have the operating temperature ranges partially overlapping each other. Thus, the temperature of the heating medium can be kept from deviating from the operating temperature range of the magnetic working substance (11) in spite of the temperature change of the heating medium flowing into the magnetic refrigerator (M) caused by the switching of the bypass action.

Specifically, the maximum value of the magnetocaloric effect in the overlapping area of the operating temperature ranges is equal to or more than 1/2 of the average value of the maximum values of the magnetocaloric effect of the magnetic working substances (11) of the adjacent magnetic refrigerators (M). This makes the operating temperature ranges of the adjacent magnetic refrigerators overlap in a wider area. This can reliably keep the temperature of the heating medium from deviating from the operating temperature range of the magnetic working substance (11) when the normal action is switched to the bypass action and the bypass action is switched to the normal action.

«Fifth Embodiment»

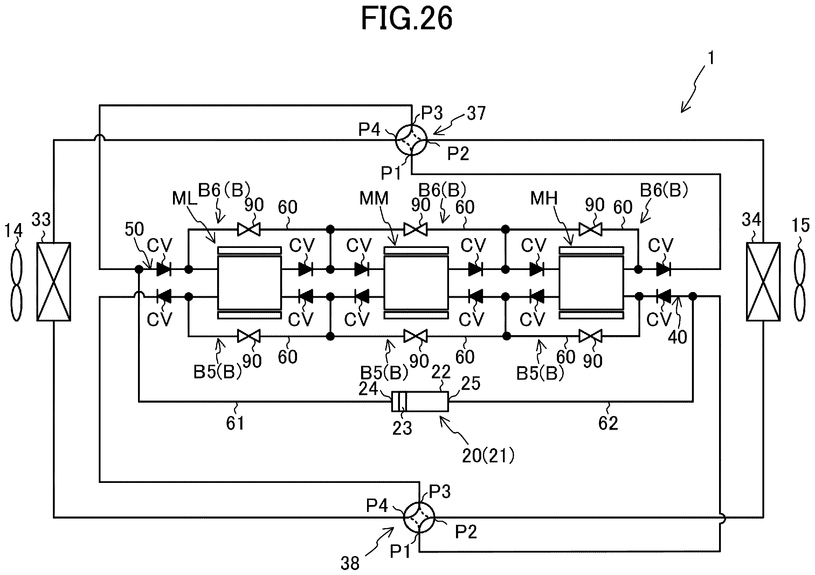

As illustrated in FIG. 26, a magnetic refrigeration apparatus (1) of the fifth embodiment is an air conditioner that switches between cooling and heating.

The magnetic refrigeration apparatus (1) includes an indoor fan (14) and an outdoor fan (15). The indoor fan (14) is disposed near the indoor heat exchanger (33). The indoor fan (14) transports indoor air passing through the indoor heat exchanger (33). The outdoor fan (15) is disposed near the outdoor heat exchanger (34). The outdoor fan (15) transports outdoor air passing through the outdoor heat exchanger (34).

The heating medium circuit (C) has a plurality of magnetic refrigerators (M). The magnetic refrigerators (M) include a low-temperature magnetic refrigerator (ML), a medium-temperature magnetic refrigerator (MM), and a high-temperature magnetic refrigerator (MH). The low-temperature magnetic refrigerator (ML) and the high-temperature magnetic refrigerator (MH) constitute third magnetic refrigerators. The medium-temperature magnetic refrigerator (MM) constitutes a fourth magnetic refrigerator. The magnetic refrigerators (M) are connected in series in the heating medium circuit (C) to extend over the first channel (40) and the second channel (50).

The heating medium circuit (C) has a third four-way switching valve (37) and a fourth four-way switching valve (38). Each of the third and fourth four-way switching valves (37) and (38) has a first port (P1), a second port (P2), a third port (P3), and a fourth port (P4). The third and fourth four-way switching valves (37) and (38) can switch between a first state indicated by solid curves in FIG. 26 and a second state indicated by broken curves in FIG. 26. Each of the third and fourth four-way switching valves (37) and (38) in the first state makes the first port (P1) and the second port (P2) communicate with each other, and simultaneously makes the third port (P3) and the fourth port (P4) communicate with each other. Each of the third and fourth four-way switching valves (37) and (38) in the second state makes the first port (P1) and the fourth port (P4) communicate with each other, and simultaneously makes the second port (P2) and the third port (P3) communicate with each other.

The first port (P1) of the third four-way switching valve (37) communicates with an outlet end of the second channel (50). The second port (P2) of the third four-way switching valve (37) communicates with one end of the outdoor heat exchanger (34). The third port (P3) of the third four-way switching valve (37) communicates with an inlet end of the second channel (50). The fourth port (P4) of the third four-way switching valve (37) communicates with one end of the indoor heat exchanger (33).

The first port (P1) of the fourth four-way switching valve (38) communicates with an inlet end of the first channel (40). The second port (P2) of the fourth four-way switching valve (38) communicates with the other end of the outdoor heat exchanger (34). The third port (P3) of the fourth four-way switching valve (38) communicates with an outlet end of the first channel (40). The fourth port (P4) of the fourth four-way switching valve (38) communicates with the other end of the indoor heat exchanger (33).

The first channel (40) has a fifth bypass mechanism (B5) provided for each of the magnetic refrigerators (M). The second channel (50) has a sixth bypass mechanism (B6) provided for each of the magnetic refrigerators (M). Each of the fifth bypass mechanisms (B5) and the sixth bypass mechanisms (B6) includes a bypass channel (60) and a valve (a control valve (90)) for opening and closing the bypass channel (60).

-Operation-

The operation of the magnetic refrigeration apparatus (1) of the fifth embodiment will be described below.

<Cooling Operation>

In the cooling operation, the third four-way switching valve (37) and the fourth four-way switching valve (38) are in the first state. The outdoor fan (15) and the indoor fan (14) are operated. In the cooling operation, the first and second actions are alternately repeated. As an example, a cooling operation in which all the magnetic refrigerators (M) are in operation will be described below.

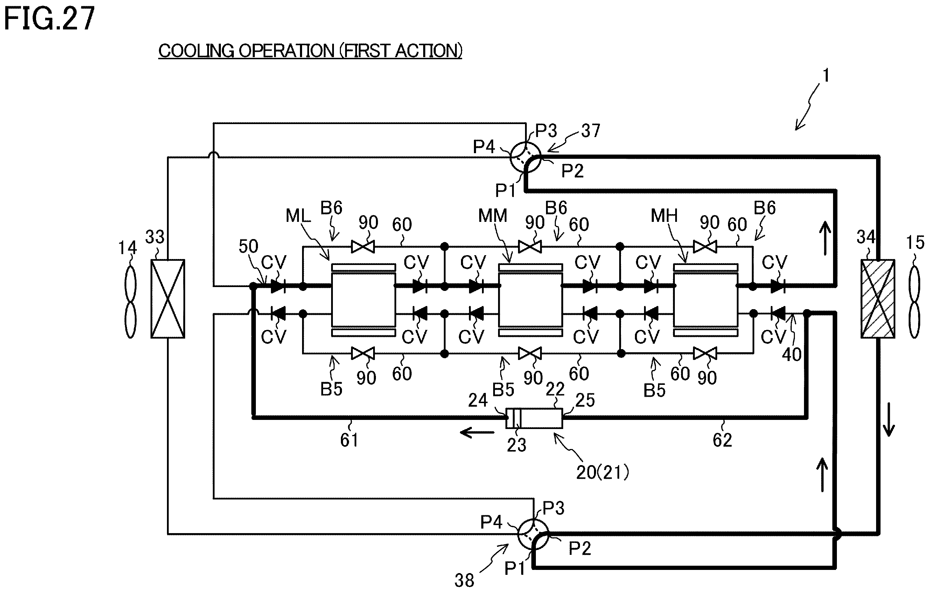

In the first action shown in FIG. 27, the low-temperature magnetic refrigerator (ML), the medium-temperature magnetic refrigerator (MM), and the high-temperature magnetic refrigerator (MH) perform the first modulation action. The conveying mechanism (20) performs the first conveying action. All the control valves (90) are closed.

In the first action, the heating medium heated by the low-temperature magnetic refrigerator (ML), the medium-temperature magnetic refrigerator (MM), and the high-temperature magnetic refrigerator (MH) in the second channel (50) is supplied to the outdoor heat exchanger (34). The heating medium dissipates heat to the outdoor air in the outdoor heat exchanger (34).

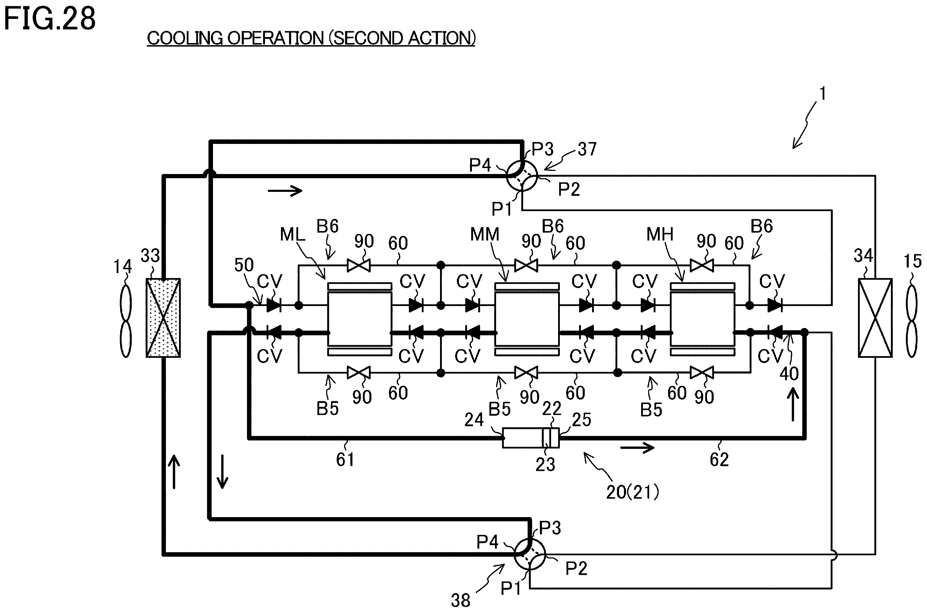

In the second action shown in FIG. 28, the high-temperature magnetic refrigerator (MH), the medium-temperature magnetic refrigerator (MM), and the low-temperature magnetic refrigerator (ML) perform the second modulation action. The conveying mechanism (20) performs the second conveying action. All the control valves (90) are closed.

In the second action, the heating medium cooled by the high-temperature magnetic refrigerator (MH), the medium-temperature magnetic refrigerator (MM), and the low-temperature magnetic refrigerator (ML) in the first channel (40) is supplied to the indoor heat exchanger (33). The indoor air is cooled by the heating medium in the indoor heat exchanger (33).

<Heating Operation>

In the heating operation, the third four-way switching valve (37) and the fourth four-way switching valve (38) are in the second state. The outdoor fan (15) and the indoor fan (14) are operated. In the heating operation, the third and fourth actions are alternately and repeatedly performed. As an example, a heating operation in which all the magnetic refrigerators (M) are in operation will be described below.

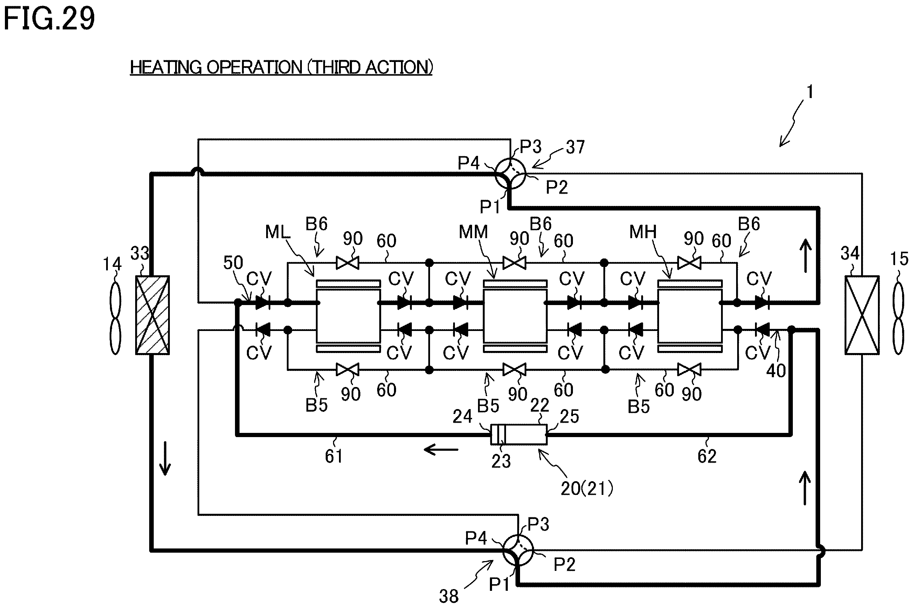

In the third action shown in FIG. 29, the low-temperature magnetic refrigerator (ML), the medium-temperature magnetic refrigerator (MM), and the high-temperature magnetic refrigerator (MH) perform the first modulation action. The conveying mechanism (20) performs the first conveying action. All the control valves (90) are closed.

In the third action, the heating medium heated by the low-temperature magnetic refrigerator (ML), the medium-temperature magnetic refrigerator (MM), and the high-temperature magnetic refrigerator (MH) in the second channel (50) is supplied to the indoor heat exchanger (33). The heating medium dissipates heat to the indoor air in the indoor heat exchanger (33).

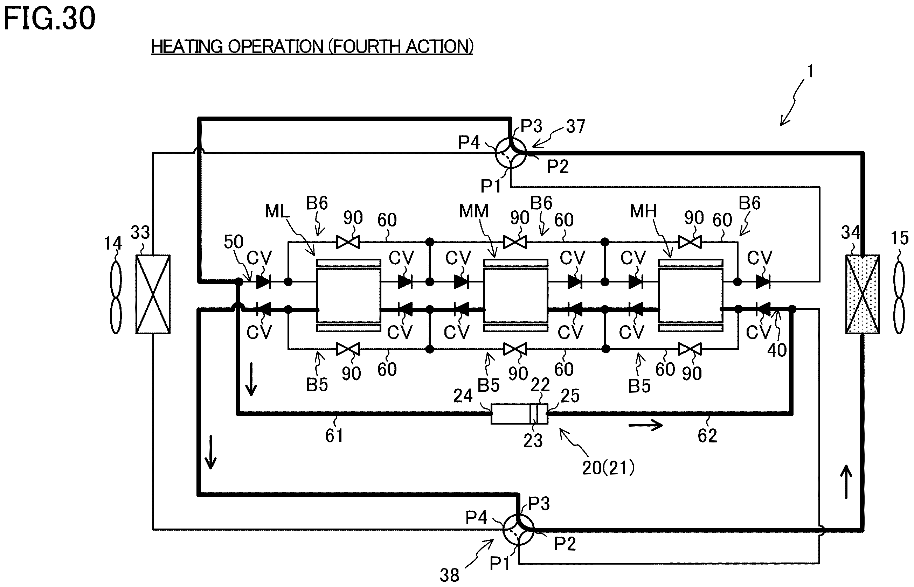

In the fourth action shown in FIG. 30, the high-temperature magnetic refrigerator (MH), the medium-temperature magnetic refrigerator (MM), and the low-temperature magnetic refrigerator (ML) perform the second modulation action. The conveying mechanism (20) performs the second conveying action. All the control valves (90) are closed.

In the fourth action, the heating medium cooled by the high-temperature magnetic refrigerator (MH), the medium-temperature magnetic refrigerator (MM), and the low-temperature magnetic refrigerator (ML) in the first channel (40) is supplied to the outdoor heat exchanger (34). The heating medium absorbs heat from the outdoor air in the outdoor heat exchanger (34).

(1) Properties of Magnetic Refrigerator

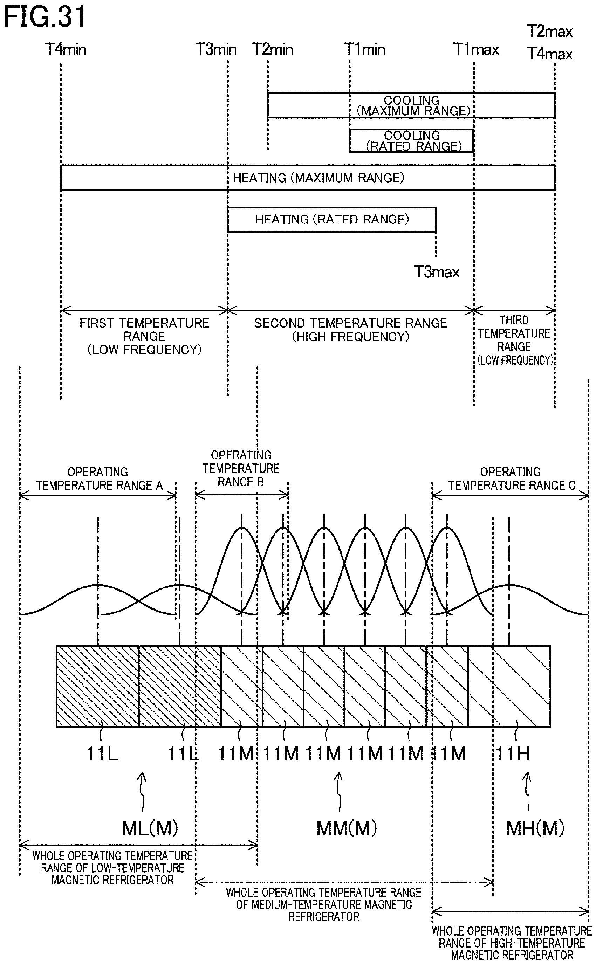

In the magnetic refrigeration apparatus (1) of this embodiment, the magnetic refrigerators (M) are configured in consideration of the operating conditions for the cooling operation and the heating operation. Detailed description will be made below with reference to FIG. 31.

(1-1) Temperature Range

In the cooling operation of the magnetic refrigeration apparatus (1), the minimum and maximum temperatures of the heating medium are determined depending on the outdoor temperature and the cooling load. During the cooling operation under rated conditions, the minimum temperature is T1min, and the maximum temperature is T1max. The minimum temperature T1min is based on the indoor temperature and the set temperature during the cooling operation under the rated conditions. The maximum temperature T1max is based on the outdoor temperature during the cooling operation under the rated conditions.

In the cooling operation, the minimum temperature is T2min and the maximum temperature is T2max in the maximum range wider than the range under the rated conditions. The minimum temperature T2min is a temperature of the heating medium when the cooling load is extremely high. The maximum temperature T2max is a temperature of the heating medium when the outdoor temperature is extremely high.

In the heating operation of the magnetic refrigeration apparatus (1), the minimum temperature and the maximum temperature of the heating medium are determined depending on the outdoor temperature and the heating load. During the heating operation under rated conditions, the minimum temperature is T3min, and the maximum temperature is T3max. The minimum temperature T3min is based on the outdoor temperature during the heating operation under the rated conditions. The maximum temperature T3max is based on the indoor temperature and the set temperature during the heating operation under the rated conditions.

In the heating operation, the minimum temperature is T4min and the maximum temperature is T4max in the maximum range wider than the range under the rated conditions. The minimum temperature T4min is a temperature of the heating medium when the outdoor temperature is extremely low. The maximum temperature T4max is a temperature of the heating medium when the heating load is extremely high. In this embodiment, the maximum temperature T4max and the maximum temperature T2max are the same.

As illustrated in FIG. 31, three temperature ranges of the heating medium are determined based on the frequency with which the temperature of the heating medium in the heating medium circuit (C) falls within the range. The first temperature range is a range from the minimum temperature T4min to the minimum temperature T3min. The second temperature range is a range from the minimum temperature T3min to the maximum temperature T1max. The third temperature range is a range from the maximum temperature T1max to the maximum temperature T2max (T4max). The second temperature range is a range from the minimum temperature (i.e., T3min) to the maximum temperature (i.e., T1max) across both the temperature range of the rated cooling operation and the temperature range of the rated heating operation. The first temperature range is a lower temperature range than the second temperature range. The third temperature range is a higher temperature range than the second temperature range.

The second temperature range is a temperature range that the temperature of the heating medium falls within more frequently taking all the operations of the magnetic refrigeration apparatus (1) into account. The first and third temperature ranges are temperature ranges that the temperature of the heating medium falls within less frequently taking all the operations of the magnetic refrigeration apparatus (1) into account.

(1-2) Properties of Low-Temperature Magnetic Refrigerator

The low-temperature magnetic refrigerator (ML), which is the third magnetic refrigerator, is located at the end (strictly speaking, the low-temperature end) of the plurality of magnetic refrigerators (M). The low-temperature magnetic refrigerator (ML) is adjacent to the indoor heat exchanger (33) serving as a heat absorber during the cooling operation. The high-temperature magnetic refrigerator (MH) is adjacent to the outdoor heat exchanger (34) serving as a heat absorber during the heating operation.

As illustrated in FIG. 31, the low-temperature magnetic refrigerator (ML) of this example has two magnetic working substances (11) (low-temperature magnetic working substances (11L)). The whole operating temperature range of the low-temperature magnetic refrigerator (ML) includes the first temperature range. In other words, the low-temperature magnetic refrigerator (ML) is configured to exhibit the magnetocaloric effect when the temperature of the heating medium is in the first temperature range. Note that "the whole operating temperature range of the magnetic refrigerator (M)" does not mean the operating temperature range of the magnetic working substance (11) alone, but means the temperature range from the minimum temperature to the maximum temperature in which the magnetic refrigerator (M) exhibits the magnetocaloric effect.

In the heating operation under the extremely low outdoor temperature, the low temperature of the heating medium may fall within the first temperature range. The low-temperature magnetic refrigerator (ML) exhibits the magnetocaloric effect on the heating medium in the first temperature range.

(1-3) Properties of High-Temperature Magnetic Refrigerator

The high-temperature magnetic refrigerator (MH), which is the third magnetic refrigerator, is located at the end (strictly speaking, the high-temperature end) of the plurality of magnetic refrigerators (M). The high-temperature magnetic refrigerator (MH) is adjacent to the outdoor heat exchanger (34) serving as a radiator during the cooling operation. The high-temperature magnetic refrigerator (MH) is adjacent to the indoor heat exchanger (33) serving as a radiator during the heating operation.

As illustrated in FIG. 31, the high-temperature magnetic refrigerator (MH) of this example is a single-layer magnetic refrigerator and has a single magnetic working substance (11) (a high-temperature magnetic working substance (11H)). The whole operating temperature range of the high-temperature magnetic refrigerator (MH) includes the third temperature range. In other words, the high-temperature magnetic refrigerator (MH) is configured to exhibit the magnetocaloric effect when the temperature of the heating medium is in the third temperature range.

In the cooling operation under the extremely high outdoor temperature and in the heating operation under the extremely high heating load, the high-temperature of the heating medium may fall within the third temperature range. The high-temperature magnetic refrigerator (MH) exhibits the magnetocaloric effect on the heating medium in the third temperature range.

(1-4) Properties of Medium-Temperature Magnetic Refrigerator

The medium-temperature magnetic refrigerator (MM), which is the second magnetic refrigerator, is located between the magnetic refrigerators (M) at both ends. As illustrated in FIG. 31, the medium-temperature magnetic refrigerator (MM) of this example has six layers of magnetic working substances (11) (medium-temperature magnetic working substances (11M)).

The whole operating temperature range of the medium-temperature magnetic refrigerator (MH) includes the second temperature range. In other words, the medium-temperature magnetic refrigerator (MM) is configured to exhibit the magnetocaloric effect when the temperature of the heating medium is in the second temperature range.

In the rated cooling operation or the rated heating operation, the temperature of the heating medium may fall within the second temperature range. The medium-temperature magnetic refrigerator (MH) exhibits the magnetocaloric effect on the heating medium in the second temperature range.

(1-4) How Frequently Heating Medium Falls within Temperature Range

Considering the operation of the magnetic refrigeration apparatus (1) as a whole, the temperature of the heating medium falls within the whole operating temperature range of the low-temperature magnetic refrigerator (ML) less frequently than within the whole operating temperature range of the medium-temperature magnetic refrigerator (MM). Likewise, the temperature of the heating medium falls within the whole operating temperature range of the high-temperature magnetic refrigerator (MH) less frequently than within the whole operating temperature range of the medium-temperature magnetic refrigerator (MM).

(1-5) Relationship between Operating Temperature Ranges of Magnetic Working Substances

As illustrated in FIG. 31, the operating temperature range A of one low-temperature magnetic working substance (11L) of the low-temperature magnetic refrigerator (ML) is wider than the operating temperature range B of one medium-temperature magnetic working substance (11M) of the medium-temperature magnetic refrigerator (MM). This configuration can produce the magnetocaloric effect in a predetermined temperature range (the first temperature range) while reducing the number of layers of the magnetic working substance (11) in the low-temperature magnetic refrigerator (ML). In this example, the number of layers in the low-temperature magnetic refrigerator (ML) is two, i.e., which is less than the number of layers (six) in the medium-temperature magnetic refrigerator (MM). Thus, the structure of the low-temperature magnetic refrigerator (ML) can be simplified, reducing the production cost of the low-temperature magnetic refrigerator (ML).

On the other hand, if the low-temperature magnetic working substances (11) of the low-temperature magnetic refrigerator (ML) have a wider operating temperature range A and the low-temperature magnetic refrigerator (ML) has a fewer number of low-temperature magnetic working substances (11L), the magnetocaloric effect is reduced as a whole, and the efficiency tends to decrease. However, the low-temperature magnetic refrigerator (ML) corresponds to the first temperature range that the temperature of the heating medium falls within less frequently. Thus, the decrease in efficiency has little influence on the whole operation of the magnetic refrigeration apparatus (1).

As illustrated in the same graph, the operating temperature range C of one high-temperature magnetic working substance (11) of the high-temperature magnetic refrigerator (MH) is wider than the operating temperature range B of one medium-temperature magnetic working substance (11) of the medium-temperature magnetic refrigerator (MM). In this example, the operating temperature range C of the high-temperature magnetic working substance (11H) is approximately as wide as the operating temperature range A of the low-temperature magnetic working substance (11L). This configuration can produce the magnetocaloric effect in a predetermined temperature range (the third temperature range) while reducing the number of layers of the magnetic working substance (11) in the high-temperature magnetic refrigerator (MH). In this example, the number of layers in the high-temperature magnetic refrigerator (MH) is one, i.e., which is less than the number of layers (two) in the medium-temperature magnetic refrigerator (MM). Thus, the structure of the high-temperature magnetic refrigerator (MH) can be simplified, reducing the production cost of the high-temperature magnetic refrigerator (MH).

On the other hand, if the high-temperature magnetic working substance (11H) of the high-temperature magnetic refrigerator (MH) has a wider operating temperature range C and the high-temperature magnetic refrigerator (MH) has a fewer number of low-temperature magnetic working substances (11), the magnetocaloric effect is reduced as a whole, and the efficiency tends to decrease. However, the high-temperature magnetic refrigerator (MH) operates only in the third temperature range that the temperature of the heating medium falls within less frequently. Thus, the decrease in efficiency has little influence on the whole operation of the magnetic refrigeration apparatus (1).

(1-6) Relationship between Amounts of Magnetic Working Substances

The low-temperature magnetic refrigerator (ML) has a larger amount of magnetic working substance (11) than the medium-temperature magnetic refrigerator (MM). Strictly speaking, the amount of each of the low-temperature magnetic working substances (11L) is larger than the amount of each of the medium-temperature magnetic working substances (11M). As described above, the low-temperature magnetic refrigerator (ML) has fewer layers, and the magnetocaloric effect tends to decrease. However, increasing the amount of the magnetic working substance (11) in the low-temperature magnetic refrigerator (ML) can improve the heating capacity (heat dissipation capacity) and the cooling capacity (heat absorption capacity) of the low-temperature magnetic refrigerator (ML).

The high-temperature magnetic refrigerator (MH) has a larger amount of magnetic working substance (11) than the medium-temperature magnetic refrigerator (MM). Strictly speaking, the amount of the high-temperature magnetic working substance (11H) is larger than the amount of each of the medium-temperature magnetic working substances (11M). As described above, the high-temperature magnetic refrigerator (MH) has a single layer, and the magnetocaloric effect tends to decrease. However, increasing the amount of the magnetic working substance (11) in the high-temperature magnetic refrigerator (MH) can improve the heating capacity (heat dissipation capacity) and the cooling capacity (heat absorption capacity) of the high-temperature magnetic refrigerator (MH).

(1-7) Bypass Action

In this embodiment, the controller (100) performs an action of making the heating medium bypass the third magnetic refrigerator (ML, MH) depending on the operating conditions.

(1-7-1) Rated Heating Operation and Rated Cooling Operation

During the rated heating operation and the rated cooling operation, the controller (100) causes the low-temperature magnetic refrigerator (ML) and the high-temperature magnetic refrigerator (MH) to perform neither the first modulation action nor the second modulation action, and causes only the medium-temperature magnetic refrigerator (MM) to perform the first modulation action and the second modulation action. In these operations, the temperature of the heating medium does not fall within the first and third temperature ranges, and it is not necessary to operate the low-temperature magnetic refrigerator (ML) and the high-temperature magnetic refrigerator (MH).

In addition, during the rated heating operation and the rated cooling operation, the controller (100) performs a bypass action, i.e., allows the heating medium to bypass the low-temperature magnetic refrigerator (ML) and the high-temperature magnetic refrigerator (MH). Specifically, the control valves (90) of the bypass channels (60) corresponding to the low-temperature magnetic refrigerator (ML) and the high-temperature magnetic refrigerator (MH) are opened, and the control valve (90) of the bypass channel (60) corresponding to the medium-temperature magnetic refrigerator (MM) is closed. Thus, the heating medium flows only through the medium-temperature magnetic refrigerator (MM) which is in operation. This configuration can reduce the increase in pressure loss caused by the heating medium flowing through the low-temperature magnetic refrigerator (ML) and the high-temperature magnetic refrigerator (MH).

A first condition for the rated heating operation or the rated cooling operation can be determined based on at least one of the outdoor temperature, the indoor temperature, or the temperature of the heating medium. When the first condition indicating the rated heating or cooling operation is met, the controller (100) operates only the medium-temperature magnetic refrigerator (MM) which is the fourth magnetic refrigerator. When the first condition is met, the controller (100) allows the heating medium to bypass the low-temperature magnetic refrigerator (ML) and the high-temperature magnetic refrigerator and flow through the medium-temperature magnetic refrigerator (MM).

(1-7-2) Heating Operation involving First Temperature Range

In the heating operation under the extremely low outdoor temperature, a second condition in which the low-temperature heating medium falls within the first temperature range is met. In this case, the controller (100) causes the high-temperature magnetic refrigerator (MH) to perform neither the first modulation action nor the second modulation action, and causes the low-temperature magnetic refrigerator (M) and the medium-temperature magnetic refrigerator (MM) to perform the first modulation action and the second modulation action.

In addition, during this operation, the controller (100) performs a bypass action, i.e., allows the heating medium to bypass the high-temperature magnetic refrigerator (MH). Specifically, the control valve (90) of the bypass channel (60) corresponding to the high-temperature magnetic refrigerator (MH) is opened, and the control valves (90) of the bypass channels (60) corresponding to the low-temperature magnetic refrigerator (ML) and the medium-temperature magnetic refrigerator (MM) are closed. Thus, the heating medium flows through the low-temperature magnetic refrigerator (ML) and the medium-temperature magnetic refrigerator (MM) which are in operation. This configuration can reduce the increase in pressure loss caused by the heating medium flowing through the high-temperature magnetic refrigerator (MH).

The second condition in which the low-temperature heating medium falls within the first temperature range can be determined based on at least one of the outdoor temperature or the temperature of the heating medium. When the second condition is met, the controller (100) operates the low-temperature magnetic refrigerator (ML) and the medium-temperature magnetic refrigerator (MM). When the second condition is met, the controller (100) allows the heating medium to bypass the high-temperature magnetic refrigerator (MH) and flow through the low-temperature magnetic refrigerator (ML) and the medium-temperature magnetic refrigerator (MM).

(1-7-3) Cooling Operation and Heating Operation involving Third Temperature Range

In the cooling operation under the extremely high outdoor temperature and in the heating operation under the extremely high heating load, a third condition in which the high-temperature heating medium falls within the third temperature range is met. In this case, the controller (100) causes the low-temperature magnetic refrigerator (ML) to perform neither the first modulation action nor the second modulation action, and causes the medium-temperature magnetic refrigerator (MM) and the high-temperature magnetic refrigerator (MH) to perform the first modulation action and the second modulation action.

In addition, during this operation, the controller (100) performs a bypass action, i.e., allows the heating medium to bypass the low-temperature magnetic refrigerator (ML). Specifically, the control valve (90) of the bypass channel (60) corresponding to the low-temperature magnetic refrigerator (ML) is opened, and the control valves (90) of the bypass channels (60) corresponding to the medium-temperature magnetic refrigerator (MM) and the high-temperature magnetic refrigerator (MH) are closed. Thus, the heating medium flows through the medium-temperature magnetic refrigerator (MM) and the high-temperature magnetic refrigerator (MH) which are in operation. This configuration can reduce the increase in pressure loss caused by the heating medium flowing through the low-temperature magnetic refrigerator (ML).

The third condition in which the high-temperature heating medium falls within the third temperature range can be determined based on at least one of the outdoor temperature, the indoor temperature, or the temperature of the heating medium. When the third condition is met, the controller (100) operates the medium-temperature magnetic refrigerator (MM) and the high-temperature magnetic refrigerator (MH). When the third condition is met, the controller (100) allows the heating medium to bypass the low-temperature magnetic refrigerator and flow through the medium-temperature magnetic refrigerator (MM) and the high-temperature magnetic refrigerator (MH).

«Sixth Embodiment»

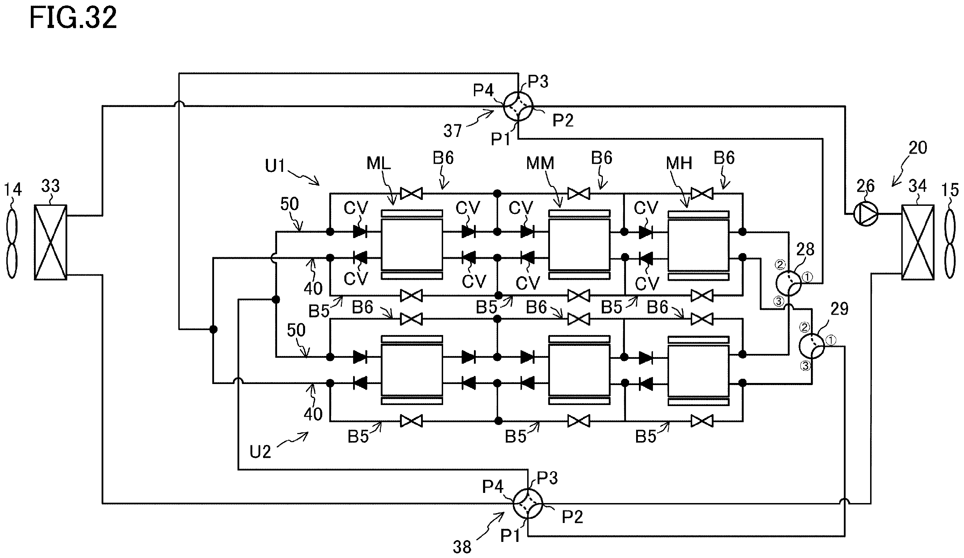

As illustrated in FIG. 32, a heating medium circuit (C) of the sixth embodiment has two units (U1, U2) including the first channel (40) and the second channel (50) of the fifth embodiment. The two units (U1, U2) are comprised of a first unit (U1) and a second unit (U2) connected in parallel. These units (U1, U2) have the same configuration. Each of the units (U1, U2) includes a first channel (40), a second channel (50), a low-temperature magnetic refrigerator (ML), a medium-temperature magnetic refrigerator (MM), a high-temperature magnetic refrigerator (MH), check valves (CV), a fifth bypass mechanism (B5), and a sixth bypass mechanism (B6), similarly to the heating medium circuit of the fifth embodiment.

The sixth embodiment is different from the fifth embodiment in the configuration of the conveying mechanism (20). The conveying mechanism (20) of the sixth embodiment includes a once-through pump (26), a ninth three-way valve (28), and a tenth three-way valve (29). The pump (26) conveys the heating medium in only one direction. The pump (26) is connected to a channel between the second port (P2) of the third four-way switching valve (37) and the outdoor heat exchanger (34). The pump (26) discharges the heating medium toward the outdoor heat exchanger (34).

Each of the ninth three-way valve (28) and the tenth three-way valve (29) has first to third ports. The ninth and tenth three-way valves (28) and (29) switch between a first state indicated by solid curves in FIG. 32 and a second state indicated by broken curves in FIG. 32. Each of the ninth and tenth three-way valves (28) and (29) in the first state makes the first and third ports communicate with each other. Each of the ninth and tenth three-way valves (28) and (29) in the second state makes the first and second ports communicate with each other.

The first port of the ninth three-way valve (28) communicates with the first port (P1) of the third four-way switching valve (37). The second port of the ninth three-way valve (28) communicates with an outlet end of the second channel (50) of the first unit (U1). The third port of the ninth three-way valve (28) communicates with an outlet end of the second channel (50) of the second unit (U2).

The first port of the tenth three-way valve (29) communicates with the first port (P1) of the fourth four-way switching valve (38). The second port of the tenth three-way valve (29) communicates with an inlet end of the first channel (40) of the first unit (U1). The third port of the tenth three-way valve (29) communicates with an inlet end of the first channel (40) of the second unit (U2).

-Operation-

The operation of the magnetic refrigeration apparatus (1) of the sixth embodiment will be described below.

<Cooling Operation>

In the cooling operation, the third four-way switching valve (37) and the fourth four-way switching valve (38) are in the first state. The outdoor fan (15) and the indoor fan (14) are operated. In the cooling operation, the first and second actions are alternately repeated. As an example, a cooling operation in which all the magnetic refrigerators (M) are in operation will be described below.

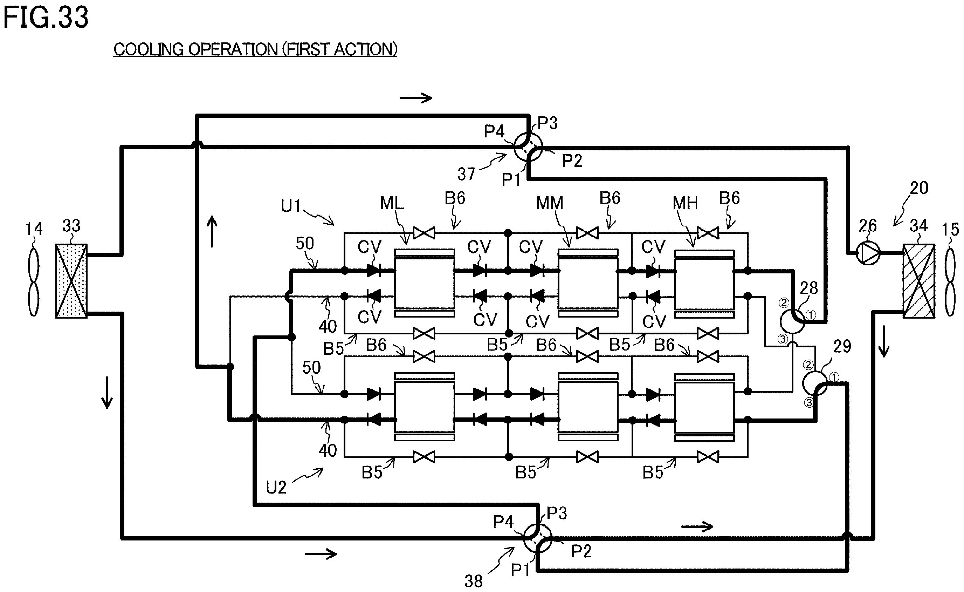

In the first action shown in FIG. 33, the low-temperature magnetic refrigerator (ML), the medium-temperature magnetic refrigerator (MM), and the high-temperature magnetic refrigerator (MH) of the first unit (U1) perform the first modulation action. The low-temperature magnetic refrigerator (ML), the medium-temperature magnetic refrigerator (MM), and the high-temperature magnetic refrigerator (MH) of the second unit (U2) perform the second modulation action. The pump (26) of the conveying mechanism (20) is operated. The ninth three-way valve (28) is in the second state, and the tenth three-way valve (29) is in the first state.

In the first action, the heating medium heated by the low-temperature magnetic refrigerator (ML), the medium-temperature magnetic refrigerator (MM), and the high-temperature magnetic refrigerator (MH) in this order in the second channel (50) of the first unit (U1) is supplied to the outdoor heat exchanger (34). The heating medium dissipates heat to the outdoor air in the outdoor heat exchanger (34). The heating medium cooled by the high-temperature magnetic refrigerator (MH), the medium-temperature magnetic refrigerator (MM), and the low-temperature magnetic refrigerator (ML) in this order in the first channel (40) of the second unit (U2) is supplied to the indoor heat exchanger (33). The heating medium absorbs heat from the indoor air in the indoor heat exchanger (33).

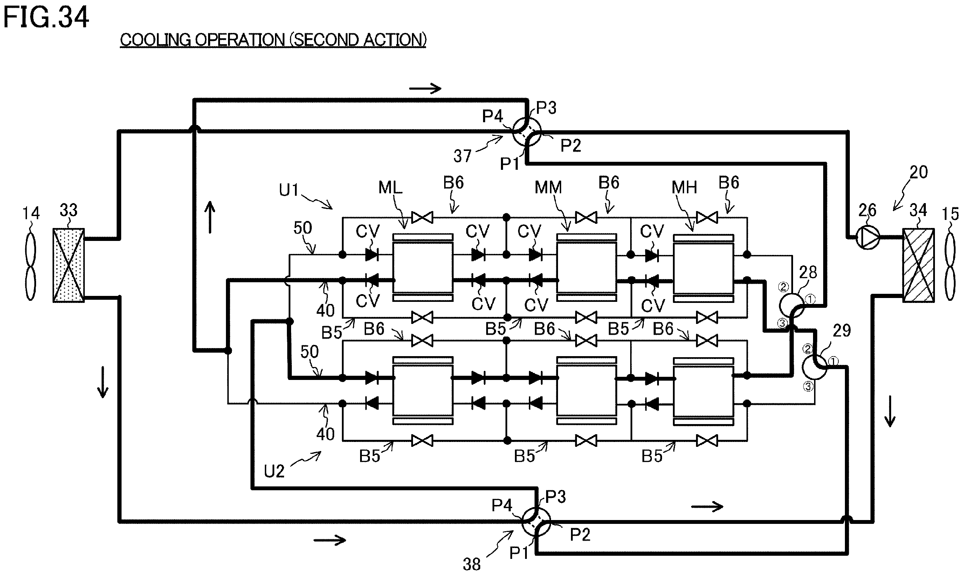

In the second action shown in FIG. 34, the low-temperature magnetic refrigerator (ML), the medium-temperature magnetic refrigerator (MM), and the high-temperature magnetic refrigerator (MH) of the second unit (U2) perform the first modulation action. The low-temperature magnetic refrigerator (ML), the medium-temperature magnetic refrigerator (MM), and the high-temperature magnetic refrigerator (MH) of the first unit (U1) perform the second modulation action. The pump (26) of the conveying mechanism (20) is operated. The ninth three-way valve (28) is in the first state, and the tenth three-way valve (29) is in the second state.

In the second action, the heating medium heated by the low-temperature magnetic refrigerator (ML), the medium-temperature magnetic refrigerator (MM), and the high-temperature magnetic refrigerator (MH) in this order in the second channel (50) of the second unit (U2) is supplied to the outdoor heat exchanger (34). The heating medium dissipates heat to the outdoor air in the outdoor heat exchanger (34). The heating medium cooled by the high-temperature magnetic refrigerator (MH), the medium-temperature magnetic refrigerator (MM), and the low-temperature magnetic refrigerator (ML) in this order in the first channel (40) of the first unit (U1) is supplied to the indoor heat exchanger (33). The heating medium absorbs heat from the indoor air in the indoor heat exchanger (33).

<Heating Operation>

In the heating operation, the third four-way switching valve (37) and the fourth four-way switching valve (38) are in the second state. The outdoor fan (15) and the indoor fan (14) are operated. In the heating operation, the third and fourth actions are alternately and repeatedly performed. As an example, a heating operation in which all the magnetic refrigerators (M) are in operation will be described below.

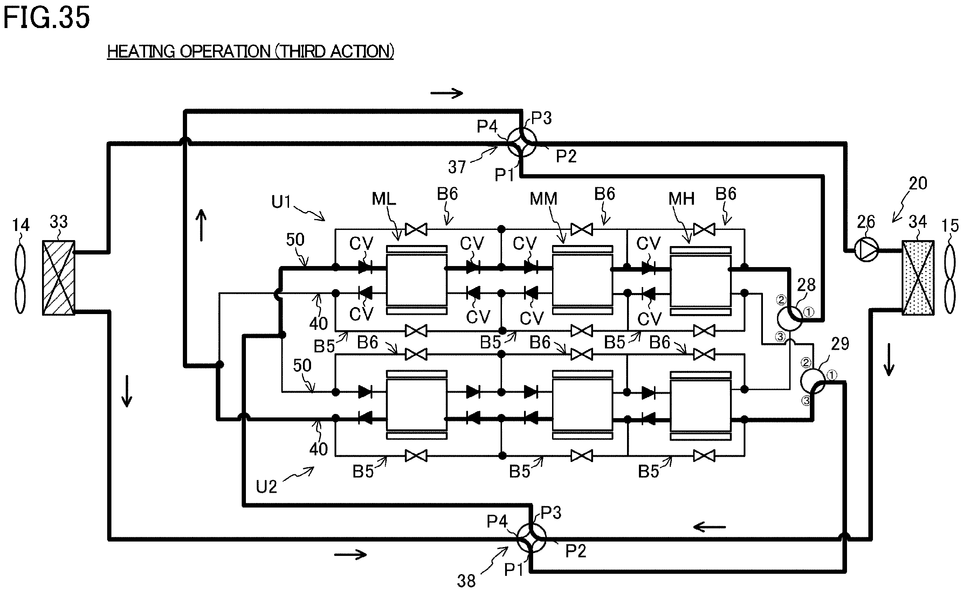

In the third action shown in FIG. 35, the low-temperature magnetic refrigerator (ML), the medium-temperature magnetic refrigerator (MM), and the high-temperature magnetic refrigerator (MH) of the first unit (U1) perform the first modulation action. The low-temperature magnetic refrigerator (ML), the medium-temperature magnetic refrigerator (MM), and the high-temperature magnetic refrigerator (MH) of the second unit (U2) perform the second modulation action. The pump (26) of the conveying mechanism (20) is operated. The ninth three-way valve (28) is in the second state, and the tenth three-way valve (29) is in the first state.

In the third action, the heating medium heated by the low-temperature magnetic refrigerator (ML), the medium-temperature magnetic refrigerator (MM), and the high-temperature magnetic refrigerator (MH) in this order in the second channel (50) of the first unit (U1) is supplied to the indoor heat exchanger (33). The heating medium dissipates heat to the indoor air in the indoor heat exchanger (33). The heating medium cooled by the high-temperature magnetic refrigerator (MH), the medium-temperature magnetic refrigerator (MM), and the low-temperature magnetic refrigerator (ML) in this order in the first channel (40) of the second unit (U2) is supplied to the outdoor heat exchanger (34). The heating medium absorbs heat from the outdoor air in the outdoor heat exchanger (34).

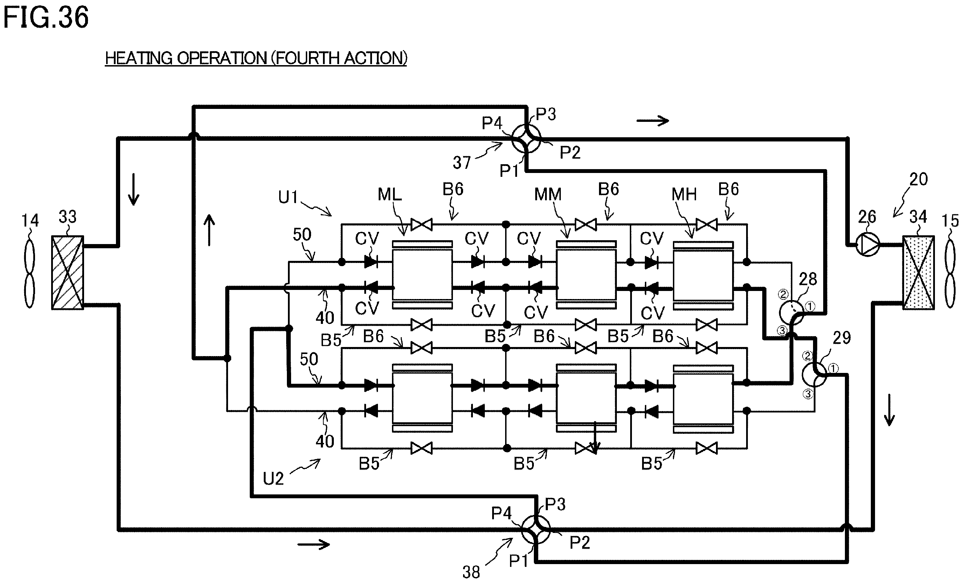

In the fourth action shown in FIG. 36, the low-temperature magnetic refrigerator (ML), the medium-temperature magnetic refrigerator (MM), and the high-temperature magnetic refrigerator (MH) of the second unit (U2) perform the first modulation action. The low-temperature magnetic refrigerator (ML), the medium-temperature magnetic refrigerator (MM), and the high-temperature magnetic refrigerator (MH) of the first unit (U1) perform the second modulation action. The pump (26) of the conveying mechanism (20) is operated. The ninth three-way valve (28) is in the first state, and the tenth three-way valve (29) is in the second state.

In the fourth action, the heating medium heated by the low-temperature magnetic refrigerator (ML), the medium-temperature magnetic refrigerator (MM), and the high-temperature magnetic refrigerator (MH) in this order in the second channel (50) of the second unit (U2) is supplied to the indoor heat exchanger (33). The heating medium dissipates heat to the indoor air in the indoor heat exchanger (33). The heating medium cooled by the high-temperature magnetic refrigerator (MH), the medium-temperature magnetic refrigerator (MM), and the low-temperature magnetic refrigerator (ML) in this order in the first channel (40) of the first unit (U1) is supplied to the outdoor heat exchanger (34). The heating medium absorbs heat from the outdoor air in the outdoor heat exchanger (34).

<Bypass Action>

In the sixth embodiment, the bypass action is performed in the same manner as in the fifth embodiment. For example, when the temperature of the heating medium falls within the first temperature range and the low-temperature magnetic refrigerator (ML) does not operate, the controller (100) opens the control valve (90) of the bypass channel (60) corresponding to the low-temperature magnetic refrigerator (ML). When the temperature of the heating medium falls within the third temperature range and the high-temperature magnetic refrigerator (MH) does not operate, the controller (100) opens the control valve (90) of the bypass channel (60) corresponding to the high-temperature magnetic refrigerator (MH). Other advantages are the same as, or similar to, those of the fifth embodiment.

«Variations of Fifth and Sixth Embodiments»

Variations of the fifth and sixth embodiments will be described below.

<Variation G - Different Frequencies>

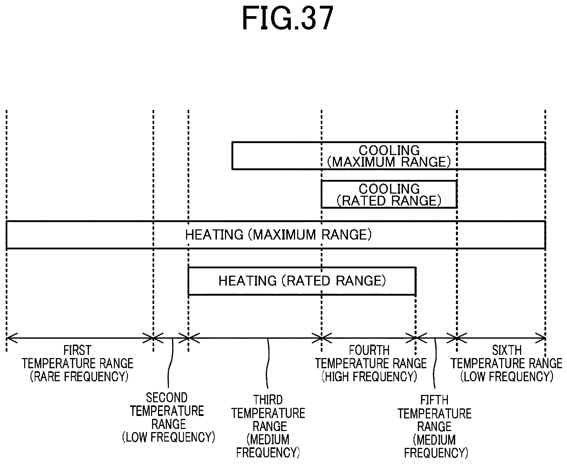

The magnetic refrigeration apparatus (1) of variation G differs from the magnetic refrigeration apparatuses of the fifth and sixth embodiments in the frequency that the heating medium falls within the temperature ranges. As illustrated in FIG. 37, the magnetic refrigeration apparatus (1) has four temperature ranges of "rare," "low-frequency," "medium-frequency," and "high-frequency" in an ascending order of the frequency. The first temperature range is a "rare" temperature range, the second and sixth temperature ranges are "low-frequency" temperature ranges, the third and fifth temperature ranges are "medium-frequency" temperature ranges, and the fourth temperature range is a "high-frequency" temperature range.

In this case, the magnetic refrigeration apparatus (1) preferably has six magnetic refrigerators (M) corresponding to these temperature ranges. The magnetic refrigerator (M) corresponding to the first temperature range is referred to as a magnetic refrigerator A1, the magnetic refrigerator (M) corresponding to the second temperature range as a magnetic refrigerator A2, the magnetic refrigerator (M) corresponding to the third temperature range as a magnetic refrigerator A3, the magnetic refrigerator (M) corresponding to the fourth temperature range as a magnetic refrigerator A4, the magnetic refrigerator (M) corresponding to the fifth temperature range as a magnetic refrigerator A5, and the magnetic refrigerator (M) corresponding to the sixth temperature range as a magnetic refrigerator A6.

In this example, preferably, the less frequently the temperature of the heating medium falls within the operating temperature range of the magnetic refrigerator (M), the wider the operating temperature range of the magnetic working substance (11) of the magnetic refrigerator (M) is. In this example, the magnetic working substance (11) of the magnetic refrigerator A1 has the widest operating temperature range, the magnetic working substances (11) of the magnetic refrigerators A2 and A6 have the second widest operating temperature ranges, the magnetic working substances (11) of the magnetic refrigerators A3 and A5 have the third widest operating temperature ranges, and the magnetic working substance (11) of the magnetic refrigerator A4 has the narrowest operating temperature range.

In this example, preferably, the less frequently the temperature of the heating medium falls within the operating temperature range of the magnetic refrigerator (M), the fewer layers of magnetic working substance (11) the magnetic refrigerator (M) has. In addition, preferably, the less frequently the temperature of the heating medium falls within the operating temperature range of the magnetic refrigerator (M), the larger the total amount of the magnetic working substance (11) the magnetic refrigerator (M) has. The reasons are as described above.

<Variation H - Example of Cooling-Only Apparatus>

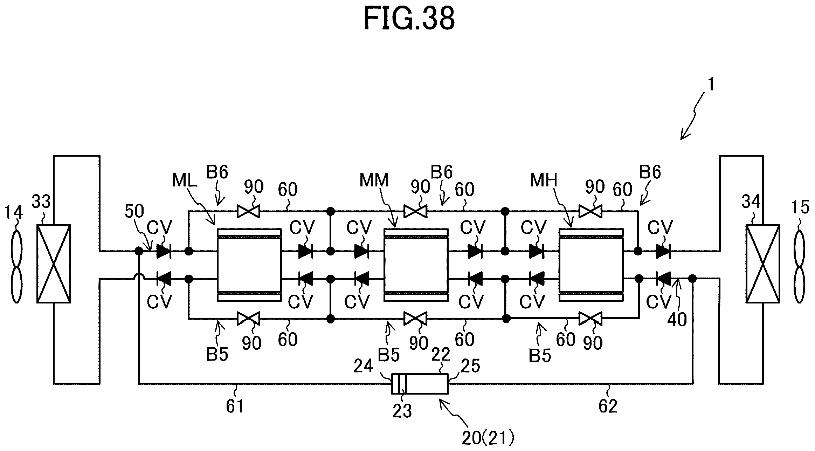

A magnetic refrigeration apparatus (1) of variation H is applied to a cooling-only air conditioner. As illustrated in FIG. 38, the magnetic refrigeration apparatus (1) is obtained by removing the third and fourth four-way switching valves (37) and (38) from the magnetic refrigeration apparatus of the fifth embodiment. In the variation H, the cooling operation is performed in the same manner as in the fifth embodiment.

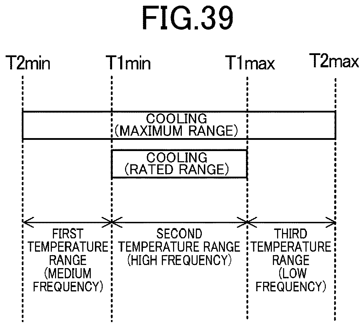

As illustrated in FIG. 39, the magnetic refrigeration apparatus (1) is operated in a first temperature range that the temperature of the heating medium falls within with "medium" frequency, a second temperature range that the temperature of the heating medium falls within with "high" frequency, and a third temperature range that the temperature of the heating medium falls within with "low" frequency. The low-temperature magnetic refrigerator (ML) corresponds to the first temperature range, the medium-temperature magnetic refrigerator (MM) corresponds to the second temperature range, and the high-temperature magnetic refrigerator (MH) corresponds to the third temperature range.

In this example, the high-temperature magnetic working substance (11H) has the widest operating temperature range, the low-temperature magnetic working substance (11L) has the second widest operating temperature range, and the medium-temperature magnetic working substance (11M) has the narrowest operating temperature range.

In this example, the high-temperature magnetic refrigerator (MH) has the fewest layers, the low-temperature magnetic refrigerator (ML) has the second fewest layers, and the medium-temperature magnetic refrigerator (MM) has the most layers.

In this example, the amount of the high-temperature magnetic working substance (11H) of the high-temperature magnetic refrigerator (MH) is the largest, the amount of the low-temperature magnetic working substance (11L) of the low-temperature magnetic refrigerator (ML) is the second largest, and the amount of the medium-temperature magnetic working substance (11M) of the medium-temperature magnetic refrigerator (MM) is the smallest. The reasons are as described above.

<Variation I - Example of Heating-Only Apparatus>

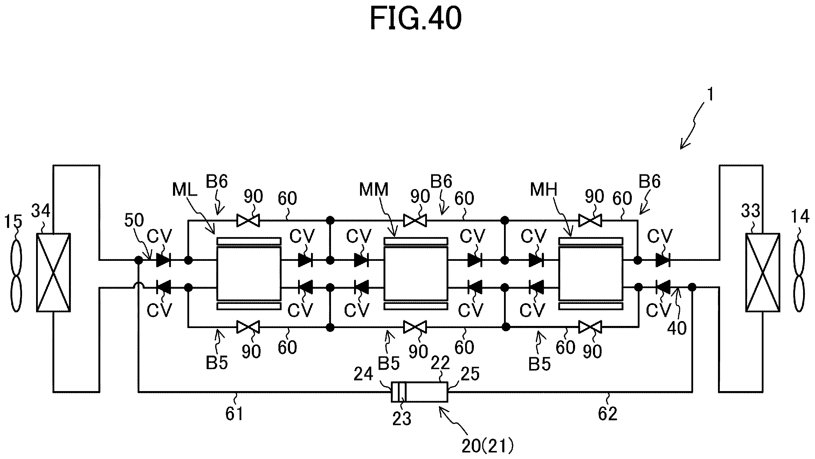

A magnetic refrigeration apparatus (1) of variation I is applied to a heating-only air conditioner. As illustrated in FIG. 40, the magnetic refrigeration apparatus (1) is obtained by removing the third and fourth four-way switching valves (37) and (38) from the magnetic refrigeration apparatus of the fifth embodiment. In the variation I, the heating operation is performed in the same manner as in the fifth embodiment.

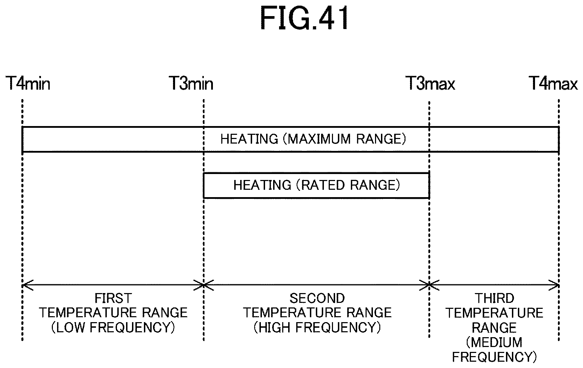

As illustrated in FIG. 41, the magnetic refrigeration apparatus (1) is operated in a first temperature range that the temperature of the heating medium falls within with "low" frequency, a second temperature range that the temperature of the heating medium falls within with "high" frequency, and a third temperature range that the temperature of the heating medium falls within with "medium" frequency. The low-temperature magnetic refrigerator (ML) corresponds to the first temperature range, the medium-temperature magnetic refrigerator (MM) corresponds to the second temperature range, and the high-temperature magnetic refrigerator (MH) corresponds to the third temperature range.

In this example, the low-temperature magnetic working substance (11L) has the widest operating temperature range, the high-temperature magnetic working substance (11H) has the second widest operating temperature range, and the medium-temperature magnetic working substance (11M) has the narrowest operating temperature range.

In this example, the low-temperature magnetic refrigerator (ML) has the fewest layers, the high-temperature magnetic refrigerator (MH) has the second fewest layers, and the medium-temperature magnetic working substance (MM) has the most layers.

In this example, the amount of the low-temperature magnetic working substance (11L) of the low-temperature magnetic refrigerator (ML) is the largest, the amount of the high-temperature magnetic working substance (11H) of the high-temperature magnetic refrigerator (MH) is the second largest, and the amount of the medium-temperature magnetic working substance (11M) of the medium-temperature magnetic refrigerator (MM) is the smallest. The reasons are as described above.

<Variation J - Another Arrangement of Third and Fourth Magnetic Refrigerators>

Each of the low-temperature magnetic refrigerator (ML) and the high-temperature magnetic refrigerator (MH), which are the third magnetic refrigerators, may not be disposed at the end of the plurality of magnetic refrigerators, and may be disposed near the end of the plurality of magnetic refrigerators (M).

It is not necessarily required that the low-temperature magnetic refrigerator (ML) and the high-temperature magnetic refrigerator (MH), which are the third magnetic refrigerators, are adjacent to the outdoor heat exchanger (34), and may be disposed closer to the outdoor heat exchanger (34).

Suppose the whole operating temperature range of the plurality of magnetic refrigerators (M) is divided into three ranges having the same temperature width, and the lowest temperature range is defined as a "low temperature range," the highest temperature range as a "high temperature range," and the range between the low and high temperature ranges as a "medium temperature range." In this case, the third magnetic refrigerator may be associated with any one of the low temperature range or the high temperature range, and the fourth magnetic refrigerator may be associated with the medium temperature range. In other words, the third magnetic refrigerator may be configured to exhibit the magnetocaloric effect in the low or high temperature range, and the fourth magnetic refrigerator may be configured to exhibit the magnetocaloric effect in the medium temperature range.

«Other Embodiments»

The embodiments and variations described above may be modified as follows.

The magnetic field modulator (12) may be any one of a linear drive magnetic field modulator using a permanent magnet, a rotary drive magnetic field modulator using a permanent magnet, a stationary magnetic field modulator using an electromagnet, or a stationary magnetic field modulator using an electromagnet and a permanent magnet.

The first and second heat exchange sections of the present disclosure may be comprised of other heat exchangers than the air heat exchangers. Specifically, the heat exchange sections may be heat exchangers that exchange heat between the heating medium in the heating medium circuit (C) and a different heating medium (e.g., water, brine, or a refrigerant) flowing through a secondary channel.

The solid-state refrigeration apparatus is applied to devices, such as a cooler for cooling the inside of a storage, an air conditioner, a heat pump chiller, and a hot water supply apparatus.

The solid-state refrigeration apparatus may be of any type other than a magnetic refrigeration apparatus that causes the magnetic working substance (11) to produce the magnetocaloric effect. The solid-state refrigeration apparatus includes a solid refrigerant substance configured to have a caloric effect on an external energy and an induction section configured to cause the solid refrigerant substance to produce the caloric effect. The solid refrigerant substance as used herein includes a substance with properties between liquid and solid, such as a plastic crystal.

Other types of the solid-state refrigeration apparatus include: (1) a type that causes the solid refrigerant substance to produce an electrocaloric effect; (2) a type that causes the solid refrigerant substance to produce a barocaloric effect; and (3) a type that causes the solid refrigerant substance to produce an elastocaloric effect.

An induction section of the solid-state refrigeration apparatus of the type (1) applies an electric field variation to the solid refrigerant substance. As a result, the solid refrigerant substance undergoes a phase transition from a ferroelectric substance to a paraelectric substance, for example, and thus generates or absorbs heat.

An induction section of the solid-state refrigeration apparatus of the type (2) applies a pressure variation to the solid refrigerant substance. As a result, the solid refrigerant substance undergoes a phase transition, and thus generates or absorbs heat.

An induction section of the solid-state refrigeration apparatus of the type (3) applies a stress variation to the solid refrigerant substance. As a result, the solid refrigerant substance undergoes a phase transition, and thus generates or absorbs heat.

While the embodiments and variations thereof have been described above, it will be understood that various changes in form and details may be made without departing from the spirit and scope of the claims. The embodiments and the variations thereof may be combined and replaced with each other without deteriorating intended functions of the present disclosure.

The ordinal numbers such as "first," "second," and "third" described above are used to distinguish the terms to which these expressions are given, and do not limit the number and order of the terms.

INDUSTRIAL APPLICABILITY

As can be seen from the foregoing description, the present disclosure is useful for a solid-state refrigeration apparatus, in particular, a magnetic refrigeration apparatus.

DESCRIPTION OF REFERENCE CHARACTERS

| | |
|---|---|
| 1 | Magnetic Refrigeration Apparatus (Solid-State Refrigeration Apparatus) |
| 11 | Magnetic Working Substance (Solid Refrigerant Substance) |
| 11b | Second Magnetic Working Substance (Intermediate Magnetic Working Substance) |
| 11c | Third Magnetic Working Substance (Endmost Magnetic Working Substance) |
| 11d | Fourth Magnetic Working Substance (Endmost Magnetic Working Substance) |
| 11e | Fifth Magnetic Working Substance (Intermediate Magnetic Working Substance) |
| 12 | Magnetic Field Modulator (Modulator) |
| 20 | Conveying Mechanism |
| 31 | First Heat Exchanger (First Heat Exchange Section) |
| 32 | Second Heat Exchanger (Second Heat Exchange Section) |
| 33 | Indoor Heat Exchanger (First Heat Exchange Section, Second Heat Exchange Section) |
| 34 | Outdoor Heat Exchanger (First Heat Exchange Section, Second Heat Exchange Section) |
| 40 | First Channel |
| 50 | Second Channel |
| 81 | First Thermal Storage Section (Thermal Storage Section) |
| 82 | Second Thermal Storage Section (Thermal Storage Section) |
| 84 | Second Thermal Storage Unit (Thermal Storage Section) |
| 85 | Fourth Thermal Storage Unit (Thermal Storage Section) |
| B | Bypass Mechanism |
| M | Magnetic Refrigerator (Solid Refrigerator) |
| ML | Low-Temperature Magnetic Refrigerator (Third Magnetic Refrigerator) |
| MM | Medium-Temperature Magnetic Refrigerator (Fourth Magnetic Refrigerator) |
| MH | High-Temperature Magnetic Refrigerator (Fifth Magnetic Refrigerator) |

**Claims**

1. A solid-state refrigeration apparatus, comprising:

   a plurality of solid refrigerators (M) each including a solid refrigerant substance (11) configured to have a caloric effect on an external energy and an induction section (12) configured to cause the solid refrigerant substance (11) to produce the caloric effect;
   a heating medium circuit (C) to which the plurality of solid refrigerators (M) are connected; and
   a conveying mechanism (20) configured to convey a heating medium in the heating medium circuit (C),
   the heating medium circuit (C) including:

   a first channel (40) in which the solid refrigerators (M) are connected in series and through which the heating medium conveyed by the conveying mechanism (20) is supplied to a first heat exchange section (31, 33, 34);
   a second channel (50) in which the solid refrigerators (M) are connected in series and through which the heating medium conveyed by the conveying mechanism (20) is supplied to a second heat exchange section (32, 33, 34); and
   at least one bypass mechanism (B) connected to at least one of the first channel (40) or the second channel (50) and configured to switch between an action of making the heating medium flow through the solid refrigerator (M) and an action of making the heating medium bypass the solid refrigerator (M).

2. The solid-state refrigeration apparatus of claim 1, wherein
   the bypass mechanism (B) is connected to both of the first channel (40) and the second channel (50) and corresponds to each of all the solid refrigerators (M).

3. The solid-state refrigeration apparatus of claim 1 or 2, wherein
   the plurality of solid refrigerators is a plurality of magnetic refrigerators (M) each including a magnetic working substance (11) as the solid refrigerant substance and a magnetic field modulator (12) as the induction section configured to apply a magnetic field variation to the magnetic working substance (11).

4. The solid-state refrigeration apparatus of claim 3, wherein
   each of the magnetic refrigerators (M) is a cascaded magnetic refrigerator including different types of magnetic working substances (11) arranged from a low-temperature end to a high-temperature end of the magnetic refrigerator (M) in an ascending order of Curie temperature.

5. The solid-state refrigeration apparatus of claim 4, wherein
the magnetic refrigerators (M) are connected in series in the first channel (40) and the second channel (50), the magnetic refrigerators (M) being arranged in an ascending order of average values of the Curie temperatures of the magnetic refrigerators (M).

6. The solid-state refrigeration apparatus of claim 3, wherein

   each of the magnetic refrigerators (M) is a single-layer magnetic refrigerator having a single magnetic working substance (11), and
   the magnetic refrigerators (M) are connected in series in the first channel (40) and the second channel (50), the magnetic refrigerators (M) being arranged in an ascending order of Curie temperatures of the magnetic working substances (11) of the magnetic refrigerators (M).

7. The solid-state refrigeration apparatus of claim 3, wherein
operating temperature ranges of an adjacent pair of the solid refrigerators (M) partially overlap each other.

8. The solid-state refrigeration apparatus of claim 7, wherein

   each of the magnetic refrigerators (M) is a cascaded magnetic refrigerator including different types of magnetic working substances (11) arranged from a low-temperature end to a high-temperature end of the magnetic refrigerator in an ascending order of Curie temperature,
   the magnetic working substances (11) at adjacent ends of an adjacent pair of the magnetic refrigerators (M) are configured to have operating temperature ranges having an overlapping area where the operating temperature ranges partially or completely overlap with each other, and
   a maximum value of a magnetocaloric effect in the overlapping area of the operating temperature ranges is equal to or more than 1/2 of an average value of maximum values of a magnetocaloric effect of the magnetic working substances (11) at the adjacent ends of the adjacent pair of the magnetic refrigerators (M).

9. The solid-state refrigeration apparatus of claim 7, wherein

   each of the magnetic refrigerators (M) is a single-layer magnetic refrigerator having a single-type magnetic working substance (11),
   the magnetic working substances (11) of an adjacent pair of the magnetic refrigerators (M) are configured to have operating temperature ranges having an overlapping area where the operating temperature ranges partially overlap with each other, and
a maximum value of an magnetocaloric effect in the overlapping area of the operating temperature ranges is equal to or more than 1/2 of an average value of maximum values of a magnetocaloric effect of the magnetic working substances (11) of the adjacent pair of the magnetic refrigerators (M).

10. The solid-state refrigeration apparatus of claim 4 or 5, wherein

    the different types of magnetic working substances (11) include an endmost magnetic working substance (11c, 11d) located at one of ends of the different types of magnetic working substances (11) and an intermediate magnetic working substance (11b, 11e) located between the ends, and
    the endmost magnetic working substance (11c, 11d) has a wider operation temperature range than the intermediate magnetic working substance (11b, 11e).

11. The solid-state refrigeration apparatus of claim 4 or 5, wherein

    the different types of magnetic working substances (11) include an endmost magnetic working substance (11c, 11d) located at one of ends of the different types of magnetic working substances (11) and an intermediate magnetic working substance (11b, 11e) located between the ends, and
    a maximum value of a magnetocaloric effect of the endmost magnetic working substance (11c, 11d) is greater than a maximum value of a magnetocaloric effect of the intermediate magnetic working substance (11b, 11e).

12. The solid-state refrigeration apparatus of claim 11, wherein
the magnetic field modulator (12) makes an amount of change in magnetic flux density of the endmost magnetic working substance (11c, 11d) larger than an amount of change in magnetic flux density of the intermediate magnetic working substance (11b, 11e).

13. The solid-state refrigeration apparatus of claim 11 or 12, wherein,
the endmost magnetic working substance (11c, 11d) causes a larger adiabatic temperature change or entropy change than the intermediate magnetic working substance (11b, 11e).

**14.** The solid-state refrigeration apparatus of any one of claims 11 to 13, wherein the endmost magnetic working substance (11c, 11d) has a higher weight than the intermediate magnetic working substance (11b, 11e).

**15.** The solid-state refrigeration apparatus of claim 14, wherein the endmost magnetic working substance (11c, 11d) has a higher filling factor or volume than the intermediate magnetic working substance (11b, 11e).

**16.** The solid-state refrigeration apparatus of any one of claims 1 to 15, wherein at least one of the first channel (40) or the second channel (50) has a thermal storage section (81, 82, 84, 85) through which the heating medium having bypassed the solid refrigerators (M) flows.

**17.** The solid-state refrigeration apparatus of to any one of claims 3 to 15, wherein

some of the magnetic refrigerators (M) are third magnetic refrigerators (ML, MH) and the other are fourth magnetic refrigerators (MM), and the magnetic working substances (11) of the third magnetic refrigerators (ML, MH) have wider operating temperature ranges than the magnetic working substances (11) of the fourth magnetic refrigerators (MM).

**18.** The solid-state refrigeration apparatus of claim 17, wherein the third magnetic refrigerators (ML, MH) have a larger amount of the magnetic working substances (11) than the fourth magnetic refrigerators (MM).

**19.** The solid-state refrigeration apparatus of claim 17 or 18, wherein the bypass mechanism (B) is provided to correspond to the third magnetic refrigerators (ML, MH).

**20.** The solid-state refrigeration apparatus of any one of claims 17 to 19, wherein when the solid-state refrigeration apparatus is in operation, a temperature of the heating medium falls within the whole operating temperature range of the third magnetic refrigerators (ML, MH) less frequently than within the whole operating temperature range of the fourth magnetic refrigerators (MM).

**21.** The solid-state refrigeration apparatus of any one of claims 17 to 20, wherein

the whole operating temperature range of the fourth magnetic refrigerators (MM) is an intermediate temperature range, and the whole operating temperature range of the third magnetic refrigerators (ML, MH) is one or both of a low temperature range and a high temperature range.

**22.** The solid-state refrigeration apparatus of any one of claims 17 to 21, wherein the third magnetic refrigerators (ML, MH) are provided near the ends of the plurality of magnetic refrigerators (M).

**23.** The solid-state refrigeration apparatus of claim 22, wherein the third magnetic refrigerators (ML, MH) are provided at the ends of the plurality of magnetic refrigerators (M).

**24.** The solid-state refrigeration apparatus of any one of claims 17 to 23, wherein the third magnetic refrigerators (ML, MH) are provided closer to an outdoor heat exchanger (34) constituting at least one of the first heat exchange section (31, 33, 34) or the second heat exchange section (32, 33, 34).

**25.** The solid-state refrigeration apparatus of claim 24, wherein the third magnetic refrigerators (ML, MH) are provided adjacent to the outdoor heat exchanger (34).

# FIG.1

# FIG.2

# FIG.3

# FIG.4

# FIG.5

# FIG.6

# FIG.7

# FIG.8

# FIG.9

# FIG.10

# FIG.11

# FIG.12

# FIG.13

# FIG.14

# FIG.15

# FIG.16

# FIG.17

# FIG.18

# FIG.19

# FIG.20

# FIG.21

# FIG.22

# FIG.23

EP 4 116 641 A1

# FIG.24

# FIG.25

FIG.26

# FIG.27

EP 4 116 641 A1

COOLING OPERATION (FIRST ACTION)

# FIG.28

COOLING OPERATION (SECOND ACTION)

EP 4 116 641 A1

# FIG.29

HEATING OPERATION (THIRD ACTION)

EP 4 116 641 A1

FIG.30

HEATING OPERATION (FOURTH ACTION)

# FIG.31

FIG.32

EP 4 116 641 A1

# FIG.33

COOLING OPERATION (FIRST ACTION)

EP 4 116 641 A1

FIG.34

COOLING OPERATION (SECOND ACTION)

# FIG.35

HEATING OPERATION (THIRD ACTION)

EP 4 116 641 A1

# FIG.36

EP 4 116 641 A1

# FIG.37

FIG.38

# FIG.39

## FIG.40

EP 4 116 641 A1

# FIG.41

| T4min | T3min | | T3max | T4max |
|---|---|---|---|---|

HEATING (MAXIMUM RANGE)

HEATING (RATED RANGE)

| FIRST TEMPERATURE RANGE (LOW FREQUENCY) | SECOND TEMPERATURE RANGE (HIGH FREQUENCY) | THIRD TEMPERATURE RANGE (MEDIUM FREQUENCY) |
|---|---|---|

## INTERNATIONAL SEARCH REPORT

| International application No. |
|---|
| PCT/JP2021/012885 |

**A. CLASSIFICATION OF SUBJECT MATTER**
Int.Cl. F25B21/00(2006.01)i
FI: F25B21/00A

According to International Patent Classification (IPC) or to both national classification and IPC

**B. FIELDS SEARCHED**

Minimum documentation searched (classification system followed by classification symbols)
Int.Cl. F25B21/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br><br>A | JP 2016-530479 A (ASTRONAUTICS CORPORATION OF AMERICA) 29 September 2016 (2016-09-29),<br>paragraphs [0004]-[0006], fig. 1, 2 | 1-15, 17-19, 21-25<br>16, 20 |
| Y | US 2008/0314048 A1 (GENERAL ELECTRIC COMPANY) 25 December 2008 (2008-12-25), paragraphs [0027], [0032]-[0034], fig. 4 | 1-15, 17-19, 21-25 |
| Y | JP 2014-214885 A (DENSO CORPORATION) 17 November 2014 (2014-11-17), paragraph [0101], fig. 17 | 1-15, 17-19, 21-25 |
| Y | JP 2016-109412 A (DENSO CORPORATION) 20 June 2016 (2016-06-20), paragraphs [0068], [0108]-[0114], fig. 3, 9, 10 | 1-15, 17-19, 21-25 |
| Y | JP 2019-143938 A (SANDEN HOLDINGS CORPORATION) 29 August 2019 (2019-08-29), paragraphs [0001], [0012], fig. 2, 3 | 4-5, 10-15 |

☒ Further documents are listed in the continuation of Box C.          ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 April 2021 | 18 May 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2021/012885 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2017-172820 A (DENSO CORPORATION) 28 September 2017 (2017-09-28), paragraphs [0047], [0048], fig. 3 | 5-6, 10-15 |
| Y | JP 2012-193927 A (NISSAN MOTOR CO., LTD.) 11 October 2012 (2012-10-11), paragraphs [0090]-[0092], fig. 18 | 5-15 |
| Y | JP 2016-080205 A (DENSO CORPORATION) 16 May 2016 (2016-05-16), paragraphs [0037], [0058]-[0077], fig. 10, 11 | 7-10, 17-19, 21-25 |
| Y | JP 2016-080206 A (DENSO CORPORATION) 16 May 2016 (2016-05-16), paragraphs [0056]-[0061], fig. 9 | 11-15 |
| Y | JP 2008-051412 A (CHUBU ELECTRIC POWER CO., INC.) 06 March 2008 (2008-03-06), paragraph [0029] | 12 |
| Y | JP 2013-189543 A (UNIVERSITY OF TOYAMA) 26 September 2013 (2013-09-26), paragraph [0020] | 13 |
| A | JP 2020-046079 A (DAIKIN INDUSTRIES, LTD.) 26 March 2020 (2020-03-26), entire text, all drawings | 1-25 |
| A | JP 2020-046085 A (DAIKIN INDUSTRIES, LTD.) 26 March 2020 (2020-03-26), entire text, all drawings | 1-25 |
| A | US 2018/0283740 A1 (HOLLADAY, J. D.) 04 October 2018 (2018-10-04), entire text, all drawings | 1-25 |

Form PCT/ISA/210 (second sheet) (January 2015)

INTERNATIONAL SEARCH REPORT
Information on patent family members

| | | | International application No. |
|---|---|---|---|
| | | | PCT/JP2021/012885 |

```
JP 2016-530479 A    29 September 2016    US 2015/0068219 A1
                                         paragraphs [0004]-[0006],
                                         fig. 1, 2
                                         WO 2015/038355 A1
                                         EP 3044520 A1
                                         CN 105593612 A
                                         KR 10-2016-0050075 A

US 2008/0314048 A1 25 December 2008      (Family: none)

JP 2014-214885 A    17 November 2014     US 2014/0311165 A1
                                         paragraph [0126], fig. 17

JP 2016-109412 A    20 June 2016         (Family: none)

JP 2019-143938 A    29 August 2019       WO 2019/163365 A1
                                         paragraphs [0001], [0012],
                                         fig. 2, 3

JP 2017-172820 A    28 September 2017    (Family: none)

JP 2012-193927 A    11 October 2012      (Family: none)

JP 2016-080205 A    16 May 2016          (Family: none)

JP 2016-080206 A    16 May 2016          (Family: none)

JP 2008-081412 A    06 March 2008        (Family: none)

JP 2013-189543 A    26 September 2013    (Family: none)

JP 2020-046079 A    26 March 2020        WO 2020/054656 A1
                                         entire text, all drawings

JP 2020-046085 A    26 March 2020        (Family: none)

US 2018/0283740 A1 04 October 2018       WO 2018/183398 A1
                                         EP 3601914 A1
                                         CN 110431369 A
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012255642 A